(19) Europäisches Patentamt
European Patent Office
Office européen des brevets

(11) EP 4 794 329 A1

(12) **EUROPEAN PATENT APPLICATION**
published in accordance with Art. 153(4) EPC

(43) Date of publication:
**19.08.2026 Bulletin 2026/34**

(21) Application number: **25772902.0**

(22) Date of filing: **06.03.2025**

(51) International Patent Classification (IPC):
***H04N 19/11*** *(2014.01)* ***H04N 19/176*** *(2014.01)*

(52) Cooperative Patent Classification (CPC):
**H04N 19/11; H04N 19/159; H04N 19/176**

(86) International application number:
**PCT/CN2025/081124**

(87) International publication number:
**WO 2025/195194 (25.09.2025 Gazette 2025/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.03.2024 CN 202410320693**

(71) Applicant: **Tencent Technology (Shenzhen) Company Limited**
**Shenzhen, Guangdong 518057 (CN)**

(72) Inventors:
- **WANG, Yingbin**
  **Shenzhen, Guangdong 518057 (CN)**
- **XU, Xiaozhong**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

# (54) VIDEO PROCESSING METHOD AND APPARATUS, COMPUTER DEVICE, STORAGE MEDIUM, AND PROGRAM PRODUCT

(57) Embodiments of this application provide a video processing method and apparatus, a computer device, a storage medium, and a program product. The video processing method includes: parsing coding scheme indication information of a current block in a video stream; parsing prediction mode indication information of the current block in the video stream, the prediction mode indication information including a prediction mode index of the current block; sorting a prediction mode list to obtain a sorted prediction mode list if the coding scheme indication information indicates that a coding scheme of the current block is a sorted coding scheme; determining a prediction mode of the current block in the sorted prediction mode list according to the prediction mode index of the current block; and predicting the current block according to the prediction mode of the current block, to obtain a predicted value of the current block. According to the embodiments of this application, video coding and decoding efficiency can be improved.

Parse coding scheme indication information of a current block in a video stream
S1201
Parse prediction mode indication information of the current block in the video stream, the prediction mode indication information including a prediction mode index of the current block
S1202
Sort a prediction mode list to obtain a sorted prediction mode list if the coding scheme indication information indicates that a coding scheme of the current block is a sorted coding scheme
S1203
Determine a prediction mode of the current block in the sorted prediction mode list according to the prediction mode index of the current block
S1204
Predict the current block according to the prediction mode of the current block, to obtain a predicted value of the current block; the predicted value of the current block being used to reconstruct a decoded image block of the current block
S1205

FIG. 12

EP 4 794 329 A1

## Description

RELATED APPLICATION

This application claims priority to Chinese Patent Application No. 202410320693.6, filed with the China National Intellectual Property Administration on March 19, 2024 and entitled "VIDEO PROCESSING METHOD AND APPARATUS, COMPUTER DEVICE, STORAGE MEDIUM, AND PROGRAM PRODUCT", which is incorporated herein by reference in its entirety.

FIELD OF THE TECHNOLOGY

This application relates to the field of computer technologies, and in particular, to the field of video coding and decoding technologies, and specifically, to a video processing method, a video processing apparatus, a computer device, a computer-readable storage medium, and a computer program product.

BACKGROUND OF THE DISCLOSURE

In the field of existing video coding and decoding technologies, a current block (the current block may be understood as a unit that is being coded or decoded) in a video can be predicted in different prediction modes, to obtain a predicted value of the current block. An index of a prediction mode needs to be coded and decoded in a video coding and decoding process, and existing video coding and decoding technologies support a huge quantity of prediction modes. Due to the huge quantity of prediction modes, bit overheads are high when indexes of these prediction modes are coded in a coding stage, resulting in low video coding efficiency. Due to the huge quantity of prediction modes, a large quantity of bits need to be decoded when the indexes of these prediction modes are decoded in a decoding stage, resulting in low video decoding efficiency.

SUMMARY

Embodiments of this application provide a video processing method and apparatus, a computer device, a storage medium, and a program product, to improve video coding and decoding efficiency.

According to one aspect, an embodiment of this application provides a video processing method, including:

parsing coding scheme indication information of a current block in a video stream;

parsing prediction mode indication information of the current block in the video stream, the prediction mode indication information including a prediction mode index of the current block;

sorting a prediction mode list to obtain a sorted prediction mode list if the coding scheme indication information indicates that a coding scheme of the current block is a sorted coding scheme;

determining a prediction mode of the current block in the sorted prediction mode list according to the prediction mode index of the current block; and

predicting the current block according to the prediction mode of the current block, to obtain a predicted value of the current block; the predicted value of the current block being used to reconstruct a decoded picture block of the current block.

In the embodiments of this application, the prediction mode list is sorted when the coding scheme of the current block is the sorted coding scheme, so that less information can be parsed when the prediction mode index of the current block is parsed in the video stream. This improves decoding efficiency of the prediction mode index of the current block, and improves video decoding efficiency.

Correspondingly, an embodiment of this application provides a video processing apparatus, including:

a parsing unit, configured to parse coding scheme indication information of a current block in a video stream;

the parsing unit being further configured to parse prediction mode indication information of the current block in the video stream, the prediction mode indication information including a prediction mode index of the current block; and

a processing unit, configured to sort a prediction mode list to obtain a sorted prediction mode list if the coding scheme indication information indicates that a coding scheme of the current block is a sorted coding scheme;

the processing unit being further configured to determine a prediction mode of the current block in the sorted prediction mode list according to the prediction mode index of the current block; and

the processing unit being further configured to predict the current block according to the prediction mode of the current block, to obtain a predicted value of the current block; the predicted value of the current block being used to reconstruct a decoded picture block of the current block.

According to another aspect, an embodiment of this application provides a video processing method, including:

obtaining coding scheme indication information of a current block;

sorting a prediction mode list to obtain a sorted prediction mode list if the coding scheme indication information indicates that a coding scheme of the current block is a sorted coding scheme;

determining prediction mode indication information of the current block according to a prediction mode index corresponding to a prediction mode of the current block in the sorted prediction mode list; the prediction mode of the current block being used to predict the current block; and

coding the coding scheme indication information and the prediction mode indication information into the video stream.

In the embodiments of this application, the prediction mode list is sorted when the coding scheme of the current block is the sorted coding scheme, so that less information can be coded when the prediction mode index of the current block is coded into the video stream. This improves coding efficiency of the prediction mode index of the current block, and improves video coding efficiency.

Correspondingly, an embodiment of this application provides a video processing apparatus, including:

an obtaining unit, configured to obtain coding scheme indication information of a current block; and

a processing unit, configured to sort a prediction mode list to obtain a sorted prediction mode list if the coding scheme indication information indicates that a coding scheme of the current block is a sorted coding scheme;

the processing unit being further configured to determine prediction mode indication information of the current block according to a prediction mode index corresponding to a prediction mode of the current block in the sorted prediction mode list; the prediction mode of the current block being used to predict the current block; and

the processing unit being further configured to code the coding scheme indication information and the prediction mode indication information into the video stream.

Correspondingly, an embodiment of this application provides a computer device, including:

a processor, configured to implement a computer program; and

a computer-readable storage medium, having a computer program stored therein and further having a video stream formed by a computer program stored therein, and the computer program being configured to be loaded by the processor to perform the foregoing video processing method, so as to decode the video stream, or the computer program being configured to be loaded by the processor to perform the foregoing video processing method, so as to generate the video stream and store the video stream in the computer-readable storage medium.

Correspondingly, an embodiment of this application provides a computer-readable storage medium, having a computer program stored therein and further having a video stream formed by a computer program stored therein, and the computer program being read and executed by a processor of a computer device to cause the computer device to perform the foregoing video processing method, so as to decode the video stream, or the computer program being read and executed by the processor of the computer device to cause the computer device to perform the foregoing video processing method, so as to generate the video stream and store the video stream in the computer-readable storage medium.

Correspondingly, an embodiment of this application provides a computer program product, including a computer

program, the computer program being stored in a computer-readable storage medium. A processor of a computer device reads the computer program from the computer-readable storage medium. The processor executes the computer program, to cause the computer device to perform the foregoing video processing method.

Correspondingly, an embodiment of this application provides a video stream processing method, a video stream being decoded according to the foregoing video processing method, or the video stream being generated according to the foregoing video processing method.

In the embodiments of this application, the prediction mode list is sorted, so that less information can be coded and decoded when the prediction mode index of the current block is coded and decoded. This improves coding and decoding efficiency of the prediction mode index of the current block, and improves video coding and decoding efficiency.

BRIEF DESCRIPTION OF THE DRAWINGS

FIG. 1 is a flowchart of operation of a video coder according to an embodiment of this application;

FIG. 2 is a schematic structural diagram of block partition according to an embodiment of this application;

FIG. 3 is a schematic flowchart of block partition according to an embodiment of this application;

FIG. 4 is a schematic diagram of an intra-frame angle prediction mode according to an embodiment of this application;

FIG. 5 is a schematic diagram of an intra-frame angle prediction mode according to an embodiment of this application;

FIG. 6 is a schematic diagram of inter prediction according to an embodiment of this application;

FIG. 7 is a schematic diagram of angular weighted prediction according to an embodiment of this application;

FIG. 8 is a schematic diagram of angles supported in an angular weighted mode according to an embodiment of this application;

FIG. 9 is a schematic diagram of a reference weight configuration according to an embodiment of this application;

FIG. 10 is a schematic diagram of angle partitions in an angular weighted mode according to an embodiment of this application;

FIG. 11 is a schematic architectural diagram of a video processing system according to an embodiment of this application;

FIG. 12 is a schematic flowchart of a video processing method according to an embodiment of this application;

FIG. 13a is a schematic diagram of a current block template according to an embodiment of this application;

FIG. 13b is a schematic flowchart of another video processing method according to an embodiment of this application;

FIG. 14 is a schematic structural diagram of a video processing apparatus according to an embodiment of this application;

FIG. 15 is a schematic structural diagram of another video processing apparatus according to an embodiment of this application; and

FIG. 16 is a schematic structural diagram of a computer device according to an embodiment of this application.

DESCRIPTION OF EMBODIMENTS

Related technical terminologies in this application are described below.

First. Video coding:

A video may include one or more video frames, a video frame is a picture, and each video frame includes some video signals of the video. A video is a type of signal, and signal obtaining manners may be divided into two manners: photographing by a camera or generating by a computer. Because statistical properties corresponding to different obtaining manners are different, video compression and coding schemes may also be different.

According to mainstream video coding technologies, for example, high efficiency video coding (HEVC/H.265), versatile video coding (VVC/H.266), and audio video coding standard 3 (AVS3), a hybrid coding framework is used. In the hybrid coding framework, a series of operations and processing are performed on a video as follows:

1. Block partition structure: According to a size of an inputted current frame (that is, a video frame that is being coded or decoded), the current frame may be divided into several non-overlapping processing units, and each processing unit is subject to a similar compression operation. The processing unit may be referred to as a coding tree unit (CTU) or a largest coding unit (LCU). The CTU may be further divided in a more fine-grained manner to obtain one or more basic coding units that are referred to as coding units (CU). Each CU is a most basic element in a coding and decoding section. Subsequent embodiments of this application describe various coding and decoding processing processes that may be used for each CU.

2. Predictive coding: including modes such as intra prediction and inter prediction. An original video signal included in a current CU (that is, a CU that is being coded or decoded in the current frame, and the current CU may also be referred to as a current block) in a current frame is predicted based on a constructed video signal in a selected reference CU, to obtain a residual video signal. A coding end needs to select a most appropriate predictive coding scheme from multiple possible predictive coding schemes for the current CU, and inform a decoding end. The predictive coding scheme may include intra prediction or inter prediction.

   (1) Intra prediction: a constructed video signal used for prediction is from an area that has been coded and constructed in the same video frame.

   (2) Inter prediction: a constructed video signal used for prediction is from another coded video frame (referred to as a reference video frame) different from a current frame.

3. Transform & quantization: a transform operation, such as discrete Fourier transform (DFT) or discrete cosine transform (DCT), is performed on a residual video signal to convert the residual video signal into a transform domain, which is referred to as a transform coefficient. A lossy quantization operation is further performed on the residual video signal in the transform domain, and some information is discarded, so that a quantized signal facilitates compression and expression.
In some video coding standards, more than one transform mode may be selected. Therefore, a coding end needs to select one of the transform modes for a current CU, and inform a decoding end. The level of granularity in quantization typically depends on a quantization parameter (QP). A larger QP indicates that transform coefficients within a larger value range are to be quantized to the same output, which usually brings greater distortion and a lower bit rate. On the contrary, a smaller QP indicates that transform coefficients within a smaller value range are to be quantized to the same output, which usually brings less distortion and a higher bit rate.

4. Entropy coding or statistical coding: Statistical compression coding is performed on the quantized transform domain signal according to a frequency of occurrence of each value, and a binarized (0 or 1) video stream is outputted. In addition, other information generated through coding, such as a selected predictive coding scheme and a motion vector, and entropy coding also needs to be performed on the other information, to reduce the bit rate. Statistical coding is a lossless coding method that can effectively reduce the bit rate required to express the same signal. Common statistical coding schemes include variable length coding (VLC) or content adaptive binary arithmetic coding (CABAC).

5. Loop filtering: A coded CU may be subject to operations of inverse quantization, inverse transform, and prediction compensation (inverse operations of operations 2 to 4 in the foregoing video coding), to reconstruct a decoded picture corresponding to the CU. Compared with an original picture, a reconstructed decoded picture is subject to impact of quantization, and some information is different from the original picture and distortion is generated. Therefore, a filtering operation may be performed on the reconstructed decoded picture by using a filter, thereby effectively reducing a distortion degree generated by quantization. The filter may perform, for example, deblocking filtering, sample adaptive offset (SAO), adaptive loop filter (ALF), or the like. These filtered reconstructed decoded pictures are

used as reference CUs of other CUs that need to be coded subsequently, and are applied to a prediction process of the other CUs. Therefore, the foregoing filtering operation is also referred to as loop filtering, that is, a filtering operation within a coding loop.

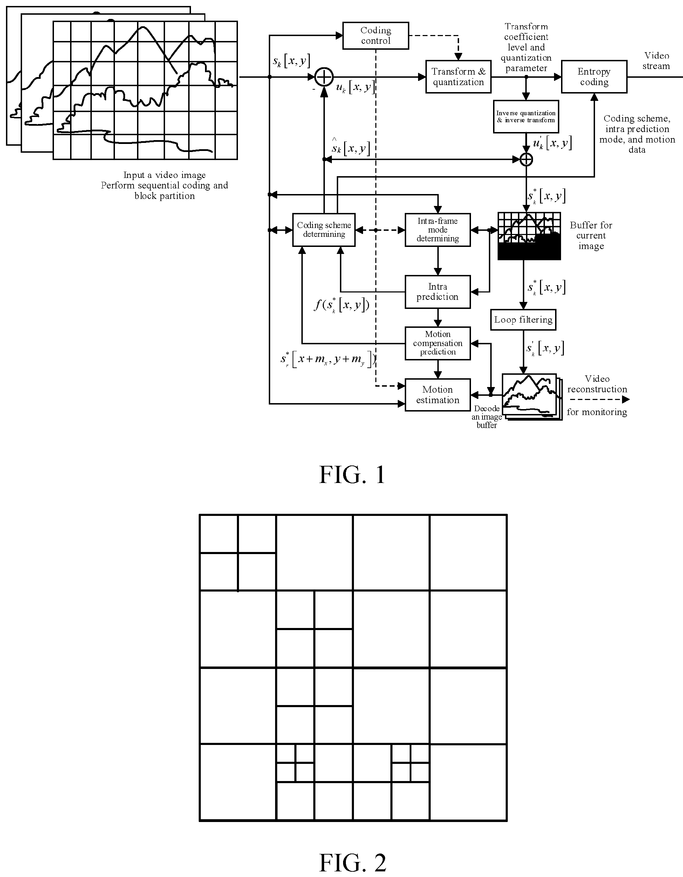

Based on related descriptions of operations 1 to 5 in the foregoing video coding, an embodiment of this application provides a flowchart of basic operation of a video coder. As shown in FIG. 1, for example, a current block is used as a k^th CU ($s_k[x, y]$ as shown in FIG. 1) in a current frame (a current picture). k is a positive integer, and k is less than or equal to a total quantity of CUs included in the current frame. $s_k[x, y]$ indicates a pixel whose coordinates are [x, y] in the k^th CU, x indicates a horizontal coordinate of the pixel, and y indicates a vertical coordinate of the pixel. After performing processing such as motion compensation or intra prediction on $s_k[x, y]$, a predicted signal may be obtained, and a subtraction operation is performed on the predicted signal $\hat{s}_k[x, y]$ and an original signal $s_k[x, y]$ to obtain a residual video signal $u_k[x, y]$. Transform and quantization are performed on the residual video signal $u_k[x, y]$. Data outputted by quantization processing has two different destinations of A and B:

A: Data outputted through quantization processing may be sent to an entropy coder for entropy coding, to obtain a coded stream (that is, a video stream), and the stream is outputted to a buffer for storage and is to be transmitted.

B: Inverse quantization and inverse transform processing may be performed on data outputted through quantization processing, to obtain a residual video signal $u'_k[x,y]$ after the inverse transform. The residual video signal $u'_k[x,y]$ after the inverse transform and the predicted signal $\hat{s}_k[x, y]$ are added to obtain a new predicted signal $s^*_k[x,y]$, and the new predicted signal $s^*_k[x,y]$ is sent to a buffer of a current picture for storage. Intra prediction processing may be performed on the new predicted signal $s^*_k[x,y]$ to obtain $f(s^*_k[x,y])$, then loop filtering processing may be performed on the new predicted signal $s^*_k[x,y]$ to obtain a reconstructed signal $s'_k[x,y]$, and the reconstructed signal $s'_k[x,y]$ is sent to a buffer of a decoded picture for storage to generate a reconstructed video. Motion compensation prediction processing is performed on the reconstructed signal $s'_k[x,y]$ to obtain $s^*_r[x+m_x, y+m_y]$, where $s^*_r[x+m_x, y+m_y]$ may indicate a reference block, and $m_x$ and $m_y$ respectively represent a horizontal component and a vertical component of a motion vector of the reference block.

Second. Video decoding:

For each CU, on one hand, a decoding end first performs entropy decoding on the video stream after the video stream is obtained, to obtain information about various prediction coding schemes and quantized transform coefficients, and performs inverse quantization and inverse transform on each transform coefficient, to obtain a residual video signal (or referred to as a residual value). On the other hand, a predicted signal (or referred to as a predicted value) corresponding to the CU may be obtained according to known information about a predictive coding scheme, and the residual video signal and the predicted signal are added to obtain a reconstructed video signal. The reconstructed video signal may be used to reconstruct a decoded picture block corresponding to the CU. A loop filtering operation needs to be performed on the constructed video signal, to generate a final output signal.

Related background technologies in this application are described below.

Currently, mainstream video coding standards such as HEVC, VVC, and AVS3 all use a block-based hybrid coding framework. Original video data is partitioned into a series of coding blocks, and video data compression may be implemented by using a video coding method such as prediction, transform, and entropy coding.

First. Block partition structure:

In a hybrid coding framework based on block partition, a video picture is divided into several non-overlapping processing units for video compression processing, and the processing unit is referred to as a CTU. The CTU may be further divided in a more fine-grained manner to obtain one or more basic coding units that are referred to as CUs. Each CU is a most basic element in a coding section, and different coding schemes may be selected for each CU.

A block partition structure of the video coding standard HEVC is shown in FIG. 2. A CTU may be divided downward in a quad-tree manner.

The video coding standard AVS3 uses a basic block partition structure of quad-tree partition (QT) + binary-tree

partition (BT) + extended quad-tree partition (EQT). That is, in addition to supporting quad-tree partition (QT), the video coding standard AVS3 further supports binary-tree partition (BT) and extended quad-tree partition (EQT). Binary-tree partition (BT) may divide one CU into two sub-CUs: left and right sub-CUs or upper and lower sub-CUs. Extended quad-tree partition (EQT) includes two H-type partition manners: horizontal and vertical, and divides one CU into 4 sub-CUs.

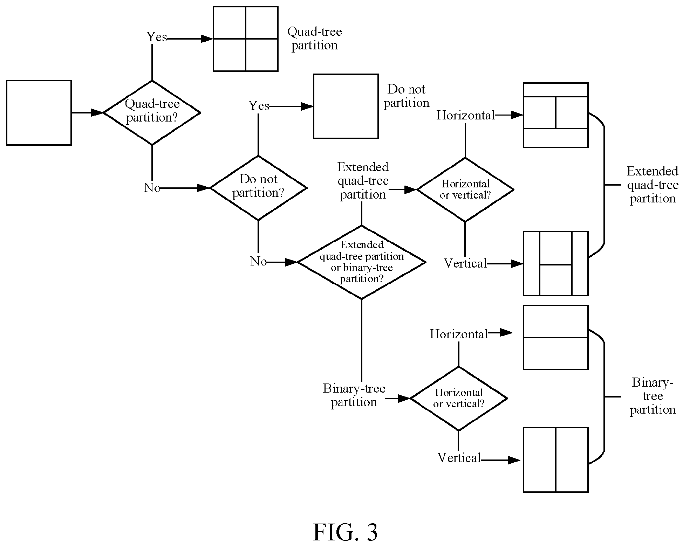

A representation manner of the basic block partition structure of QT + BT + EQT in a stream in the video coding standard AVS3 is shown in FIG. 3. It is determined whether quad-tree partition (QT) is performed, and if quad-tree partition (QT) is performed, quad-tree partition is directly performed, or if quad-tree partition (QT) is not performed, it is further determined whether partition is not performed. If partition is not performed, the determining ends. If partition needs to be performed, it further needs to be determined whether to perform extended quad-tree partition (EQT) or binary-tree partition (BT), and for both extended quad-tree partition (EQT) and binary-tree partition (BT), it further needs to be determined whether to perform horizontal or vertical partition.

Decision-making of block partition uses a recursive top-down approach starting from an LCU. In a recursion process, an optimal division manner and an optimal coding scheme are determined through optimization of a coding end.

Second. Intra prediction:

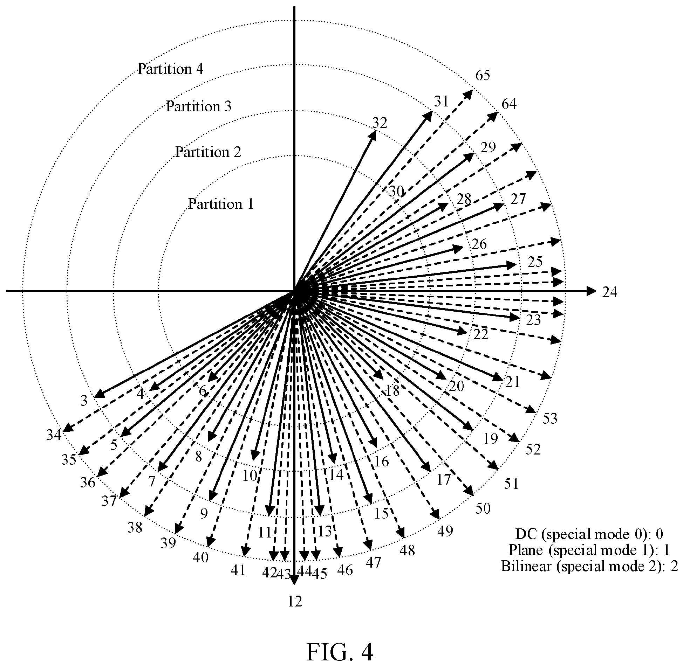

Intra prediction is a common predictive coding technology. The intra prediction derives a predicted value of a current code block from an adjacent coded area based on correlation between pixels of a video picture in a space domain. The second stage of the video coding standard AVS3 uses an extended intra prediction mode (EIPM). There are 33 intra prediction modes in total in a previous-generation AVS2, including 30 angle modes and 3 special modes (plane, DC, and bilinear). MPM (Most Probable Mode) coding is used, and 5-bit fixed-length coding is used for the remaining modes. To support finer angle prediction, AVS3 extends angle prediction modes to 62. As shown in FIG. 4, an arrow direction is that a reference pixel points to a to-be-predicted pixel, and in the figure, a black solid-line arrow indicates an original angle prediction mode, and a black dashed-line arrow indicates a new angle mode. Sequence numbers of original angle modes remain unchanged, and sequence numbers of new angle modes are from 34 to 65.

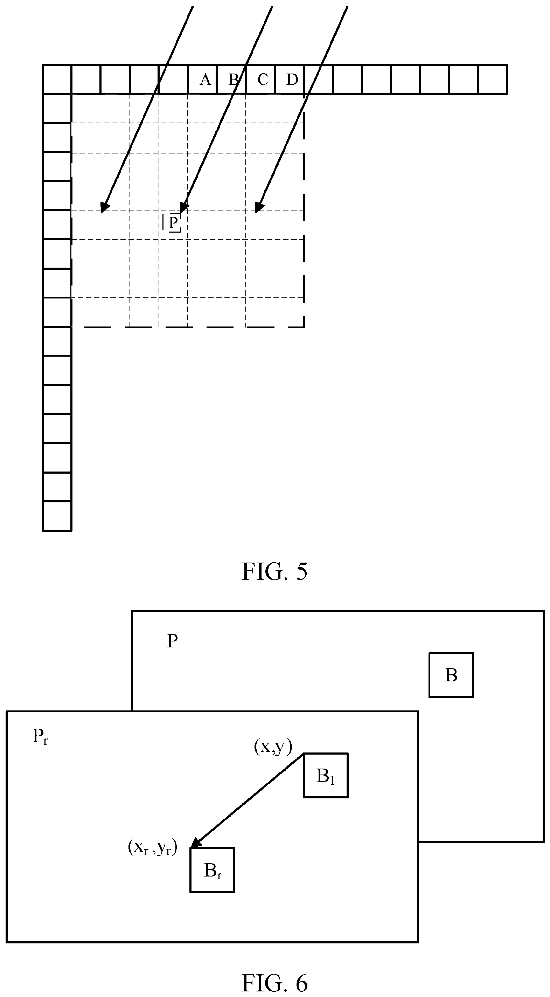

When an angle prediction mode is used, for a pixel in a current prediction block, a reference pixel value in a corresponding location in a reference pixel row or column is used as a predicted value according to a direction corresponding to an angle of the prediction mode. As shown in FIG. 5, for a pixel P in a prediction block, a position of a reference pixel is determined in an upper coded pixel row according to a prediction angle in the figure, and a value of the reference pixel is used as a predicted value of the pixel P. Not all reference pixel positions to which pixel positions point are positions with full-pixel precision (for example, a reference pixel position of the point P is a sub-pixel position between a pixel B and a pixel C in the figure). Therefore, a predicted pixel value of this position needs to be obtained through interpolation based on surrounding pixels. To improve intra prediction efficiency, an on-chip memory is usually used to store a reference pixel for intra prediction.

Third. Inter prediction:

As shown in FIG. 6, in the inter prediction, according to correlation of a video in time domain, a pixel of a current picture is predicted based on a pixel of an adjacent coded picture, so that time domain redundancy of the video can be effectively reduced and coding bits of residual data can be effectively reduced. P is a current frame, Pr is a reference frame, B is a current block, and Br is a reference block of B. Coordinate positions of $B_1$ and B in the picture are the same, coordinates of Br are (xr, yr), and coordinates of $B_1$ are (x, y). A displacement between a current block and a reference block of the current block is referred to as a motion vector (MV), and the motion vector is calculated according to the following formula 1:

$$MV = (x_r - x, y_r - y) \qquad \text{formula 1}$$

Fourth. Angular weighted prediction (AWP) and spatial angular weighted prediction (SAWP) modes:

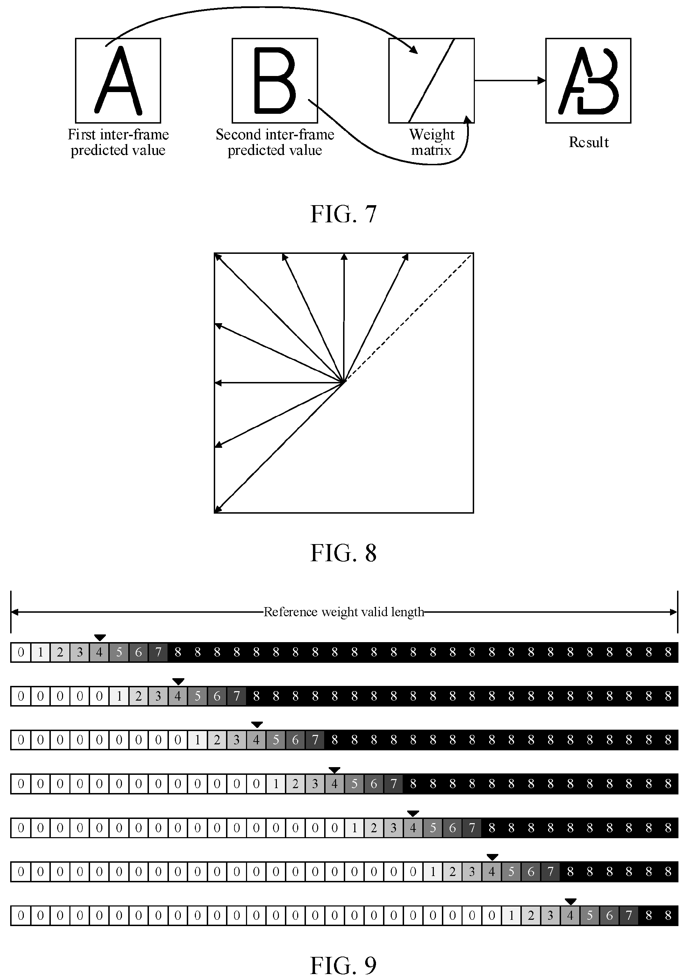

The second stage of the video coding standard AVS3 uses the AWP mode used for inter prediction and the SAWP mode used for intra prediction. Inter prediction based on the AWP mode is shown in FIG. 7. A weight value of each pixel position may be derived based on an intra-frame angle prediction idea (a reference weight value of an adjacent position (including a full-pixel position and a sub-pixel position) of a current block may be set first, and then a weight value corresponding to each pixel position is obtained by using an angle prediction method), and then weighted prediction is performed on two different inter-frame predicted values based on obtained weights. SAWP uses a similar method to derive weights to implement weighted prediction of two intra-frame predicted values.

In the video coding standard AVS3, in some conditions (for example, when PictureAwpRefineIndex (a picture header index used for controlling whether to adjust a reference weight) is 0), the SAWP mode and the AWP mode may use

the same weight deriving method. For a current block using the SAWP mode, sawp_index (a weight prediction mode index), sawp_pred_mode0_index (a first intra prediction mode index), and sawp_pred_mode1_index (a second intra prediction mode index) may be decoded from a stream. A weight matrix of the SAWP mode and intra prediction modes of various parts of the SAWP mode may be derived based on sawp_index, sawp_pred_mode0_index, and sawp_pred_mode1_index according to the following method, to perform weighted prediction and intra-frame information storage.

1. A method for deriving the weight matrix of the SAWP mode:

A minimum block size supported by the angular weighted mode is 8, a maximum block size is 64, and a total of 8 angles are supported. As shown in FIG. 8, absolute values of slopes of the 8 angles are five in total, which are respectively {horizontal, vertical, 1, 2, 1/2}. Each angle supports 7 reference weight configurations. Therefore, for each block, the angular weighted mode includes 56 modes in total.

As shown in FIG. 9, each of the 7 reference weight configurations is value assignment of a non-strictly monotonically increasing function according to a distribution function of a reference weight value obtained based on a reference weight index value and by using eight equal point locations of a reference weight valid length as base points. The reference weight valid length is obtained through calculation according to a prediction angle and a current block size.

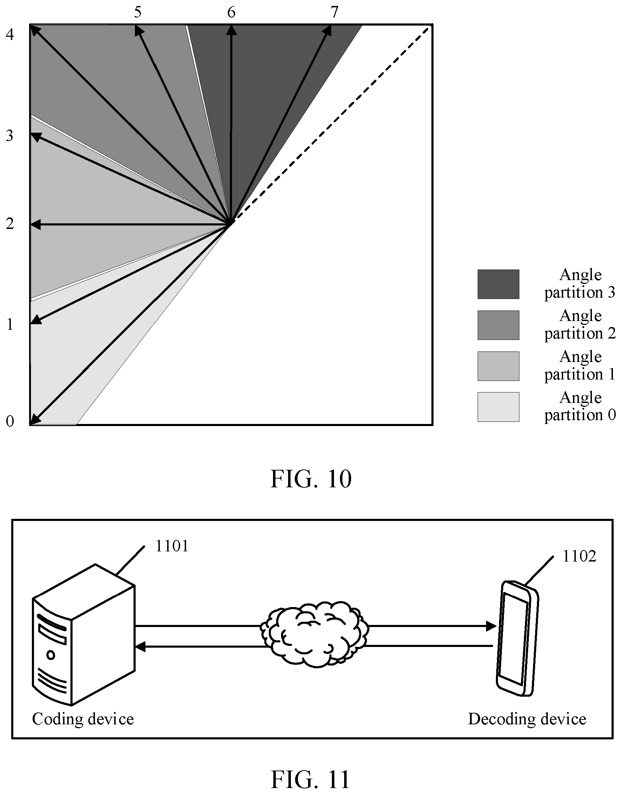

As shown in FIG. 10, 8 angles of the angular weighted mode are divided into four areas. According to different areas in which angles are located, there is a slight difference between formulas for pixel-by-pixel weight deriving.

As described above, for each block, there are 56 angular weighted modes (weight matrices) in total, and the stream includes AwpIndex that indicates a mode used for the current block. A parameter of the angular weighted mode can be determined according to AwpIndex based on the following formula 2 to formula 5:

$$\text{stepIndex} = (\text{AwpIndex} \gg 3) - 3 \qquad \text{formula 2}$$

$$\text{modAngNum} = \text{AwpIndex}\%8 \qquad \text{formula 3}$$

$$\text{angleAreaIndex} = \text{modAngNum} \gg 1 \qquad \text{formula 4}$$

$$\text{angleIndex} = \begin{cases} 7, if\ \text{modAngNum} == 2 \\ 8, if\ \text{modAngNum} == 6 \\ \quad \text{modAngNum}\%2 \end{cases} \qquad \text{formula 5}$$

A weight of the angular weighted mode may be derived according to these parameters by using the following method:

(1) Calculate a valid length vL of a reference weight. A length of the reference weight is indicated based on 1/2 pixel precision. For the first 4 angles (angleAreaIndex is equal to 0), the reference weight is in 1 column on the left of the current block. For the last 4 angles (angleAreaIndex is equal to 1), the reference weight is in 1 row above the current block. The valid length vL is calculated as shown in the following Table 1:

Table 1

| angleAreaIndex | vL |
|---|---|
| 0 | (H + (W >> angleIndex)) « 1 |
| 1 | |
| 2 | (W + (H >> angleIndex)) << 1 |
| 3 | |

(2) A reference weight Lw is filled according to each location x (x < = vL), as shown in the following formula 6 to formula 8 and Table 2:

$$\text{Lw}[\text{x}] = \text{clip3}(0{,}8, (\text{x} - \text{fp}) \ll \text{shift}) \qquad \text{formula 6}$$

$$\text{shift} = \text{PictureAwpRefineIndex}\,?\,2:0 \qquad \text{formula 7}$$

$$\text{o} = \text{PictureAwpRefineIndex}\,?\,3:1 \qquad \text{formula 8}$$

Table 2

| angleAreaIndex | fp |
|---|---|
| 0 | (vL >> 1) - 3 - o + stepIndex * ((vL >> 3 - 1)) |
| 1 | (vL >> 1) - 1 - o + stepIndex * ((vL >> 3 - 1)) - ((W << 1) >> angleIndex) |
| 2 | (vL >> 1) - 1 - o + stepIndex * ((vL >> 3 - 1)) - ((H << 1) >> angleIndex) |
| 3 | (vL >> 1) - 3 - o + stepIndex * ((vL >> 3 - 1)) |

imageAwpRefineIndex is a picture header index used for controlling whether to adjust the reference weight.
(3) A luminance weight matrix is filled according to the reference weight, and the luminance weight matrix is set to BwLuma (x, y), as shown in the following formula 9:

$$BwLuma_{x,y} = Lw[tP] \qquad \text{formula 9}$$

For an SAWP mode or an AWP mode in the B frame, a value of tP is determined according to the following Table 3:

Table 3

| angleAreaIndex | *tP* |
|---|---|
| 0 | (y << 1) + ((x << 1) >> angleIndex) |
| 1 | (y << 1) - ((x << 1) >> angleIndex) |
| 2 | (x << 1) - ((y << 1) >> angleIndex) |
| 3 | (x << 1) + ((y << 1) >> angleIndex) |

For an AWP mode in the P frame, a value of tP is determined according to the following Table 4:

Table 4

| angleAreaIndex | *tP* |
|---|---|
| 0 | ((y >> 2) << 3) + 4 + ((((x >> 2) << 3) + 4) >> angleIndex) |
| 1 | ((y >> 2) << 3) + 4 - ((((x >> 2) << 3) + 4) >> angleIndex) |
| 2 | ((x >> 2) << 3) + 4 - ((((y >> 2) << 3) + 4) >> angleIndex) |
| 3 | ((x >> 2) << 3) + 4 + ((((y >> 2) << 3) + 4) >> angleIndex) |

(4) A chroma weight matrix BwChroma (x, y) is filled according to a luminance weight matrix:
In the SAWP mode or the AWP mode in the B frame, the matrix is derived according to the following formula 10:

$$\text{BwChrome}[x][y] = \text{BwLuma}[x \ll 1][y \ll 1] \qquad \text{formula 10}$$

In the AWP mode in the P frame, the matrix is derived according to the following formula 11:

$$\text{BwChrome}[x][y] = \text{BwLuma}[(x \gg 2) \ll 3][(y \gg 2) \ll 3] \qquad \text{formula 11}$$

(5) Calculate a weighted predicted value predResult (x, y) according to the derived weight matrix and the predicted value by using the following formula 12:

$$predResult_{x,y} = \left(predA_{x,y} * Bw_{x,y} + predB_{x,y} * \left(8 - Bw_{x,y}\right) + 4\right) \gg 3 \qquad \text{formula 12}$$

2. A method for deriving the SAWP intra prediction mode:

If the current prediction block E is a luminance block, modAngNum = SawpIndex% 8.

(1) Calculate a predicted value of predIntraPredMode[i] of a prediction mode of a current prediction block. i ranges from 0 to 1, and predIntraPredMode[i] is also referred to as an MPM list of SAWP.

A) Perform the following operations on intraPredModeA:

a. If a left prediction block A "exists" and it is ordinary intra prediction, assign a value of IntraLumaPredMode of A to intraPredModeA. Otherwise, a value of intraPredModeA is equal to -1.

b. Perform mode validity processing on intraPredModeA.

c. If intraPredModeA is equal to -1, intraPredModeA is a candidate mode 0 corresponding to modAngNum in Table 5.

B) Perform the following operation on intraPredModeB:

a. If an upper prediction block B "exists" and it is ordinary intra prediction, assign a value of IntraLumaPredMode of B to intraPredModeB. Otherwise, a value of intraPredModeB is equal to -1.

b. Perform mode validity processing on intraPredModeB.

c. If intraPredModeB is equal to -1, intraPredModeB is a candidate mode 0 corresponding to modAngNum in Table 5.

C) If the intraPredModeA is equal to intraPredModeB, perform the following operation:

a. If intraPredModeA is not equal to a candidate mode 0 corresponding to modAngNum in Table 5, intraPredModeA is a candidate mode 0 corresponding to modAngNum in Table 5.

b. Otherwise, intraPredModeA is equal to a candidate mode 1 corresponding to the modAngNum in Table 5. predIntraPredMode [0] is equal to Min (intraPredModeA, intraPredModeB), and predIntraPredMode [1] is equal to Max (intraPredModeA, intraPredModeB).

(2) Calculate a value of SawpPredMode0, as shown in the following code:

```
if (SawpPredMode0Index < 2) {
    SawpPredMode0 = predIntraPredMode[SawpPredMode0Index]
}
else {
    SawpPredMode0Index += 3
    SawpPredMode0 = (SawpPredMode0Index + (SawpPredMode0Index >= predIntraPredMode[0] ? 1 : 0) + ((SawpPredMode0Index + 1) >= predIntraPredMode[1] ? 1 : 0))
}
```

(3) Calculate a value of SawpPredMode1, as shown in the following code:

```
if (SawpPredMode0Index < 2) {
    if (SawpPredMode1Index >= SawpPredMode0Index) {
        SawpPredMode1Index = SawpPredMode1Index + 1
    }
}
if (SawpPredMode1Index < 2) {
    SawpPredMode1 = predIntraPredMode[SawpPredMode1Index]
}
else {
    SawpPredMode1Index += 3
```

```
    SawpPredMode1 = (SawpPredMode1Index + (SawpPredMode1Index >= predIntraPredMode[0] ? 1 : 0) + ((SawpPredMode1Index + 1) >= predIntraPredMode[1] ? 1 : 0))
}
```

The following mode validity processing is performed on intraPredModeX herein, where X is A or B, as shown in the following code:

```
if (intraPredModeX <=4 || (intraPredModeX >= 31 && intraPredModeX <= 34 ) || intraPredModeX == 65) {
   intraPredModeX = -1
}
else if (intraPredModeX > 34) {
   if (intraPredModeX < 44) {
      intraPredModeX = intraPredModeX – 30
   }
   else if (intraPredModeX < 58) {
      intraPredModeX = intraPredModeX – 33
   }
   else {
      intraPredModeX = intraPredModeX – 34
   }
}
```

Table 5

| modAngNum | Candidate mode 0 | Candidate mode 1 |
|---|---|---|
| 0 | 30 | 6 |
| 1 | 27 | 24 |
| 2 | 24 | 12 |
| 3 | 21 | 24 |
| 4 | 18 | 24 |
| 5 | 15 | 12 |
| 6 | 12 | 24 |
| 7 | 9 | 12 |

3. Storage of intra prediction information:

(1) Derive a storage manner of an intra-frame luminance prediction mode of spatial angular weighted prediction:

W and H are a width and a height of a current coding unit, (x, y) is an upper-left pixel position of each 4×4 block of a current coding unit, pos_x is equal to ((x >> 2) << 2) + 2, and pos_y is equal to ((y >> 2) << 2) + 2. A storage manner SawpModeType of an intra-frame luminance prediction mode of each 4×4 block is derived according to the following method:
A) Calculate values of stepIndex, angleIndex, and angelAreaIndex, as shown in the following code:

```
stepIndex = (SawpIndex >> 3) – 3

modAngNum = SawpIndex % 8

if (modAngNum == 2) {

    angleIndex = 7

}

else if (modAngNum == 6) {

    angleIndex = 8

}

else {

    angleIndex = modAngNum % 2

}

angleAreaIndex = modAngNum >> 1
```

B) Query the following Table 6 according to angleAreaIndex to obtain tP and fP, and calculate a storage manner SawpModeType of an intra-frame luminance prediction mode of each 4×4 block in a current coding unit, as shown in the following code:

```
if (tP >= fP) {
    SawpModeType = 0
}
else {
    SawpModeType = 1
}
```

Table 6

| angleAreaIndex | fP | tP |
|---|---|---|
| 0 | H+(W>>angleIndex)-2+stepIndexx(((H+(W> >angleIndex))>>2)-1) | (pos_y<<1)+((pos_x<<1)>>angl eIndex) |
| 1 | H+(W>>angleIndex)+stepIndexx(((H+(W>>a ngleIndex))>>2)-1)-((W<<1)>>angleIndex) | (pos_y<<1)-((pos_x<<1)>>angl eIndex) |
| 2 | W+(H>>angleIndex)+stepIndexx(((W+(H>>a ngleIndex))>>2)-1)-((H<<1)>angleIndex) | (pos_x<<1)-((pos_y<<1)>angleIndex) |
| 3 | W+(H>>angleIndex)-2+stepIndexx(((W+(H> >angleIndex))>>2)-1) | (pos_x<<1)+((pos_y<<1)>>angl eIndex) |

(2) Storage of spatial intra prediction information:

An upper-left pixel position ($x_0$, $y_0$) of a storage unit of spatial intra prediction information corresponding to a sample (x, y) is determined, as shown in the following formula 13 and formula 14:

$$x_0 = (x >> 2) << 2 \quad \text{formula} \quad 13$$

$$y_0 = (y >> 2) << 2 \quad \text{formula} \quad 14$$

X is set to a prediction unit of a luminance sample ($x_0$, $y_0$), and an intra-frame luminance prediction mode is stored in the storage unit of the spatial intra-frame luminance prediction mode corresponding to the sample (x, y) by using the following method:

A) A prediction type of the storage unit of the spatial intra prediction information is a prediction type of the current coding unit.

B) If the prediction unit of the luminance sample (x0, y0) is subject to ordinary intra prediction and SawpFlag is equal to 0, an intra-frame luminance prediction mode of the storage unit of the spatial intra-frame luminance prediction mode is equal to IntraLumaPredMode.

C) Otherwise, if the prediction unit of the luminance sample (x0, y0) is subject to ordinary intra prediction and SawpFlag is equal to 1, the storage manner SawpModeType of the intra-frame luminance prediction mode of spatial angular weighted prediction may be derived.

a. If SawpModeType is equal to 0, the intra-frame luminance prediction mode of the storage unit of the spatial

intra-frame luminance prediction mode is equal to SawpPredMode0.

b. Otherwise (SawpModeType is equal to 1), the intra-frame luminance prediction mode of the storage unit of the spatial intra-frame luminance prediction mode is equal to SawpPredMode1.

D) Otherwise, if the prediction type of the current coding unit is subject to block copy intra prediction, a block vector of the storage unit of the spatial intra prediction information is equal to a block vector of the current coding unit.

E) Otherwise, if the prediction type of the current coding unit is subject to string copy intra prediction, a string vector of the storage unit of the spatial intra prediction information is a string vector corresponding to a sample with coordinates ($x_0$, $y_0$+3).

4. Derive a sample for spatial angular weighted prediction:
Inputs herein are a luminance weight matrix SawpWeightMatrixY and a chrominance weight matrix SawpWeightMatrixUV for spatial angular weighted prediction, an upper-left sample position (xE, yE) of the current prediction block, and the width W and the height H of the current prediction block.

An output herein is a weighted prediction sample matrix predMatrix.

If the current prediction block is a luminance prediction block, the following code is used:

```
for (x=0; x<W; x++) {
    for (y=0; y<H; y++) {
        predMatrix[x][y] = (predLumaMatrix0[x][y] * SawpWeightMatrixY[x][y] + predLumaMatrix1
[x][y] * (8 - SawpWeightMatrixY[x][y] ) + 4) >> 3
    }
}
```

If the current prediction block is a chrominance prediction block, the following code is used:

```
for (x=0; x<W/2; x++) {
    for (y=0; y<H/2; y++) {
        predMatrix[x][y] = (predChromaMatrix0[x][y] * SawpWeightMatrixUV[x][y] +
predChromaMatrix1 [x][y] * (8 - SawpWeightMatrixUV[x][y] ) + 4) >> 3
    }
}
```

5. A calculation method of the SAWP MPM is as follows:

A predicted value of predIntraPredMode[i] of a prediction mode of a current prediction block is calculated. i ranges from 0 to 1.

(1) Perform the following operation on intraPredModeA:

A) If a left prediction block A "exists" and it is ordinary intra prediction, assign a value of IntraLumaPredMode of A to intraPredModeA. Otherwise, a value of intraPredModeA is equal to -1.

B) Perform mode validity processing on intraPredModeA.

C) If intraPredModeA is equal to -1, intraPredModeA is a candidate mode 0 corresponding to modAngNum in Table 5.

(2) Perform the following operation on intraPredModeB:

A) If an upper prediction block B "exists" and it is ordinary intra prediction, assign a value of IntraLumaPredMode of B to intraPredModeB. Otherwise, a value of intraPredModeB is equal to -1.

B) Perform mode validity processing on intraPredModeB.

C) If intraPredModeB is equal to -1, intraPredModeB is a candidate mode 0 corresponding to modAngNum in Table 5.

(3) If the intraPredModeA is equal to intraPredModeB, perform the following operation:

A) If intraPredModeA is not equal to a candidate mode 0 corresponding to modAngNum the foregoing Table 5, intraPredModeA is a candidate mode 0 corresponding to modAngNum the foregoing Table 5.

B) Otherwise, intraPredModeA is equal to a candidate mode 1 corresponding to the modAngNum in the foregoing Table 5.

(4) predIntraPredMode [0] is equal to Min (intraPredModeA, intraPredModeB), and predIntraPredMode [1] is equal to Max (intraPredModeA, intraPredModeB).

Based on the foregoing related descriptions, an embodiment of this application provides a video processing method. According to the video processing method, based on the spatial angular weighted prediction mode (SAWP), the adaptive angular weighted mode (DAWP) is provided. In the adaptive angular weighted mode (DAWP), a prediction mode of the spatial angular weighted prediction may be sorted, so that a prediction mode with a higher probability of being used for a current block has a smaller index value in the prediction mode list. In addition, a corresponding entropy coding method is designed, and coding bit overheads and decoding information amounts of the prediction mode index are effectively reduced, thereby improving video coding and decoding efficiency. Specifically, a general principle of the video processing method is as follows:

At the coding end: The coding scheme indication information of the current block may be obtained. If the coding scheme indication information indicates that the coding scheme of the current block is the sorted coding scheme (that is, the adaptive angular weighted mode (DAWP)), the prediction mode list may be sorted, to obtain the sorted prediction mode list. In the sorted prediction mode list, a prediction mode with a higher probability of being used for the current block corresponds to a smaller prediction mode index. The prediction mode index of the current block is determined according to the prediction mode index corresponding to the prediction mode of the current block in the sorted prediction mode list. Next, the coding scheme indication information and the prediction mode index may be coded into the video stream. The video stream may be sent to the decoding end.

At the decoding end: After the video stream sent by the coding end is received, the coding scheme indication information of the current block and the prediction mode index of the current block in the video stream may be parsed. If the coding scheme indication information indicates that the coding scheme of the current block is the sorted coding scheme (that is, the adaptive angular weighted mode (DAWP)), the prediction mode list may be sorted, to obtain the sorted prediction mode list. In the sorted prediction mode list, a prediction mode with a higher probability of being used for the current block corresponds to a smaller prediction mode index. The prediction mode of the current block may be determined from the sorted prediction mode list according to the prediction mode index of the current block, and the current block is predicted according to the prediction mode of the current block, to obtain the predicted value of the current block. The decoded picture block corresponding to the current block may be reconstructed based on the predicted value of the current block.

As can be seen from the above, in a video coding and decoding process, this embodiment of this application

provides a sorting-based spatial angular weighted prediction mode (SAWP), that is, an adaptive angular weighted mode (DAWP). The prediction mode list is sorted, so that in the sorted prediction mode list, a prediction mode with a higher probability of being used for the current block corresponds to a smaller prediction mode index value. In this way, the actual prediction mode index used for the current block has a smaller value, and less information can be coded and decoded when the prediction mode index of the current block is coded and decoded. This improves coding and decoding efficiency of the prediction mode index of the current block, and improves video coding and decoding efficiency.

The video processing method provided in this embodiment of this application may be performed by a video processing system shown in FIG. 11. As shown in FIG. 11, the video processing system may include a coding device 1101 and a decoding device 1102. The coding device 1101 may be configured to perform a procedure of the video processing method at a coding end, and the decoding device 1102 may be configured to perform a procedure of the video processing method at a decoding end.

A direct communication connection may be established between the coding device 1101 and the decoding device 1102 in a wired communication manner, or an indirect communication connection may be established between the coding device 1101 and the decoding device 1102 in a wireless communication manner. The coding device 1101 may be a terminal, or may be a server. The decoding device 1102 may be a terminal, or may be a server. The terminal may be a mobile phone, a tablet computer, a notebook computer, a palmtop computer, a mobile internet device (MID), an in-vehicle device, an aircraft, a wearable device (a smart device such as a smart watch, a smart band, or a pedometer), a virtual reality device (for example, a virtual reality (VR) device or an augmented reality (AR) device), or the like. The server can be an independent physical server, or a server cluster composed of multiple physical servers or a distributed system, or can be a cloud server that provides basic cloud computing services such as cloud services, cloud databases, cloud computing, cloud functions, cloud storage, network services, cloud communications, middleware services, domain name services, security services, content delivery networks (CDN), big data, and artificial intelligence platforms.

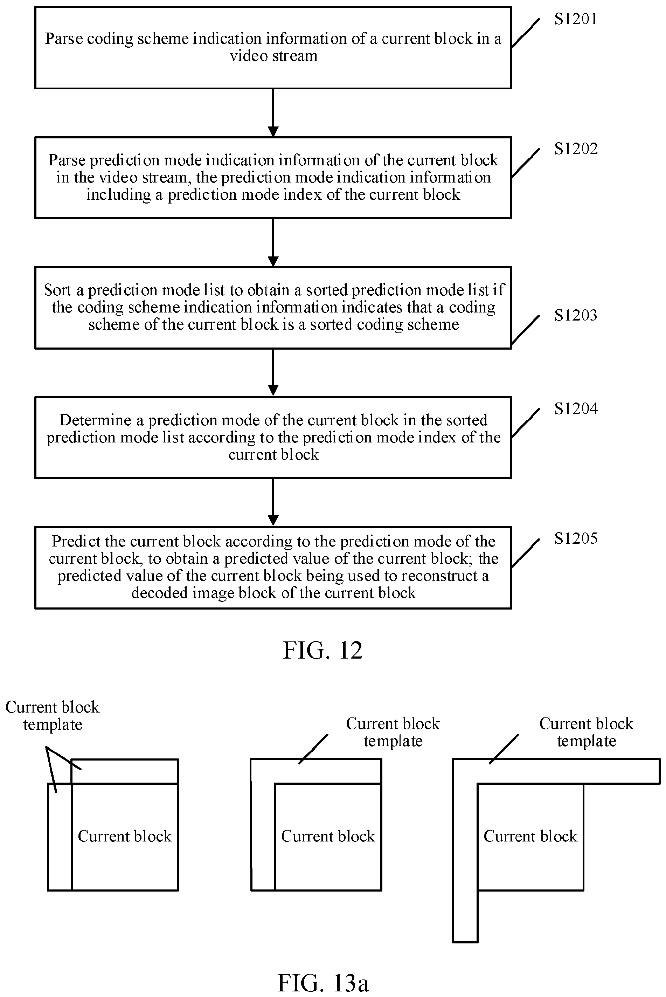

An embodiment of this application provides a video processing method. In the video processing method, a decoding process at a decoding end is described. The video processing method may be performed by a computer device. For example, the computer device may be the decoding device 1102 in the video processing system shown in FIG. 11. As shown in FIG. 12, the video processing method may include, but is not limited to, the following operation S1201 to operation S1205:

S1201: Parse coding scheme indication information of a current block in a video stream.

The video stream is obtained by coding a video, and the video is a picture sequence including multiple pictures. Each picture in a video may be further divided into slices, and the slices may be further divided into a series of LCUs (or CTUs). The LCU (or CTU) may include a CU, and the CU is a basic coding unit of the picture. The current block is a picture block that is being decoded currently, and the picture block is a CU and is a most basic element in a decoding section. The coding scheme indication information of the current block may be used to indicate whether a coding scheme of the current block is a sorted coding scheme, and the sorted coding scheme is an adaptive angular weighted mode (DAWP).

The coding scheme indication information may be located in a sequence header of the video stream, a picture header of the video stream, or a slice header of the video stream. The sequence header refers to information in the video stream for instructing to decode a picture sequence, the picture header refers to information in the video stream for instructing to decode a picture, and the slice header refers to information in the video stream for instructing to decode a slice. That is, the coding scheme indication information may be a syntactic element in the sequence header of the video stream, and the coding scheme indication information included in the sequence header of the video stream may be used to indicate whether the sorted coding scheme is used for the current sequence (that is, a picture sequence to which the current block belongs). Alternatively, the coding scheme indication information may be a syntactic element in the picture header of the video stream, and the coding scheme indication information included in the picture header of the video stream may be used to indicate whether the sorted coding scheme is used for the current picture (that is, a picture to which the current block belongs). Alternatively, the coding scheme indication information may be a syntactic element in the slice header of the video stream, and the coding scheme indication information included in the slice header of the video stream may be used to indicate whether the sorted coding scheme is used for the current slice (that is, a picture slice to which the current block belongs). The coding scheme indication information in the sequence header, the picture header, or the slice header of the video stream is described below.

First. The coding scheme indication information is included in the sequence header of the video stream.

The coding scheme indication information included in the sequence header of the video stream may include any one of first coding scheme indication information, second coding scheme indication information, and third coding scheme indication information.

(1) The first coding scheme indication information: The first coding scheme indication information may include a sequence header spatial angular weighted prediction mode flag (seq_sawp_flag) and a sequence header sorting-based angular weighted prediction mode flag (seq_dawp_flag); and if the sequence header spatial angular weighted prediction mode flag is a first value (the first value, for example, can be 1), and the sequence header sorting-based angular weighted prediction mode flag is the first value, it may be determined that the coding scheme indication information indicates that the coding

scheme of the current block is the sorted coding scheme. Semantics of the first coding scheme indication information are shown in the following Table 7:

Table 7

| seq_sawp_flag | seq_dawp_flag | Semantics |
|---|---|---|
| 0 | X | An SAWP mode cannot be used |
| 1 | 0 | An SAWP mode can be used, and a DAWP mode cannot be used. |
| 1 | 1 | An SAWP mode and a DAWP mode can be used. |

In the foregoing Table 7, the sequence header spatial angular weighted prediction mode flag (seq_sawp_flag) is a binary variable. A value '1' indicates that the SAWP mode can be used, and a value '0' indicates that the SAWP mode is not used. A value of SeqSawpFlag (SeqSawpFlag is a variable corresponding to the syntactic element seq_sawp_flag) is equal to a value of seq_sawp_flag. If seq_sawp_flag does not exist in the stream, the value of SeqSawpFlag is 0. The sequence header sorting-based angular weighted prediction mode flag (seq_dawp_flag) is a binary variable. A value '1' indicates that the DAWP mode can be used, and a value '0' indicates that the DAWP mode is not used. A value of SeqDawpFlag (SeqDawpFlag is a variable corresponding to the syntactic element seq_dawp_flag) is equal to a value of seq_dawp_flag. If seq_dawp_flag does not exist in the stream, the value of SeqDawpFlag is 0.

Syntactics of the first coding scheme indication information are shown in the following Table 8:

Table 8

| | |
|---|---|
| seq_sawp_flag | u (1) |
| if(SeqSawpFlag) { | |
| seq_dawp_flag | u (1) |
| } | |

(2) The second coding scheme indication information: The second coding scheme indication information may include a sequence header spatial angular weighted prediction mode flag (seq_sawp_flag); and if the sequence header spatial angular weighted prediction mode flag is a second value (the second value, for example, can be 2), it may be determined that the coding scheme indication information indicates that the coding scheme of the current block is the sorted coding scheme. Semantics of the second coding scheme indication information are shown in the following Table 9-1:

Table 9-1

| seq_awp_flag | Semantics |
|---|---|
| 0 | An SAWP mode cannot be used |
| 1 | An SAWP mode can be used, and a DAWP mode cannot be used. |
| 2 | An SAWP mode and a DAWP mode can be used. |

In Table 9-1, the sequence header spatial angular weighted prediction mode flag (seq_sawp_flag) indicates a mode type of the angular weighted prediction mode. A value '0' indicates that SAWP is not used, a value greater than '0' indicates that SAWP can be used and indicates whether DAWP can be used, a value '1' indicates that SAWP can be used but DAWP cannot be used, and a value '2' indicates that SAWP can be used and DAWP can be used. A value of SeqSawpFlag (SeqSawpFlag is a variable corresponding to the syntactic element seq_sawp_flag) is equal to a value of seq_sawp_flag. If seq_sawp_flag does not exist in the stream, a value of SeqSawpFlag is 0.

(3) The third coding scheme indication information: The third coding scheme indication information includes a sequence header angular weighted prediction mode flag (seq_awp_flag), a sequence header spatial angular weighted prediction mode flag (seq_sawp_flag), and a sequence header sorting-based angular weighted prediction mode flag (seq_dawp_flag); and if the sequence header angular weighted prediction mode flag or the sequence header spatial angular weighted prediction mode flag is a first value (the first value, for example, can be 1), and the sequence header sorting-based angular weighted prediction mode flag is the first value, it is determined that the coding scheme indication information indicates that the coding scheme of the current block is the sorted coding scheme. Syntactics of the third

coding scheme indication information are shown in the following Table 9-2:

Table 9-2

| seq_sawp_flag | u (1) |
|---|---|
| seq_awp_flag | |
| if(SeqSawpFlag || SeqAwpFlag) { | |
| seq_dawp_flag | u (1) |
| } | |

In the foregoing Table 9-2, the sequence header spatial angular weighted prediction mode flag (seq_sawp_flag) is a binary variable. A value '1' indicates that the SAWP mode can be used, and a value '0' indicates that the SAWP mode is not used. A value of SeqSawpFlag (SeqSawpFlag is a variable corresponding to the syntactic element seq_sawp_flag) is equal to a value of seq_sawp_flag. If seq_sawp_flag does not exist in the stream, the value of SeqSawpFlag is 0. The sequence header angular weighted prediction mode flag (seq_awp_flag) is a binary variable. A value '1' indicates that the AWP mode can be used, and a value '0' indicates that the AWP mode is not used. A value of SeqAwpFlag (SeqAwpFlag is a variable corresponding to the syntactic element seq_awp_flag) is equal to a value of seq_awp_flag. If seq_awp_flag does not exist in the stream, the value of SeqAwpFlag is 0. The sequence header sorting-based angular weighted prediction mode flag (seq_dawp_flag) is a binary variable. A value '1' indicates that the DAWP mode can be used, and a value '0' indicates that the DAWP mode is not used. A value of SeqDawpFlag (SeqDawpFlag is a variable corresponding to the syntactic element seq_dawp_flag) is equal to a value of seq_dawp_flag. If seq_dawp_flag does not exist in the stream, the value of SeqDawpFlag is 0.

Second. The coding scheme indication information is included in a picture header of the video stream.

The coding scheme indication information included in the picture header of the video stream may include any one of first coding scheme indication information, second coding scheme indication information, third coding scheme indication information, and fourth coding scheme indication information.

(1) The first coding scheme indication information: The first coding scheme indication information may include a picture header angular weighted prediction mode flag (pic_sawp_flag) and a picture header sorting-based angular weighted prediction mode flag (pic_dawp_flag); and if the picture header angular weighted prediction mode flag is a first value (the first value, for example, can be 1), and the picture header sorting-based angular weighted prediction mode flag is the first value, it may be determined that the coding scheme indication information indicates that the coding scheme of the current block is the sorted coding scheme. Semantics of the first coding scheme indication information are shown in the following Table 10:

Table 10

| pic_sawp_flag | pic_dawp_flag | Semantics |
|---|---|---|
| 0 | X | An SAWP mode cannot be used |
| 1 | 0 | An SAWP mode can be used, and a DAWP mode cannot be used. |
| 1 | 1 | An SAWP mode and a DAWP mode can be used. |

In the foregoing Table 10, the picture header angular weighted prediction mode flag (pic_sawp_flag) is a binary variable. A value '1' indicates that the SAWP mode can be used, and a value '0' indicates that the SAWP mode is not used. A value of PicSawpFlag (PicSawpFlag is a variable corresponding to the syntactic element pic_sawp_flag) is equal to a value of pic_sawp_flag. If pic_sawp_flag does not exist in the stream, the value of PicSawpFlag is 0. The picture header sorting-based angular weighted prediction mode flag (pic_dawp_flag) is a binary variable. A value '1' indicates that the DAWP mode can be used, and a value '0' indicates that the DAWP mode is not used. A value of PicDawpFlag (PicDawpFlag is a variable corresponding to the syntactic element pic_dawp_flag) is equal to a value of pic_dawp_flag. If pic_dawp_flag does not exist in the stream, the value of PicDawpFlag is 0.

Syntactics of the first coding scheme indication information are shown in the following Table 11:

Table 11

| pic_sawp_flag | u (1) |
|---|---|
| if(PicSawpFlag) { | |

(continued)

| pic_dawp_flag | u (1) |
|---|---|
| } | |

(2) The second coding scheme indication information: The second coding scheme indication information may include a picture header angular weighted prediction mode flag (pic_sawp_flag); and if the picture header angular weighted prediction mode flag is a second value (the second value, for example, can be 2), it may be determined that the coding scheme indication information indicates that the coding scheme of the current block is the sorted coding scheme. Semantics of the second coding scheme indication information are shown in the following Table 12:

Table 12

| pic_sawp_flag | Semantics |
|---|---|
| 0 | An SAWP mode cannot be used |
| 1 | An SAWP mode can be used, and a DAWP mode cannot be used. |
| 2 | An SAWP mode and a DAWP mode can be used. |

In Table 12, the picture header angular weighted prediction mode flag (pic_sawp_flag) indicates a mode type of the angular weighted prediction mode. A value '0' indicates that SAWP is not used, a value greater than '0' indicates that SAWP can be used and indicates whether DAWP can be used, a value '1' indicates that SAWP can be used but DAWP cannot be used, and a value '2' indicates that SAWP can be used and DAWP can be used. A value of PicSawpFlag (PicSawpFlag is a variable corresponding to the syntactic element pic_sawp_flag) is equal to a value of pic_sawp_flag. If pic_sawp_flag does not exist in the stream, the value of PicSawpFlag is 0.

(3) The third coding scheme indication information: The video stream may further include a sequence header, the sequence header may include a sequence header spatial angular weighted prediction mode flag (seq_sawp_flag), and the third coding scheme indication information may include a picture header sorting-based angular weighted prediction mode flag (pic_dawp_flag); and if the sequence header spatial angular weighted prediction mode flag is a first value (the first value, for example, can be 1), and the picture header sorting-based angular weighted prediction mode flag is the first value, it may be determined that the coding scheme indication information indicates that the coding scheme of the current block is the sorted coding scheme. Semantics of the third coding scheme indication information are shown in the following Table 13:

Table 13

| seq_sawp_flag | pic_dawp_flag | Semantics |
|---|---|---|
| 0 | x | An SAWP mode cannot be used |
| 1 | 0 | An SAWP mode can be used, and a DAWP mode cannot be used. |
| 1 | 1 | An SAWP mode and a DAWP mode can be used. |

In the foregoing Table 13, the sequence header spatial angular weighted prediction mode flag (seq_sawp_flag) is a binary variable. A value '1' indicates that the SAWP mode can be used, and a value '0' indicates that the SAWP mode is not used. A value of SeqSawpFlag (SeqSawpFlag is a variable corresponding to the syntactic element seq_sawp_flag) is equal to a value of seq_sawp_flag. If seq_sawp_flag does not exist in the stream, the value of SeqSawpFlag is 0. The picture header sorting-based angular weighted prediction mode flag (pic_dawp_flag) is a binary variable. A value '1' indicates that the DAWP mode can be used, and a value '0' indicates that the DAWP mode is not used. A value of PicDawpFlag (PicDawpFlag is a variable corresponding to the syntactic element pic_dawp_flag) is equal to a value of pic_dawp_flag. If pic_dawp_flag does not exist in the stream, the value of PicDawpFlag is 0.

Syntactics of the third coding scheme indication information are shown in the following Table 14:

Table 14

| if(SeqSawpFlag) { | |
|---|---|
| pic_dawp_flag | u (1) |

(continued)

| } | |
|---|---|

(4) The fourth coding scheme indication information: The video stream may further include a sequence header, the sequence header may include a sequence header sorting-based angular weighted prediction mode flag (seq_dawp_flag), and the fourth coding scheme indication information may include a picture header sorting-based angular weighted prediction mode flag (pic_dawp_flag); and if the sequence header sorting-based angular weighted prediction mode flag is a first value (the first value, for example, can be 1), and the picture header sorting-based angular weighted prediction mode flag is the first value, it may be determined that the coding scheme indication information indicates that the coding scheme of the current block is the sorted coding scheme. Semantics of the fourth coding scheme indication information may be shown in the following Table 15:

Table 15

| seq_dawp_flag | pic_dawp_flag | Semantics |
|---|---|---|
| 0 | x | A DAWP mode cannot be used |
| 1 | 0 | A DAWP mode cannot be used |
| 1 | 1 | A DAWP mode can be used |

In the foregoing Table 15, the sequence header sorting-based angular weighted prediction mode flag (seq_dawp_flag) is a binary variable. A value '1' indicates that the DAWP mode can be used, and a value '0' indicates that the DAWP mode is not used. A value of SeqDawpFlag (SeqDawpFlag is a variable corresponding to the syntactic element seq_dawp_flag) is equal to a value of seq_dawp_flag. If seq_dawp_flag does not exist in the stream, the value of SeqDawpFlag is 0. The picture header sorting-based angular weighted prediction mode flag (pic_dawp_flag) is a binary variable. A value '1' indicates that the DAWP mode can be used, and a value '0' indicates that the DAWP mode is not used. A value of PicDawpFlag (PicDawpFlag is a variable corresponding to the syntactic element pic_dawp_flag) is equal to a value of pic_dawp_flag. If pic_dawp_flag does not exist in the stream, the value of PicDawpFlag is 0.

Semantics of the fourth coding scheme indication information are shown in the following Table 16:

Table 16

| if(SeqDawpFlag) { | |
|---|---|
| pic_dawp_flag | u (1) |
| } | |

Third. The coding scheme indication information is included in the slice header of the video stream:

The coding scheme indication information included in the slice header of the video stream may include any one of first coding scheme indication information, second coding scheme indication information, third coding scheme indication information, and fourth coding scheme indication information.

(1) The first coding scheme indication information: The first coding scheme indication information may include a slice header angular weighted prediction mode flag (slice_sawp_flag) and a slice header sorting-based angular weighted prediction mode flag (slice_dawp_flag); and if the slice header angular weighted prediction mode flag is a first value (the first value, for example, can be 1), and the slice header sorting-based angular weighted prediction mode flag is the first value, it may be determined that the coding scheme indication information indicates that the coding scheme of the current block is the sorted coding scheme. Semantics of the first coding scheme indication information are shown in the following Table 17:

Table 17

| slice_sawp_flag | slice_dawp_flag | Semantics |
|---|---|---|
| 0 | X | An SAWP mode cannot be used |
| 1 | 0 | An SAWP mode can be used, and a DAWP mode cannot be used. |
| 1 | 1 | An SAWP mode and a DAWP mode can be used. |

In the foregoing Table 17, the slice header angular weighted prediction mode flag (slice_sawp_flag) is a binary variable. A value '1' indicates that the SAWP mode can be used, and a value '0' indicates that the SAWP mode is not used. A value of SliceSawpFlag (SliceSawpFlag is a variable corresponding to the syntactic element slice_sawp_flag) is equal to a value of slice_sawp_flag. If slice_sawp_flag does not exist in the stream, the value of SliceSawpFlag is 0. The slice header sorting-based angular weighted prediction mode flag (slice_dawp_flag) is a binary variable. A value '1' indicates that the DAWP mode can be used, and a value '0' indicates that the DAWP mode is not used. A value of SliceDawpFlag (SliceDawpFlag is a variable corresponding to the syntactic element slice_dawp_flag) is equal to a value of slice_dawp_flag. If slice_dawp_flag does not exist in the stream, the value of SliceDawpFlag is 0.

Syntactics of the first coding scheme indication information are shown in the following Table 18:

Table 18

| | |
|---|---|
| slice_sawp_flag | u (1) |
| if(SliceSawpFlag) { | |
| slice_dawp_flag | u (1) |
| } | |

(2) The second coding scheme indication information: The second coding scheme indication information may include a slice header angular weighted prediction mode flag (slice_sawp_flag); and if the slice header angular weighted prediction mode flag is a second value (the second value, for example, can be 2), it may be determined that the coding scheme indication information indicates that the coding scheme of the current block is the sorted coding scheme. Semantics of the second coding scheme indication information are shown in the following Table 19:

Table 19

| slice_sawp_flag | Semantics |
|---|---|
| 0 | An SAWP mode cannot be used |
| 1 | An SAWP mode can be used, and a DAWP mode cannot be used. |
| 2 | An SAWP mode and a DAWP mode can be used. |

In Table 19, the slice header angular weighted prediction mode flag (slice_sawp_flag) indicates a mode type of the angular weighted prediction mode. A value '0' indicates that SAWP is not used, a value greater than '0' indicates that SAWP can be used and indicates whether DAWP can be used, a value '1' indicates that SAWP can be used but DAWP cannot be used, and a value '2' indicates that SAWP can be used and DAWP can be used. A value of SliceSawpFlag (SliceSawpFlag is a variable corresponding to the syntactic element slice_sawp_flag) is equal to a value of slice_sawp_flag. If slice_sawp_flag does not exist in the stream, the value of SliceSawpFlag is 0.

(3) The third coding scheme indication information: The video stream may further include a picture header, the picture header may include a picture header angular weighted prediction mode flag (pic_sawp_flag), and the third coding scheme indication information may include a slice header sorting-based angular weighted prediction mode flag (slice_dawp_flag); and if the picture header angular weighted prediction mode flag is a first value (the first value, for example, can be 1), and the slice header sorting-based angular weighted prediction mode flag is the first value, it may be determined that the coding scheme indication information indicates that the coding scheme of the current block is the sorted coding scheme. Semantics of the third coding scheme indication information are shown in the following Table 20:

Table 20

| pic_sawp_flag | slice_dawp_flag | Semantics |
|---|---|---|
| 0 | x | An SAWP mode cannot be used |
| 1 | 0 | An SAWP mode can be used, and a DAWP mode cannot be used. |
| 1 | 1 | An SAWP mode and a DAWP mode can be used. |

In the foregoing Table 20, the picture header angular weighted prediction mode flag (pic_sawp_flag) is a binary variable. A value '1' indicates that the SAWP mode can be used, and a value '0' indicates that the SAWP mode is not used. A value of PicSawpFlag (PicSawpFlag is a variable corresponding to the syntactic element pic_sawp_flag) is equal to a

value of pic_sawp_flag. If pic_sawp_flag does not exist in the stream, the value of PicSawpFlag is 0. The slice header sorting-based angular weighted prediction mode flag (slice_dawp_flag) is a binary variable. A value '1' indicates that the DAWP mode can be used, and a value '0' indicates that the DAWP mode is not used. A value of SliceDawpFlag (SliceDawpFlag is a variable corresponding to the syntactic element slice_dawp_flag) is equal to a value of slice_dawp_flag. If slice_dawp_flag does not exist in the stream, the value of SliceDawpFlag is 0.

Syntactics of the third coding scheme indication information are shown in the following Table 21:

Table 21

| | |
|---|---|
| if(PicSawpFlag) { | |
| slice_dawp_flag | u (1) |
| } | |

(4) The fourth coding scheme indication information: The video stream may further include a picture header, the picture header may include a picture header sorting-based angular weighted prediction mode flag (pic_dawp_flag), and the fourth coding scheme indication information may include a slice header sorting-based angular weighted prediction mode flag (slice_dawp_flag); and if the picture header sorting-based angular weighted prediction mode flag is a first value (the first value, for example, can be 1), and the slice header sorting-based angular weighted prediction mode flag is the first value, it may be determined that the coding scheme indication information indicates that the coding scheme of the current block is the sorted coding scheme. Semantics of the fourth coding scheme indication information may be shown in the following Table 22:

Table 22

| pic_dawp_flag | slice_dawp_flag | Semantics |
|---|---|---|
| 0 | x | A DAWP mode cannot be used |
| 1 | 0 | A DAWP mode cannot be used |
| 1 | 1 | A DAWP mode can be used |

In the foregoing Table 22, the picture header sorting-based angular weighted prediction mode flag (pic_dawp_flag) is a binary variable. A value '1' indicates that the DAWP mode can be used, and a value '0' indicates that the DAWP mode is not used. A value of PicDawpFlag (PicDawpFlag is a variable corresponding to the syntactic element pic_dawp_flag) is equal to a value of pic_dawp_flag. If pic_dawp_flag does not exist in the stream, the value of PicDawpFlag is 0. The slice header sorting-based angular weighted prediction mode flag (slice_dawp_flag) is a binary variable. A value '1' indicates that the DAWP mode can be used, and a value '0' indicates that the DAWP mode is not used. A value of SliceDawpFlag (SliceDawpFlag is a variable corresponding to the syntactic element slice_dawp_flag) is equal to a value of slice_dawp_flag. If slice_dawp_flag does not exist in the stream, the value of SliceDawpFlag is 0.

Syntactics of the fourth coding scheme indication information may be shown in the following Table 23:

Table 23

| | |
|---|---|
| if(PicDawpFlag) { | |
| slice_dawp_flag | u (1) |
| } | |

It can be seen that the coding scheme indication information may be included in syntactic elements of different levels (a sequence header at a sequence level, a picture header at a picture level, or a slice header at a slice level) in the video stream.

In addition, the coding scheme indication information may further have a parsing condition. When the parsing condition is satisfied, the coding scheme indication information of the current block in the video stream may be parsed. The parsing condition may include any one of the following: If a picture type of a picture to which the current block belongs is a first picture type, it may indicate that the parsing condition is satisfied. In this case, the coding scheme indication information of the current block in the video stream may be parsed. For example, when the picture type of the picture to which the current block belongs is an I frame (a key frame), dawp_flag (for example, seq_dawp_flag, pic_dawp_flag, or slice_dawp_flag) needs to be parsed. For another example, when the picture type of the picture to which the current block

belongs is a B frame (a bidirectional predictive interpolated coding frame), dawp_flag needs to be parsed. For another example, when the picture type of the picture to which the current block belongs is the B frame or a P frame (a forward predictive coding frame), dawp_flag needs to be parsed. Alternatively, if the picture type of the picture to which the current block belongs is a picture type other than the second picture type, it may indicate that the parsing condition is satisfied. In this case, the coding scheme indication information of the current block in the video stream may be parsed. For example, when the picture type of the picture to which the current block belongs is a picture type other than the I frame, dawp_flag needs to be parsed. The first picture type is the same as or different from the second picture type. For example, the first picture type and the second picture type are both the I frame, or the first picture type is the B frame and the second picture type is the I frame.

S1202: Parse prediction mode indication information of the current block in the video stream, the prediction mode indication information including a prediction mode index of the current block.

The prediction mode indication information of the current block in the video stream may include the prediction mode index of the current block, the prediction mode index of the current block may be used to determine the prediction mode of the current block from the prediction mode list, and the prediction mode of the current block may be used to predict the current block. The prediction mode index of the current block may include a weight prediction mode index of the current block and N intra prediction mode indexes of the current block, where N is an integer greater than 1. Correspondingly, the prediction mode list may include a weight prediction mode list and N intra prediction mode lists. The weight prediction mode list may include multiple weight prediction modes, the weight prediction mode index of the current block may be used to determine a weight prediction mode of the current block from the weight prediction mode list, and the weight prediction mode of the current block may be used to derive a weight matrix of the current block. The intra prediction mode index of the current block may be used to determine an intra prediction mode of the current block from a corresponding intra prediction mode list, and the intra prediction mode of the current block may be used to derive an intra-frame predicted value of the current block. The weight matrix of the current block and the N intra-frame predicted values of the current block may be used to predict the current block.

For example, the prediction mode index of the current block may include a weight prediction mode index of the current block, a first intra prediction mode index of the current block, and a second intra prediction mode index of the current block. Correspondingly, the prediction mode list may include a weight prediction mode list, a first intra prediction mode list, and a second intra prediction mode list. The weight prediction mode list may include multiple weight prediction modes, the weight prediction mode index of the current block may be used to determine a weight prediction mode of the current block from the weight prediction mode list, and the weight prediction mode of the current block may be used to derive a weight matrix of the current block. The first intra prediction mode index of the current block may be used to determine a first intra prediction mode of the current block from the first intra prediction mode list, and the first intra prediction mode of the current block may be used to derive a first intra-frame predicted value of the current block. The second intra prediction mode index of the current block may be used to determine a second intra prediction mode of the current block from the second intra prediction mode list, and the second intra prediction mode of the current block may be used to derive a second intra-frame predicted value of the current block. The weight matrix of the current block, the first intra-frame predicted value of the current block, and the second intra-frame predicted value of the current block may be used to predict the current block.

A case of parsing the prediction mode indication information of the current block in the video stream is described herein. For any prediction mode list (including a weight prediction mode list or any intra prediction mode list), that is, for any prediction mode index (including a weight prediction mode index or any intra prediction mode index) of the current block, the parsing the prediction mode indication information of the current block in the video stream may include any one of the following:

(1) Parse the prediction mode index of the current block in the video stream when there is one prediction mode list. For example, when the prediction mode list includes a weight prediction mode list and there is one weight prediction mode list, a weight prediction mode index (sawp_index) of the current block in the video stream is parsed. For another example, when the prediction mode list includes a first intra prediction mode list and there is one first intra prediction mode list, a first intra prediction mode index (sawp_pred_mode0_index) of the current block in the video stream is parsed.

(2) Parse a prediction mode list index of the current block in the video stream and parse the prediction mode index of the current block in the video stream when there is multiple prediction mode lists, where the prediction mode indication information of the current block may further include the prediction mode list index of the current block, and a prediction mode list corresponding to the prediction mode list index of the current block is an available prediction mode list.

For example, when the prediction mode list includes a weight prediction mode list and there is multiple weight prediction mode lists, a weight prediction mode list index (sawp_list_index) of the current block and a weight prediction mode index (sawp_index) of the current block in the video stream are parsed, and a weight prediction mode list

corresponding to the weight prediction mode list index (sawp_list_index) of the current block is an available weight prediction mode list. The syntactics are shown in Table 24:

Table 24

| sawp_list_index | ae (v) |
|---|---|
| sawp_index | ae (v) |

For another example, when the prediction mode list includes a first intra prediction mode list and there are multiple first intra prediction mode lists, a first intra prediction mode list index (sawp_pred_mode0_list_index) of the current block and a first intra prediction mode index (sawp_pred_mode0_index) of the current block in the video stream are parsed, and a first intra prediction mode list corresponding to the first intra prediction mode list index (sawp_pred_mode0_list_index) of the current block is an available first intra prediction mode list. The syntactics are shown in Table 25:

Table 25

| sawp_pred_mode0_list_index | ae (v) |
|---|---|
| sawp_pred_mode0_index | ae (v) |

Particularly, in a case of multiple weight prediction mode lists, the prediction mode list may include the weight prediction mode lists, and the multiple weight prediction mode lists belong to different weight prediction mode types. The prediction mode index may include a weight prediction mode index. A weight prediction mode index of the current block in the video stream for each weight prediction mode type may be parsed.

For example, the multiple weight prediction mode lists may include a weight angle prediction mode list and a reference weight configuration mode list, and a weight angle prediction mode index (sawp_angle_index) and a reference weight configuration mode index (sawp_step_index) of the current block in the video stream may be parsed. In some embodiments, the multiple weight prediction mode lists may further include a reference weight deriving function list (or may be referred to as a blend area width list), and a reference weight deriving function index (or may be referred to as a blend area width index, sawp_blend_index) of the current block in the video stream may be further parsed. The syntactics are shown in Table 26:

Table 26

| sawp_blend_index | ae (v) |
|---|---|
| sawp_angle_list_index | ae (v) |
| sawp_angle_index | ae (v) |
| sawp_step_index | ae (v) |

Particularly, in a case of multiple intra prediction mode lists, the prediction mode list may include an intra prediction mode list, multiple intra prediction mode lists belong to two types: a most probable mode (MPM) and a non-most probable mode (non-MPM), and the prediction mode index may include an intra prediction mode index. An intra prediction mode list index (sawp_pred_mode0_list_index) of the current block in the video stream is parsed and an intra prediction mode index (sawp_pred_mode0_index) of the current block in the video stream is parsed if an intra prediction mode index of the current block belongs to the non-most probable mode type.

For example, there are 5 first intra prediction mode lists, a first list is an MPM list, and the last four lists are non-MPM lists. The video stream includes an index of an available first intra prediction mode list, and decoding is performed only for the non-MPM list. The syntactics are shown in Table 27:

Table 27

| sawp_pred_mode0_is_mpm | ae (v) |
|---|---|
| if(!SawpPredMode0IsMpm) { | |
| sawp_pred_mode0_list_index | ae (v) |
| sawp_pred_mode0_index | ae (v) |
| }else{ | |

(continued)

| sawp_pred_mode0_mpm_index | |
|---|---|
| } | |

In some embodiments, when the prediction mode list includes a combined prediction mode list (the combined prediction mode list is obtained by combining a weight prediction mode in the weight prediction mode list and an intra prediction mode in the intra prediction mode list (for example, the intra prediction mode list may include the first intra prediction mode list and the second intra prediction mode list)), the prediction mode index of the current block includes a combined prediction mode index of the current block. The weight prediction mode index and the intra prediction mode index (for example, the intra prediction mode index may include a first intra prediction mode index and a second intra prediction mode index) of the current block may be determined from the prediction mode list according to the combined prediction mode index of the current block.

The content of operation S1202 describes a case of parsing the prediction mode indication information of the current block in the video stream. Next, a decoding scheme of the prediction mode indication information is described. A decoding scheme used for the prediction mode indication information may include any one of the following:

First: variable-length decoding is performed on all or a part of the information. For example, k-order exponential Golomb decoding is used, decoding of truncated unary code is used, or decoding of truncated binary code is used.

Second: fixed-length decoding is performed on all or a part of the information.

Third: the prediction mode indication information includes a prefix and a suffix, and different decoding schemes are used for the prefix and the suffix. The third case may include any one of the following:

1. A prefix of an index in the prediction mode indication information is a group number, a suffix is an intra-group index, and different decoding schemes are used for the group number and the intra-group index.

Assuming that a total quantity of prediction modes obtained through decoding is sig_mode (sig_mode is less than or equal to a total quantity of prediction modes), sig_mode is coded through group coding. Assuming that each group has sig_divisor elements, there are a total of sig_group = Ceil (sig_mode / sig_divisor) groups. A total quantity of modes sig_mode obtained through decoding and a grouping manner (for example, a quantity of elements in each group or a quantity of groups) may be indicated in high-layer syntax (for example, a sequence header, a picture header, or a slice header).

For example, for the weight prediction mode, a quantity of weight prediction modes is 56, and a total quantity of decoding prediction modes is 56. The total quantity of decoding prediction modes is divided into 7 groups, and each group includes 8 weight prediction modes. A group number is decoded by using truncated unary code, and an intra-group index is decoded by using truncated binary code. Alternatively, the group number is decoded by using context-based binary, and the intra-group index is decoded by using a bypass mode. For another example, for the weight prediction mode, a quantity of weight prediction modes is 56, and a total quantity of decoding prediction modes is 28. The total quantity of decoding prediction modes is divided into 7 groups, and each group includes 4 weight prediction modes. A group number is decoded by using truncated unary code, and an intra-group index is decoded by using truncated binary code. Alternatively, the group number is decoded by using context-based binary, and the intra-group index is decoded by using a bypass mode.

2. An index in the prediction mode indication information is a binary string, a prefix of the index in the prediction mode indication information is a part of the index of a binary bit before a target bit (th), and a suffix of the index in the prediction mode indication information is the remaining part (that is, a part of the index of a binary bit in the target bit and after the target bit). For example, a part of index whose binary bits are before a target bit (th) is decoded by using context-based binary, and the remaining index whose binary bits are in the target bit and after the target bit is decoded by using a bypass mode.

S1203: Sort a prediction mode list to obtain a sorted prediction mode list if the coding scheme indication information indicates that a coding scheme of the current block is a sorted coding scheme.

The prediction mode list includes multiple prediction modes and a prediction mode index corresponding to each prediction mode. In the sorted prediction mode list, a prediction mode with a higher probability of being used for the current block corresponds to a smaller prediction mode index.

Not all prediction modes in the prediction mode list may be used for the current block. Therefore, the entire prediction mode list does not need to be sorted, and the available prediction mode list may be determined from the prediction mode list. The available prediction mode list refers to a list including prediction modes that are included in all

prediction modes of the prediction mode list and that may be used for the current block. The available prediction mode list is sorted, to obtain a sorted prediction mode list. Operation S1203 may include sub-operation s11 to sub-operation s12: s11: Determine an available prediction mode list from the prediction mode list.

The prediction mode list may include a weight prediction mode list and N intra prediction mode lists. For any prediction mode list (the weight prediction mode list or any intra prediction mode list), a manner of determining an available prediction mode list from the prediction mode list may include any one of the following:

(1) Determine the available prediction mode list from the prediction mode list according to available indication information obtained by parsing the video stream. For example, for the weight prediction mode list, the available indication information may be a weight prediction mode list index (sawp_list_index) of the current block, and a weight prediction mode list corresponding to the weight prediction mode list index of the current block is an available weight prediction mode list of multiple weight prediction mode lists. For another example, for the first intra prediction mode list, the available indication information may be a first intra prediction mode list index (sawp_pred_mode0_list_index) of the current block, and a first intra prediction mode list corresponding to the first intra prediction mode list index (sawp_pred_mode0_list_index) of the current block is an available first intra prediction mode list of multiple first intra prediction mode lists.

(2) Determine an available prediction mode list in the prediction mode list according to an available determining rule, where the available determining rule is agreed on by the coding device and the decoding device.

(3) Determine the available prediction mode list from the prediction mode list according to a prediction mode index satisfying an available condition in the prediction mode list.

Specifically, the prediction mode indexes in the prediction mode list can be divided into different groups. That the prediction mode index in the prediction mode list satisfies the available condition means: a sequence number of a group to which the prediction mode index in the prediction mode list belongs is an available sequence number. A grouping manner may include any one of the following:
a. Given a preset value, calculate a quotient between a prediction mode index in the prediction mode index list and the preset value, and classify prediction mode indexes whose quotients are the same into the same group. Assuming a preset value d and target values T = {t1, t2, ..., tn}, a list of Floor(mode_index / d)= ti (i∈[0,n]) is derived, where mode_index represents a prediction mode index. For example, when the prediction mode index (mode_index) is a weight prediction mode index (sawp_index), the weight prediction mode list includes 56 weight prediction modes, and weight prediction mode indexes of the 56 weight prediction modes are 56 integers from 0 to 55. Assuming d = 8 and T = {0, 1, 2, 3, 4, 5, 6}, 7 groups of lists may be obtained, as shown in the following Table 28:

Table 28

| Sequence number | List | | | | | | | |
|---|---|---|---|---|---|---|---|---|
| 0 | 0 | 1 | 2 | 3 | 4 | 5 | 6 | 7 |
| 1 | 8 | 9 | 10 | 11 | 12 | 13 | 14 | 15 |
| 2 | 16 | 17 | 18 | 19 | 20 | 21 | 22 | 23 |
| 3 | 24 | 25 | 26 | 27 | 28 | 29 | 30 | 31 |
| 4 | 32 | 33 | 34 | 35 | 36 | 37 | 38 | 39 |
| 5 | 40 | 41 | 42 | 43 | 44 | 45 | 46 | 47 |
| 6 | 48 | 49 | 50 | 51 | 52 | 53 | 54 | 55 |

For example, in the list shown in the foregoing Table 28, the available sequence number is 6, that is, weight prediction modes corresponding to the weight prediction mode indexes 48, 49, 50, 51, 52, 53, 54, and 55 may be used as weight prediction modes in the available weight prediction mode list.
b. Given a preset value, calculate a modulo between a prediction mode index in the prediction mode index list and the preset value, and classify prediction mode indexes with the same modulo into the same group. Assuming a preset value d and target values T = {t1, t2, ..., tn}, a list of mode_index % d= ti (i∈[0,n]) is derived, where mode_index represents a prediction mode index. For example, when the prediction mode index (mode_index) is a weight prediction mode index (sawp_index), the weight prediction mode list includes 56 weight prediction modes, and weight prediction mode indexes of the 56 weight prediction modes are 56 integers from 0 to 55. Assuming d = 8 and T = {0, 1, 2, 3, 4, 5, 6, 7}, 8 groups of lists

may be obtained, as shown in the following Table 29:

Table 29

| Sequence number | List | | | | | | |
|---|---|---|---|---|---|---|---|
| 0 | 0 | 8 | 16 | 24 | 32 | 40 | 48 |
| 1 | 1 | 9 | 17 | 25 | 33 | 41 | 49 |
| 2 | 2 | 10 | 18 | 26 | 34 | 42 | 50 |
| 3 | 3 | 11 | 19 | 27 | 35 | 43 | 51 |
| 4 | 4 | 12 | 20 | 28 | 36 | 44 | 52 |
| 5 | 5 | 13 | 21 | 29 | 37 | 45 | 53 |
| 6 | 6 | 14 | 22 | 30 | 38 | 46 | 54 |
| 7 | 7 | 15 | 23 | 31 | 39 | 47 | 55 |

For example, in the list shown in the foregoing Table 29, the available sequence number is 6, that is, weight prediction modes corresponding to the weight prediction mode indexes 6, 14, 22, 30, 38, 46, and 54 may be used as weight prediction modes in the available weight prediction mode list.

For (3) in sub-operation s11, the prediction mode index in the prediction mode list may be an original prediction mode index or an adjusted prediction mode index. For example, for the intra prediction mode list, the original intra prediction mode list may include 66 intra prediction modes, and 66 integers ranging from 0 to 65 may be used to set intra prediction mode indexes of the 66 intra prediction modes. Besides, in this application, the intra prediction mode list may be set by using 26 intra prediction modes in the original intra prediction mode list. For the intra prediction mode in the intra prediction mode list in this application, an intra prediction mode index in an original intra prediction mode list (that is, an original intra prediction mode index) may be used. Alternatively, for the intra prediction modes in the intra prediction mode list in this application, intra prediction mode indexes (that is, adjusted intra prediction mode indexes) of the 26 intra prediction modes may be reset by using 26 integers ranging from 0 to 25.

Particularly, for the weight prediction mode list, there may be multiple weight prediction mode lists, and the multiple weight prediction mode lists belong to different weight prediction mode types. When determining an available weight prediction mode list from the weight prediction mode lists, the available weight prediction mode list may be separately determined from weight prediction mode lists of different weight prediction mode types. For example, the weight prediction mode list may include a weight angle prediction mode list and a reference weight configuration list, the weight angle prediction mode list includes 8 weight angle prediction modes, and the reference weight configuration list includes 7 reference weight configuration modes. An available prediction mode list may be respectively derived from the weight angle prediction mode list and the reference weight configuration list.

Particularly, for the intra prediction mode list, a manner of determining the available prediction mode list in the prediction mode list may further include: determining the available intra prediction mode list in the intra prediction mode list according to an adjacent reconstructed block (the adjacent reconstructed block is a picture block that is adjacent to the current block in the picture to which the current block belongs and whose corresponding decoded picture block has been reconstructed) of the current block or a weight prediction mode of the current block. For example, for the first intra prediction mode list, a total of 26 first intra prediction modes are preset (first intra prediction mode indexes of the first intra prediction modes are coded as 5 to 30). An MPM list 1 (including two first intra prediction modes) may be derived according to an adjacent reconstructed block of the current block or a weight prediction mode of the current block. The remaining 24 first intra prediction modes are used as available first intra prediction modes, and corresponding first intra prediction mode indexes may be numbered as 0 to 23, and are classified into 4 groups according to mode_index / d = ti, where d = 6, and ti = {0, 1, 2, 3}. Therefore, a total of 5 groups of lists are obtained.

In addition, for the intra prediction mode list, the intra prediction mode list may include a first intra prediction mode list and a second intra prediction mode list. If the first intra prediction mode of the current block is determined in the first intra prediction mode list, a manner of determining an available second intra prediction mode list in the second intra prediction mode list may include: after deleting the first intra prediction mode of the current block from the second intra prediction mode list, determining an available second prediction mode list in the second intra prediction mode list obtained after the deletion. That is, the second intra prediction mode list does not include the first intra prediction mode of the current block.

s12: Sort the available prediction mode list to obtain the sorted prediction mode list.

After available prediction mode lists are determined from the prediction mode list, not all available prediction mode lists need to be sorted. Therefore, a first prediction mode list that needs to be sorted and a second prediction mode list that does not need to be sorted may be determined from the available prediction mode lists, and the first prediction

mode list that needs to be sorted is sorted, to obtain a sorted first prediction mode list. For example, the prediction mode list may include a weight prediction mode list, a first intra prediction mode list, and a second intra prediction mode list. The weight prediction list may be sorted, and the first intra prediction mode list and the second intra prediction mode list are not sorted. Alternatively, the weight prediction mode list, the first intra prediction mode list, and the second intra prediction mode list may all be sorted. In some embodiments, the weight prediction mode list may include a weight angle prediction mode list, a reference weight configuration list, and a weight blend area list, and the weight angle prediction mode list, the reference weight configuration list, or the weight blend area list may be separately sorted.

Before the sorting, an availability check may be performed on the sorted coding scheme (that is, the DAWP mode) of the current block, to confirm availability of the sorted coding scheme of the current block. If the sorted coding scheme of the current block is available, the first prediction mode list that needs to be sorted and the second prediction mode list that does not need to be sorted may be determined from the available prediction mode list, and the first prediction mode list that needs to be sorted is sorted. If the sorted coding scheme of the current block is not available, no sorting needs to be performed, and the prediction mode of the current block may be determined from the available prediction mode list according to the prediction mode index of the current block.

The availability check may include at least one of the following: First. If a sample for determining the current block template corresponding to the current block has been constructed, it may be determined that the sorted coding scheme of the current block is available. The sample for determining the current block template corresponding to the current block may include at least one of the following: a sample on the left of the current block and a sample above the current block. Second. It may be determined that the sorted coding scheme of the current block is available if a size of the current block satisfies a size condition. Third. If a picture component of the current block satisfies a component condition, it may be determined that the sorted coding scheme of the current block is available. For example, if a chrominance component of the current block satisfies a component condition, it may be determined that the sorted coding scheme of the current block is available.

In some embodiments, the determining availability of the sorted coding scheme of the current block may alternatively be performed before the parsing the prediction mode indication information of the current block in the video stream. In this case, the availability of the sorted coding scheme of the current block is related to a decoding scheme of the prediction mode indication information of the current block in the video stream. For example, if the sorted coding scheme of the current block is available, a variable-length code decoding scheme may be used when parsing the prediction mode indication information of the current block in the video stream; or if the sorted coding scheme of the current block is not available, a fixed-length code decoding scheme may be used when parsing the prediction mode indication information of the current block in the video stream.

Next, a manner of sorting the first prediction mode list that needs to be sorted is described. The first prediction mode list that needs to be sorted may include a weight prediction mode list. Alternatively, the first mode list that needs to be sorted may include a weight prediction mode list, a first intra prediction mode list, and a second intra prediction mode list. Sorting manners of the two cases are respectively described below.

When the first prediction mode list that needs to be sorted includes a weight prediction mode list, a process of sorting the first prediction mode list that needs to be sorted may include the following operation 1 to operation 4:

1. Obtain the current block template corresponding to the current block.

The current block template corresponding to the current block refers to reconstructed samples (or may be referred to as pixels) around the current block. The current block template may be determined in a reconstructed area around the current block. As shown in FIG. 13a, the current block template may include at least one of the following: First. One or more rows of samples located above the current block in the reconstructed area. For example, the current block template is M (M is an integer greater than 1) rows of samples located above (for example, which may include the upper left, the upper right, and both the upper left and the upper right) the current block, where a width and a height are (tw0, th0). Second. One or more columns of samples located on the left of the current block in the reconstructed area. For example, the current block template is M (M is an integer greater than 1) columns of samples located on the left of (for example, which may include the upper left, the lower left, and both the upper left and the lower left) the current block, where a width and a height are (tw1, th1). Third. The current block template is sampled at a fixed interval in the reconstructed area. For example, the current block template is sampled at a fixed interval, for example, sampled at an interval of one row (or column). Fourth. Samples located on the left of and above the current block in the reconstructed area. For example, samples both on the left of and above the current block may be used. For example, the current block template is a row of samples above the current block and a column of samples on the left of the current block. The width and height of the current block template are the same as the width and height of the current block.

In some embodiments, correction processing may be performed on the samples in the current block template. The correction processing may include, but is not limited to, at least one of the following: filtering, linear mapping, non-linear mapping, and the like.

2. Determine predicted values of the current block template in different weight prediction modes in the weight prediction mode list.

A process of determining a predicted value of the current block template in any weight prediction mode may include:

(1) determining a weight template of the current block template in the weight prediction mode:
The determining a weight template of the current block template in the combined prediction mode may include any one of the following:
A. Derive the weight template of the current block template according to the weight prediction mode. A relative location relationship between the current block template and the current block needs to be considered.

This case may include any one of the following:

① Derive a weight matrix of the current block template according to the weight prediction mode; and determine the weight template of the current block template according to the weight matrix and a weight threshold. For example, a weight threshold may be set, a weight greater than or equal to the weight threshold in the weight matrix is set to 1, and a weight less than the weight threshold is set to 0.

② Derive a weight matrix of the current block template according to the weight prediction mode. A division central position (cp) of the weight matrix is determined according to a weight prediction angle mode and a reference weight configuration mode, a projection position (tp) of each sample in the weight matrix in the weight prediction angle mode is determined; and the weight matrix may be adjusted according to a relationship between the division central position and the projection position, to obtain the weight template of the current block template in the weight prediction mode, where the weight prediction mode may include the weight prediction angle mode and the reference weight configuration mode.

Further, the adjusting the weight matrix according to the relationship between the division central position and the projection position, to obtain a weight template of the current block template in the weight prediction mode may include: if tp < cp, a weight of a sample corresponding to the current block template is a first value; otherwise, the weight is a second value. Setting of the first value and the second value is related to precision of the weight. When the weight is the first value, the predicted value of the current block template is equal to the second intra-frame predicted value, and when the weight is the second value, the predicted value of the current block template is equal to the first intra-frame predicted value. For example, for a weighted prediction formula Pred=P0*w+P1*(1-w), the first value is 0 and the second value is 1. For a weighted prediction formula Pred=(P0*w+P1*(8-w))/8, the first value is 0 and the second value is 8. For a weighted prediction formula Pred=(P0*w +P1*(32-w))/32, the first value is 0 and the second value is 32.

B. Weight templates of the current block template in different combined prediction modes are cached, and the weight template of the current block template in the combined prediction mode may be directly initialized from the cache.

(2) Determine an available intra prediction mode list according to the weight prediction mode.

Specifically, a most probable mode list (an MPM list) and a non-most probable mode list (a non-MPM list) may be derived according to the weight prediction mode. The available intra prediction mode list may be determined in the most probable mode list (the MPM list) and the non-most probable mode list (the non-MPM list).

If an MPM list indication flag (sawp_pred_mode0_is_mpm) in the video stream indicates that the intra prediction mode belongs to the MPM list (for example, sawp_pred_mode0_is_mpm is 1), it may be determined that the MPM list is the available intra prediction mode list.

If the MPM list indication flag (sawp_pred_mode0_is_mpm) in the video stream indicates that the intra prediction mode belongs to the non-MPM list (for example, sawp_pred_mode0_is_mpm is 1), the available intra prediction mode list may be determined from the non-MPM list according to the intra prediction mode list index of the current block in the video stream. For example, an available first intra prediction mode list may be determined from the non-MPM list according to a first intra prediction mode list index (sawp_pred_mode0_list_index) of the current block, and an available second intra prediction mode list may be determined from the non-MPM list according to a second intra prediction mode list index (sawp_pred_mode1_list_index) of the current block.

(3) Determine an intra prediction mode of the current block template in the available intra prediction mode list.

Specifically, the intra prediction mode of the current block template may be determined in the available intra prediction mode list according to the intra prediction mode index of the current block.

For example, when the available prediction mode list is the MPM list, a first intra prediction mode of the current block template may be determined from the MPM list according to a first intra prediction mode index (sawp_pred_mode0_mpm_index) of the current block, and a second intra prediction mode of the current block template may be determined from the MPM list according to a second intra prediction mode index (sawp_pred_mode1_mpm_index) of the current

block.

For another example, when the available prediction mode list is the non-MPM list, the first intra prediction mode of the current block template may be determined in the available first intra prediction mode list according to the first intra prediction mode index (sawp_pred_mode0_index) of the current block, and the second intra prediction mode of the current block template may be determined in the available second intra prediction mode list according to the second intra prediction mode index (sawp_pred_mode1_index) of the current block.

(4) Determine an intra-frame predicted value of the current block template according to the intra prediction mode of the current block template.

The determining the intra-frame predicted value of the current block template in the combined prediction mode may include any one of the following:

A. A manner of determining a location of a prediction template, and deriving an intra-frame predicted value of the current block template according to an intra prediction mode forming a combined prediction mode may include:

① Determine a location of a prediction template of a current block template.
The location of the prediction template may correspond to the location of the current block template. Alternatively, the location of the prediction template may not correspond to the location of the current block template. For example, to reduce complexity, a prediction template located in the current block may be used.

② Determine, according to the location of the prediction template, a reference sample for performing intra prediction on the current block template.
In some embodiments, correction processing may be performed on the reference sample. The correction processing may include, but is not limited to, filtering, linear mapping, non-linear mapping, and the like.

③ Derive an intra-frame predicted value of the current block template according to the intra prediction mode of the current block template and a reference sample.

Specifically, the predicted value of the current block template may be derived according to the reference sample by using a specified intra-frame interpolation filter. For example, a bilinear interpolation filter may be used. For another example, any one of all available intra-frame interpolation filters supported by SAWP may be used.

Alternatively, the predicted value of the current block template may be derived according to the reference sample by using an intra-frame interpolation filter that is the same as that of the current block. If multiple intra-frame interpolation filters may be used to derive the intra-frame predicted value for the current block, one of the intra-frame interpolation filters may be used to derive the intra-frame predicted value. For example, intra-frame interpolation filters used for the reference sample may be sorted (for example, sorted in ascending order) according to a location (including a horizontal coordinate, a vertical coordinate, or a straight line) of the reference sample, and an $i^{th}$ intra-frame interpolation filter is used.

B. Directly derive the intra-frame predicted value of the current block template in the weight prediction mode from the cache, where intra-frame predicted values of the current block template in different weight prediction modes have been cached.

In a process of determining the intra-frame predicted value of the current block template in the combined prediction mode, if the intra prediction mode index is an adjusted intra prediction mode index, the corresponding intra prediction mode index needs to be derived. For example, there are a total of 66 intra prediction modes, and only 26 of the modes can be used in the SAWP. The 26 modes are divided into 2 lists, a first list is an MPM list, and other modes form a second list. If the sorted coding scheme is used in the second list, a specifically used intra prediction mode needs to be determined in the second list according to the adjusted intra prediction mode index.

(5) Perform weighted prediction on the intra-frame predicted value according to the weight template, to obtain a predicted value of the current block template in the weight prediction mode.

After the weight template of the current block template in the weight prediction mode is determined and the intra-frame predicted value of the current block template in the weight prediction mode is determined, weighted prediction may be performed on the intra-frame predicted value according to the weight template, to obtain the predicted value of the current block template in the weight prediction mode.

3. Determine cost information of the current block template in the different weight prediction modes according to differences between the predicted values of the current block template in the different weight prediction modes and a reconstructed value of the current block template.

Cost information in any weight prediction mode may be used to indicate a possibility that the weight prediction mode is used for the current block. Lower cost information indicates a higher possibility. Otherwise, higher cost information indicates a lower possibility. Specifically, the difference between the predicted value of the current block template and the reconstructed value of the current block template may include any one of the following: First. A sum of absolute differences (SAD) between the predicted value of the current block template and the reconstructed value of the current block template.

The SAD between the predicted value of the current block template and the reconstructed value of the current block template is determined as the cost information. Second. A sum of squared errors (SSE) between the predicted value of the current block template and the reconstructed value of the current block template. The SSE between the predicted value of the current block template and the reconstructed value of the current block template is determined as the cost information. Third. A mean-removed sum of absolute differences (MR-SAD) between the predicted value of the current block template and the reconstructed value of the current block template. The MR-SAD between the predicted value of the current block template and the reconstructed value of the current block template is determined as the cost information.

In some embodiments, the difference between the predicted value of the current block template and the reconstructed value of the current block template is specifically calculated according to differences between predicted values of samples in the current block template and reconstructed values of the corresponding samples in the current block template. The difference between the predicted value of the current block template and the reconstructed value of the current block template may be calculated according to a difference that is less than a difference threshold and that is of the differences between the predicted values of the samples in the current block template and the reconstructed values of the corresponding samples in the current block template.

4. Sort the first prediction mode list (that is, the weight prediction mode list) based on the cost information of the current block template in the different weight prediction modes.

Operation 1 to operation 4 describe a sorting case in which only the weight prediction mode list needs to be sorted. Next, a case in which the weight prediction mode list, the first intra prediction mode list, and the second intra prediction mode list need to be sorted is described. Prediction modes in the first prediction mode list that needs to be sorted are combined to obtain multiple combined prediction modes. For example, the first prediction mode list that needs to be sorted may include a weight prediction mode list, a first intra prediction mode list, and a second intra prediction mode list, the weight prediction mode list may include 56 weight prediction modes, the first intra prediction mode list may include 26 first intra prediction modes, and the second intra prediction mode list may include 26 second intra prediction modes. The weight prediction modes in the weight prediction mode list, the first intra prediction modes in the first intra prediction mode list, and the second intra prediction modes in the second intra prediction mode list are combined to obtain 56 * 26 * 26 combined prediction modes.

The sorting principle may roughly include: determining cost information of the current block template in different combined prediction modes according to differences between predicted values of the current block template corresponding to the current block in the different combined prediction modes and reconstructed values of the current block template; and sorting, according to the cost information of the current block template in the different combined prediction modes, the first prediction mode list that needs to be sorted. A sorting principle may specifically include the following operation 1 to operation 4:

1. Obtain the current block template corresponding to the current block.
A manner of obtaining the current block template corresponding to the current block is the same as the manner of obtaining the corresponding current block template of the current block in the case in which only the weight prediction mode list is sorted. Details are not described herein again. For details, refer to the manner of obtaining the corresponding current block template of the current block in the case in which only the weight prediction mode list is sorted.

2. Determine predicted values of the current block template in different combined prediction modes.
A process of determining a predicted value of the current block template in any combined prediction mode may include:

(1) Determine a weight template of the current block template in the combined prediction mode:
The determining a weight template of the current block template in the combined prediction mode may include any one of the following:
A. Derive the weight template of the current block template according to a weight prediction mode included in the combined prediction mode. A relative location relationship between the current block template and the current block needs to be considered.

This case may include any one of the following:

① Derive the weight matrix according to the weight prediction mode included in the combined prediction mode, and determine the weight template of the current block template according to the weight matrix and the weight threshold. For example, a weight threshold may be set, a weight greater than or equal to the weight threshold in the weight matrix is set to 1, and a weight less than the weight threshold is set to 0.

② Derive the weight matrix according to the weight prediction mode included in the combined prediction mode. A division central position (cp) of the weight matrix is determined according to a weight prediction angle mode and a reference weight configuration mode, a projection position (tp) of each sample in the weight matrix in the weight prediction angle mode is determined; and the weight matrix may be adjusted according to a relationship between the division central position and the projection position, to obtain the weight template of the current block template in the combined prediction mode, where the weight prediction mode included in the combined prediction mode may include the weight prediction angle mode and the reference weight configuration mode. For example, if tp < cp, a weight of a sample corresponding to the current block template is 0; otherwise, the weight is 1.

B. Weight templates of the current block template in different combined prediction modes are cached, and the weight template of the current block template in the combined prediction mode may be directly initialized from the cache.

(2) Determine an intra-frame predicted value of the current block template in the combined prediction mode.

The determining the intra-frame predicted value of the current block template in the combined prediction mode may include any one of the following:

A. Determine a location of a prediction template, and derive an intra-frame predicted value of the current block template according to an intra prediction mode forming a combined prediction mode, which may include:

① Determine a location of a prediction template of a current block template.

The location of the prediction template may correspond to the location of the current block template. Alternatively, the location of the prediction template may not correspond to the location of the current block template. For example, to reduce complexity, a prediction template located in the current block may be used.

② Determine, according to the location of the prediction template, a reference sample for performing intra prediction on the current block template.

In some embodiments, correction processing may be performed on the reference sample. The correction processing may include, but is not limited to, filtering, linear mapping, non-linear mapping, and the like.

③ Derive an intra-frame predicted value of the current block template according to the intra prediction mode included in the combined prediction mode and the reference sample.

Specifically, the MPM list may be determined according to the weight prediction mode included in the combined prediction mode, and the intra prediction mode included in the combined prediction mode is adjusted according to the MPM list, to obtain the adjusted intra prediction mode. The intra-frame predicted value of the current block template may be derived according to the adjusted intra prediction mode and the reference sample.

The deriving the intra-frame predicted value of the current block template according to the adjusted intra prediction mode and the reference sample may include: deriving the predicted value of the current block template according to the reference sample by using a specified intra-frame interpolation filter. For example, a bilinear interpolation filter may be used. For another example, any one of all available intra-frame interpolation filters supported by SAWP may be used.

Alternatively, the predicted value of the current block template may be derived according to the reference sample by using an intra-frame interpolation filter that is the same as that of the current block. If multiple intra-frame interpolation filters may be used to derive the intra-frame predicted value for the current block, one of the intra-frame interpolation filters may be used to derive the intra-frame predicted value. For example, intra-frame interpolation filters used for the reference sample may be sorted (for example, sorted in ascending order) according to a location (including a horizontal coordinate, a vertical coordinate, or a straight line) of the reference sample, and an $i^{th}$ intra-frame interpolation filter is used.

B. Directly derive the intra-frame predicted value of the current block template in the combined prediction mode from the cache, where intra-frame predicted values of the current block template in different combined prediction modes have been cached.

In a process of determining the intra-frame predicted value of the current block template in the combined prediction mode, if the intra prediction mode index is an adjusted intra prediction mode index, the corresponding intra prediction mode index needs to be derived. For example, there are a total of 66 intra prediction modes, and only 26 of the modes can be used in the SAWP. The 26 modes are divided into 2 lists, a first list is an MPM list, and other modes form a second list. If the sorted coding scheme is used in the second list, a specifically used intra prediction mode needs to be determined in the second list according to the adjusted intra prediction mode index.

(3) Perform weighted prediction on the intra-frame predicted value according to the weight template, to obtain a predicted value of the current block template in the combined prediction mode.

After the weight template of the current block template in the combined prediction mode is determined and the intra-frame predicted value of the current block template in the combined prediction mode is determined, weighted

prediction may be performed on the intra-frame predicted value according to the weight template, to obtain the predicted value of the current block template in the combined prediction mode. For example, the combined prediction mode may be obtained by combining a weight prediction mode 1, a first intra prediction mode 1, and a second intra prediction mode 1. That is, the weight template of the current block template in the combined prediction mode is a weight template of the current block template in the weight prediction mode 1. The intra-frame predicted value of the current block template in the combined prediction mode may include an intra-frame predicted value of the current block template in the first intra prediction mode 1, and an intra-frame predicted value of the current block template in the second intra prediction mode 1. Weighted prediction may be performed on the intra-frame predicted value in the first intra prediction mode 1 and the intra-frame predicted value in the second intra prediction mode 1 according to the weight template in the weight prediction mode 1, to obtain a predicted value of the current block template in the combined prediction mode.

3. Determine cost information of the current block template in the different combined prediction modes according to differences between the predicted values of the current block template in the different combined prediction modes and a reconstructed value of the current block template.

Cost information in any combined prediction mode may be used to indicate a possibility that the combined prediction mode is used for the current block. Lower cost information indicates a higher possibility. Otherwise, higher cost information indicates a lower possibility. Specifically, the difference between the predicted value of the current block template and the reconstructed value of the current block template may include any one of the following: First. A sum of absolute differences (SAD) between the predicted value of the current block template and the reconstructed value of the current block template. The SAD between the predicted value of the current block template and the reconstructed value of the current block template is determined as the cost information. Second. A sum of squared errors (SSE) between the predicted value of the current block template and the reconstructed value of the current block template. The SSE between the predicted value of the current block template and the reconstructed value of the current block template is determined as the cost information. Third. A mean-removed sum of absolute differences (MR-SAD) between the predicted value of the current block template and the reconstructed value of the current block template. The MR-SAD between the predicted value of the current block template and the reconstructed value of the current block template is determined as the cost information.

In some embodiments, the difference between the predicted value of the current block template and the reconstructed value of the current block template is specifically calculated according to differences between predicted values of samples in the current block template and reconstructed values of the corresponding samples in the current block template. The difference between the predicted value of the current block template and the reconstructed value of the current block template may be calculated according to a difference that is less than a difference threshold and that is of the differences between the predicted values of the samples in the current block template and the reconstructed values of the corresponding samples in the current block template.

4. Sort the first prediction mode list based on the cost information of the current block template in the different combined prediction modes.

When the first prediction mode list that needs to be sorted includes a weight prediction mode list, a first intra prediction mode list, and a second intra prediction mode list, R weight prediction modes in the weight prediction mode list, P first intra prediction modes in the first intra prediction mode list, and Q second intra prediction modes in the second intra prediction mode list may be combined to obtain R * P * Q combined prediction modes. Cost information in the R * P * Q combined prediction modes forms a cost list (cost_list). The sorting the first prediction mode list based on the cost information of the current block template in the different combined prediction modes may include:

(1) The weight prediction mode list (sawp_list) is sorted according to the cost list (cost_list), to obtain a sorted weight prediction mode list (sorted_sawp_list).

Specifically, each weight prediction mode in the weight prediction mode list corresponds to multiple pieces of cost information in the cost list, and smallest cost information of the multiple pieces of cost information corresponding to each weight prediction mode may be determined as sorted cost information of the weight prediction mode. The weight prediction mode list may be sorted in ascending order according to sorted cost information of the weight prediction modes in the weight prediction mode list, to obtain the sorted weight prediction mode list.

For example, the weight prediction mode list includes 3 weight prediction modes A1, A2, and A3, the first intra prediction mode list may include 2 first intra prediction modes B1 and B2, and the second intra prediction mode list may include 2 second intra prediction modes C1 and C2. The 3 weight prediction modes, the 2 first intra prediction modes, and the 2 second intra prediction modes may form 12 combined prediction modes. A cost list (cost_list) formed by the cost information in the 12 combined prediction modes is shown in the following Table 30:

Table 30

| Combined prediction mode | Cost information |
|---|---|
| A1 B1 C1 | 0.15 |
| A1 B1 C2 | 0.27 |
| A1 B2 C1 | 0.12 |
| A1 B2 C2 | 0.08 |
| A2 B1 C1 | 0.35 |
| A2 B1 C2 | 0.29 |
| A2 B2 C1 | 0.18 |
| A2 B2 C2 | 0.16 |
| A3 B1 C1 | 0.17 |
| A3 B1 C2 | 0.38 |
| A3 B2 C1 | 0.42 |
| A3 B2 C2 | 0.23 |

In the foregoing Table 30, smallest cost information 0.08 of 4 pieces of cost information corresponding to the weight prediction mode A1 may be determined as sorted cost information 0.08 of the weight prediction mode A1. Similarly, sorted cost information 0.16 of the weight prediction mode A2 and sorted cost information 0.17 of the weight prediction mode A3 may be determined. The weight prediction mode list may be sorted in ascending order according to sorted cost information of the 4 weight prediction modes, to obtain the sorted weight prediction mode list, as shown in the following Table 31:

Table 31

| Weight prediction mode | Sorted cost information |
|---|---|
| A1 | 0.08 |
| A2 | 0.16 |
| A3 | 0.17 |

The prediction mode index of the current block obtained by parsing the video stream may include a weight prediction mode index of the current block, a first intra prediction mode index of the current block, and a second intra prediction mode index of the current block. After the sorted weight prediction mode list is obtained, the weight prediction mode (final_sawp_mode) of the current block may be determined in the sorted weight prediction mode list according to the weight prediction mode index of the current block.

(2) Determine, from the cost list, a first cost list (pred_mode0_cost_list) corresponding to the first intra prediction mode list, and sort the first intra prediction mode list according to the first cost list, to obtain a sorted first intra prediction mode list (sorted_pred_mode0_list).

A manner of determining the first cost list (pred_mode0_cost_list) may include: determining, according to cost information of a first combined prediction mode in the cost list after the weight prediction mode of the current block is determined in the sorted weight prediction mode list, the first cost list corresponding to the first intra prediction mode list; where a weight prediction mode included in the first combined prediction mode is the weight prediction mode of the current block. That is, the first cost list (pred_mode0_cost_list) may include cost information that is in the cost list (cost_list) and that is in a combined prediction mode whose weight prediction mode is the weight prediction mode (final_sawp_mode) of the current block.

Specifically, each first intra prediction mode in the first intra prediction mode list corresponds to multiple pieces of cost information in the first cost list, and smallest cost information of the multiple pieces of cost information corresponding to each first intra prediction mode may be determined as sorted cost information of the first intra prediction mode. The first intra prediction mode list may be sorted in ascending order according to sorted cost information of the first intra prediction modes in the first intra prediction mode list, to obtain the sorted first intra prediction mode list.

For example, if the weight prediction mode of the current block is the weight prediction mode A1, the first cost list is shown in the following Table 32:

Table 32

| First intra prediction mode | Cost information |
|---|---|
| B1 | 0.15 |
| B1 | 0.27 |
| B2 | 0.12 |
| B2 | 0.08 |

In the foregoing Table 32, smallest cost information 0.15 of the 2 pieces of cost information corresponding to the first intra prediction mode B1 may be determined as sorted cost information 0.15 of the first intra prediction mode B1. Similarly, sorted cost information 0.08 of the first intra prediction mode B2 may be determined. The first intra prediction mode list may be sorted in ascending order according to the sorted cost information of the 2 first intra prediction modes, to obtain the sorted first intra prediction mode list, as shown in the following Table 33:

Table 33

| First intra prediction mode | Sorted cost information |
|---|---|
| B2 | 0.08 |
| B1 | 0.15 |

After the sorted first intra prediction mode list is obtained, the first intra prediction mode (final_sawp_pred_mode0) of the current block may be determined in the sorted first intra prediction mode list based on the first intra prediction mode index of the current block.

(3) Determine, from the cost list, a second cost list (pred_mode1_cost_list) corresponding to the second intra prediction mode list, *a*nd sort the second intra prediction mode list according to the second cost list, to obtain a sorted second intra prediction mode list (pred_mode1_cost_list).

A manner of determining the second cost list (pred_mode1_cost_list) may include any one of the following:
First. Determine, according to cost information of the first combined prediction mode in the cost list after the weight prediction mode of the current block is determined in the sorted weight prediction mode list, the second cost list corresponding to the second intra prediction mode list; where the weight prediction mode included in the first combined prediction mode is the weight prediction mode of the current block. That is, the second cost list (pred_mode1_cost_list) may include cost information that is in the cost list (cost_list) and that is in a combined prediction mode whose weight prediction mode is the weight prediction mode (final_sawp_mode) of the current block.

Each second intra prediction mode in the second intra prediction mode list corresponds to multiple pieces of cost information in the second cost list, and smallest cost information of the multiple pieces of cost information corresponding to each second intra prediction mode may be determined as sorted cost information of the second intra prediction mode. The second intra prediction mode list may be sorted in ascending order according to sorted cost information of the second intra prediction modes in the second intra prediction mode list, to obtain the sorted second intra prediction mode list.

For example, if the weight prediction mode of the current block is the weight prediction mode A1, the second cost list is shown in the following Table 34:

Table 34

| Second intra prediction mode | Cost information |
|---|---|
| C1 | 0.15 |
| C2 | 0.27 |
| C1 | 0.12 |
| C2 | 0.08 |

In the foregoing Table 34, smallest cost information 0.12 of the 2 pieces of cost information corresponding to the second intra prediction mode C1 may be determined as sorted cost information 0.12 of the second intra prediction mode C1. Similarly, sorted cost information 0.08 of the second intra prediction mode C2 may be determined. The second intra prediction mode list may be sorted in ascending order according to the sorted cost information of the 2 second intra prediction modes, to obtain the sorted second intra prediction mode list, as shown in the following Table 35:

Table 35

| Second intra prediction mode | Sorted cost information |
|---|---|
| C2 | 0.08 |
| C1 | 0.12 |

After the sorted second intra prediction mode list is obtained, the second intra prediction mode (final_sawp_pred_mode1) of the current block may be determined in the sorted second intra prediction mode list based on the second intra prediction mode index of the current block.

Second. Determine, according to cost information of a second combined prediction mode in the cost list after the weight prediction mode of the current block is determined in the sorted weight prediction mode list and the first intra prediction mode of the current block is determined in the sorted first intra prediction mode list, the second cost list corresponding to the second intra prediction mode list; where a weight prediction mode included in the second combined prediction mode is the weight prediction mode of the current block, and the first intra prediction mode included in the second combined prediction mode is the first intra prediction mode of the current block. That is, the second cost list (pred_mode1_cost_list) may include cost information that is in the cost list (cost_list) and that is in a combined prediction mode whose weight prediction mode is the weight prediction mode (final_sawp_mode) of the current block and whose first intra prediction mode is the first intra prediction mode (final_sawp_pred_mode0) of the current block.

Each second intra prediction mode in the second intra prediction mode list corresponds to one piece of cost information in the second cost list, and the cost information corresponding to each second intra prediction mode may be determined as sorted cost information of the second intra prediction mode. The second intra prediction mode list may be sorted in ascending order according to sorted cost information of the second intra prediction modes in the second intra prediction mode list, to obtain the sorted second intra prediction mode list.

For example, if the weight prediction mode of the current block is the weight prediction mode A1 and the first intra prediction mode of the current block is B2, the second cost list is shown in the following Table 36:

Table 36

| Second intra prediction mode | Cost information |
|---|---|
| C1 | 0.12 |
| C2 | 0.08 |

In the foregoing Table 36, the cost information 0.12 corresponding to the second intra prediction mode C1 may be determined as sorted cost information 0.12 of the second intra prediction mode C1. Similarly, sorted cost information 0.08 of the second intra prediction mode C2 may be determined. The second intra prediction mode list may be sorted in ascending order according to the sorted cost information of the 2 second intra prediction modes, to obtain the sorted second intra prediction mode list, as shown in the following Table 37:

Table 37

| Second intra prediction mode | Sorted cost information |
|---|---|
| C2 | 0.08 |
| C1 | 0.12 |

After the sorted second intra prediction mode list is obtained, the second intra prediction mode (final_sawp_pred_mode1) of the current block may be determined in the sorted second intra prediction mode list based on the second intra prediction mode index of the current block.

S1204: Determine a prediction mode of the current block in the sorted prediction mode list according to the prediction mode index of the current block.

The available prediction mode list may include the first prediction mode list that needs to be sorted and the second prediction mode list that does not need to be sorted, the prediction mode index of the current block may include a first prediction mode index and a second prediction mode index, the first prediction mode index corresponds to the first prediction mode list, and the second prediction mode index corresponds to the second prediction mode list. After the first prediction mode list that needs to be sorted is sorted to obtain the sorted first prediction mode list, a first prediction mode of the current block may be determined in the sorted first prediction mode list according to the first prediction mode index; and

a second prediction mode of the current block may be determined in the second prediction mode list according to the second prediction mode index.

For example, when the first prediction mode list that needs to be sorted includes the weight prediction mode list, the first intra prediction mode list, and the second intra prediction mode list, the weight prediction mode of the current block may be determined in the sorted weight prediction mode list according to the weight prediction mode index of the current block, the first intra prediction mode of the current block may be determined in the sorted first intra prediction mode list according to the first intra prediction mode index of the current block, and the second intra prediction mode of the current block may be determined in the sorted second intra prediction mode list according to the second intra prediction mode index of the current block. In addition, the first prediction mode of the current block may be determined in a sorted process.

S1205: Predict the current block according to the prediction mode of the current block, to obtain a predicted value of the current block; the predicted value of the current block being used to reconstruct a decoded picture block of the current block.

After the first prediction mode of the current block is determined in the sorted first prediction mode list according to the first prediction mode index, and the second prediction mode of the current block is determined in the second prediction mode list according to the second prediction mode index, the current block may be predicted according to the first prediction mode and the second prediction mode, to obtain the predicted value of the current block.

For example, when the sorted first prediction mode list includes a weight prediction mode list and multiple intra prediction mode lists (for example, two intra prediction mode lists include the first intra prediction mode list and the second intra prediction mode list), a prediction mode used for the current block may include a weight prediction mode used for the current block and multiple intra prediction modes used for the current block. A prediction process of the current block may include: deriving a weight matrix of the current block according to the weight prediction mode used for the current block; deriving, based on each intra prediction mode used for the current block, an intra-frame predicted value of the current block in the intra prediction mode; and performing weighted prediction on the intra-frame predicted value of the current block in each intra prediction mode based on the weight matrix of the current block, to obtain the predicted value of the current block. The predicted value of the current block may be used to reconstruct a decoded picture block of the current block.

In the embodiments of this application, the prediction mode list is sorted when the coding scheme of the current block is the sorted coding scheme, so that in the sorted prediction mode list, a prediction mode with a higher probability of being used for the current block corresponds to a smaller prediction mode index value. In this way, the actual prediction mode index used for the current block has a smaller value, and less information can be coded when the prediction mode index of the current block is decoded from the video stream. This improves decoding efficiency of the prediction mode index of the current block, and improves video decoding efficiency.

In this embodiment of this application, the weight prediction mode may also be referred to as a spatial angular weighted prediction mode, and the weight prediction mode may also be referred to as a spatial angular weighted prediction mode index. The first intra prediction mode may be referred to as a first spatial angular weight prediction mode, and the first intra prediction mode index may be referred to as a first spatial angular weight prediction mode index. Other intra prediction modes are similar. In specific implementation, the weight prediction mode and the index thereof, and the intra prediction mode and the index thereof may also have other names. This is not limited in this embodiment of this application.

Next, a specific decoding example of a decoding end is provided:

First. Embodiment 1:

Embodiment 1 corresponds to a case in which only the weight prediction mode list is sorted and there is one weight prediction mode list. A decoding process may include:

1. Decode a video stream and determine whether a deriving method of an adaptive spatial angular weighted prediction mode (DAWP) is used for a current block:

1.1. The video stream includes a sequence header syntactic element that indicates whether a current sequence is derived by using the adaptive angular weighted mode (DAWP):

1.1.1. The stream includes two flags seq_sawp_flag and seq_dawp_flag that indicate an SAWP mode used for the current sequence (x indicates that decoding is not needed). Semantics are shown in the foregoing Table 7.

1.1.2. seq_dawp_flag may indicate whether an AWP mode and the SAWP mode are derived by using the adaptive angular weighted mode. The syntactics are shown in the foregoing Table 9-2.

2. If the DAWP mode is used, determine an available prediction mode list according to the following method, where there may be one or more of the following prediction mode lists:

2.1. Weight matrix list: there is only one list, and there are 56 weight prediction modes in total.

2.2. Intra prediction mode list: the intra prediction mode list includes 26 intra prediction modes (numbered as 5 to 30) and there are two lists:

A list 1 is an MPM list and there are two intra prediction modes in total. The list needs to be derived for an intra prediction mode in the list based on information about an adjacent reconstructed block and/or a weight prediction mode of the current block (a construction manner of an SAWP MPM list). A list 2 includes remaining intra prediction modes. Adjusted intra prediction mode indexes are stored both in the list 1 and the list 2.

3. Parse the video stream and determine a syntactic element related to a prediction mode:

3.1. Parse to determine a syntactic element of a weight prediction mode index (sawp_index) of the weight prediction mode, where sawp_index is used for determining a location of the sawp weight prediction mode in the weight prediction mode list:

3.1.1. There is only one weight prediction mode list:

The weight prediction mode list includes 56 weight prediction modes, and a total quantity of decoding schemes is 28. The total quantity of modes are divided into 8 groups, each group includes 7 modes, truncated unary code is used for a group number, truncated binary code is used for an intra-group index, a group number is coded by using context-based binary, and an intra-group index is coded by using a bypass mode.

3.2. Decode to determine information about a first part of intra-frame predicted value:

3.2.1. There are two mode lists in total (as described above, the first list is the SAWP MPM list and the second list includes the remaining available intra prediction modes). The syntactics are shown in Table 38:

Table 38

| sawp_pred_mode0_is_mpm | ae (v) |
|---|---|
| if(!SawpPredMode0IsMpm) { | |
| sawp_pred_mode0_index | ae (v) |
| } else { | |
| sawp_pred_mode0_mpm_index | |
| } | |

3.3. Decode to determine information about a second part of predicted value:

3.3.1. There are two mode lists in total (as described above, the first list is the SAWP MPM list and the second list includes the remaining available intra prediction modes):

3.3.1.1. In some embodiments, a second intra prediction mode index (mode information of sawp_pred_mode0) of the current block may be decoded according to a first intra prediction mode index (mode information of sawp_pred_mode1) of the current block:

If values of sawp_pred_mode0_is_mpm and sawp_pred_mode1_is_mpm are both 1 (indicating that both the first intra prediction mode of the current block and the second intra prediction mode of the current block belong to the MPM list), sawp_pred_mode1_mpm_index and sawp_pred_mode0_mpm_index are different. Particularly, if the length of the MPM is 2, sawp_pred_mode1_mpm_index may be directly determined by using a value of sawp_pred_mode0_mpm_index. The syntactics are shown in Table 39:

Table 39

| sawp_pred_mode1_is_mpm | ae (v) |
|---|---|
| if(!SawpPredMode1IsMpm) { | |
| sawp_pred_mode1_index | ae (v) |
| } else { | |
| sawp_pred_mode1_mpm_index | |
| } | |

4. If the DAWP mode is used, derive the sorted mode list and determine a prediction mode of the current block:

4.1. Determine availability of the DAWP mode and skip sorting the mode list if the mode is not available:

4.1.1. Check whether a sample corresponding to the current block template has been constructed, where all the following conditions need to be satisfied:

4.1.1.1. A sample on the left of the current block is available.
4.1.1.2. A sample above the current block is available.

4.2. Determine a mode list that needs to be sorted:
4.2.1. One or more of the following lists are included:
4.2.1.1. Weight prediction mode list.
4.3. Traverse all weight prediction modes that need to be sorted, set a current weight prediction mode to tmp_sawp_mode_x (a value of x is 0 to 55) for the following operations, and derive a sorted cost list (cost_list).

4.3.1. Obtain a current block template (all reconstructed samples around the current block may be used as the current block template):

4.3.1.1. A template is one row above the current block, where a width and a height are (tw0, th0).

4.3.1.2. A template is one column on the left of the current block, where a width and a height are (tw1, th1).

4.3.2. Obtain prediction templates of various areas:

4.3.2.1. Determine an intra prediction mode:

4.3.2.1.1. Determine an available list (including an MPM list and a list formed by other modes) of SAWP according to tmp_sawp_mode_x.

4.3.2.1.2. If the value of sawp_pred_mode0_is_mpm is 1, determine a first intra prediction mode of the current block template from the MPM list according to sawp_pred_mode0_mpm_index. Otherwise, determine the first intra prediction mode from the non-MPM list according to sawp_pred_mode0_index.

4.3.2.1.3. If the value of sawp_pred_mode1_is_mpm is 1, determine a second intra prediction mode from the MPM list according to sawp_pred_mode1_mpm_index. Otherwise, the second intra prediction mode is determined from the non-MPM list according to sawp_pred_mode1_index.

4.3.2.2. Template position: a position of the prediction template corresponds to that of the current block template.

4.3.2.3. Determine, according to the location of the prediction template, a reference sample for performing intra prediction on the current block template.

4.3.2.4. Derive an intra-frame predicted value of the current block template according to the intra prediction mode.
The intra-frame predicted value of the current block template may be derived by using an intra-frame interpolation filter that is the same as that of the current block. If multiple interpolation filters may be used to derive the predicted value for the current block, one of the interpolation filters is used to derive the predicted value. For example, interpolation filters used for a sample are sorted (sorted in ascending order of distances) according to a location (a horizontal coordinate, a vertical coordinate, or a straight line) of the sample, and the second filter is used.

4.3.2.5. The predicted value of the current block template may be cached. If the current intra prediction mode can be found in the cache, a cached predicted value may be directly used without deriving.

4.3.3. Derive a template weight:

4.3.3.1. Derive the weight by using a method for deriving an angular weighted prediction weight, where a relative position relationship between the template and the current block needs to be considered.

4.3.3.2. Weight deriving method:
A reference weight configuration mode and a weight angle prediction mode corresponding to the current block template are obtained; a location of a division center cp is determined according to the information; and a position tp that is obtained through projection according to a weight prediction angle and that is of a sample

corresponding to the current block template is calculated. If tp < cp, the weight of the sample corresponding to the current block template is 0; otherwise, the weight is 1.

4.3.3.3. The weight template may be pre-initialized and does not need to be derived repeatedly.

4.3.4. Derive a predicted value of the current block template, and perform weighted combination on the predicted values by using the template weight, to obtain the predicted value of the current block template.

4.3.5. Calculate cost:
An SAD between the predicted value and the reconstructed value of the current block template is calculated.

4.4. Sort the cost list (cost_list), including:
sorting the weight prediction mode list according to cost_list, to obtain a sorted weight prediction mode list (sorted_sawp_list), and the list is sorted according to smallest cost, where a mode corresponding to a location of an index sawp_index of the SAWP mode in the sorted_sawp_list is a weight prediction mode finally used for the current block, and is denoted as final_sawp_mode.

5. Derive a predicted value of the current block:

5.1. Derive a weight matrix according to final_sawp_mode.

5.2. Determine an intra prediction mode list according to final_sawp_mode, and derive a first intra-frame predicted value and a second intra-frame predicted value of the current block according to information related to the intra prediction modes obtained through decoding in 2.2 and 2.3.

5.3. Perform weighted prediction on the first intra-frame predicted value and the second intra-frame predicted value according to the weight matrix, to obtain the predicted value of the current block.

Second. Embodiment 2:

Embodiment 2 corresponds to a case in which only the weight prediction mode list is sorted and there are multiple weight prediction mode lists. A decoding process may include:

1. Decode a video stream and determine whether a deriving method of an adaptive spatial angular weighted prediction mode (DAWP) is used for a coding block:

2. If the DAWP mode is used, determine an available mode list according to the following method, where there may be one or more of the following mode lists:

2.1. Weight matrix list:
There are 56 weight prediction modes in total, the list is grouped according to weight steps (7 types), and then the weight prediction mode list is grouped into 8 lists, as shown in the foregoing Table 29.

2.2. The first intra prediction mode list and the second intra prediction mode list are the same as those in embodiment 1.

3. Decode the stream and determine a syntactic element related to a prediction mode:

3.1. Parse to determine a syntactic element of a weight prediction mode index (sawp_index) of the weight prediction mode, where sawp_index is used for determining a location of the sawp weight prediction mode in the weight prediction mode list:

3.1.1. There are two lists, and a weight prediction mode list index (sawp_list_index) and a weight prediction mode index (sawp_index) need to be decoded, as shown in the foregoing Table 24.

3.1.2. Truncated binary code is used for the weight prediction mode list index (sawp_list_index), and context-based truncated unary code is used for the weight prediction mode index (sawp_index). Alternatively, the weight prediction mode index (sawp_index) is coded by using a bypass mode, and the weight prediction

mode index (sawp_index) is coded by using a context-based binary coding method.

3.2. Decode to determine information about a first part of predicted value:
3.3. Decode to determine information about a second part of predicted value:

4. If the DAWP mode is used, derive the sorted mode list and determine an AWP mode of the current block:

4.1. Determine availability of the DAWP mode and skip sorting the mode list if the mode is not available:
4.1.1. Check whether a sample corresponding to the current block template has been constructed, where all the following conditions need to be satisfied:

4.1.1.1. A sample on the left of the current block is available.
4.1.1.2. A sample above the current block is available.

4.2. Determine a mode list for sorting:

4.2.1. One of the following lists is included:
4.2.1.1. Weight prediction mode list.
4.2.2. Determine, according to sawp_list_index, a weight prediction mode list (a length is only 8) that needs to be sorted.

4.3. Traverse all modes that need to be sorted, set a current mode to tmp_sawp_mode_x (a value of x is 0 to 7) for the following operations, and derive a sorted list (cost_list).

4.3.1. Obtain a current block (all reconstructed samples around the current block may be used as the template).
4.3.2. Obtain prediction templates of various areas:
4.3.3. Derive a template weight.
4.3.4. Derive a weighted prediction template.
4.3.5. Calculate cost:

4.4. Sort cost_list, including:
4.4.1. The SAWP mode is sorted according to cost_list, to obtain sorted_sawp_list, where the list is sorted according to smallest cost. A mode corresponding to a location of an index sawp_index of the SAWP mode in the sorted_sawp_list is a mode finally used for weighted prediction, and is denoted as final_sawp_mode.

5. Derive a predicted value:

5.1. Derive a weight matrix according to final_sawp_mode.

5.2. Determine an intra prediction mode list according to final_sawp_mode, and derive a first intra-frame predicted value and a second intra-frame predicted value of the current block according to information related to the intra prediction modes obtained through decoding in 2.2 and 2.3.

5.3. Perform weighted prediction on the first intra-frame predicted value and the second intra-frame predicted value according to the weight matrix, to obtain the predicted value of the current block.

Third. Embodiment 3:

Embodiment 3 corresponds to a case in which both weight prediction mode lists and intra prediction mode lists are sorted and there are multiple weight prediction mode lists and multiple intra prediction mode lists. A decoding process may include:
1. Decode a video stream and determine whether a deriving method of an adaptive spatial angular weighted prediction mode (DAWP) is used for a coding block:
2. If the DAWP mode is used, determine an available mode list according to the following method, and there may be one or more of the following mode lists:
2.1. Weight matrix list:
There are 56 weight prediction modes in total, the list is grouped according to weight steps (7 types), and then the weight

prediction mode list is grouped into 8 lists, as shown in the foregoing Table 29.
2.2. First intra prediction mode list and second intra prediction mode list:
2.2.1. If the list is an MPM list, the list includes only two elements.
2.2.2. If the list is a non-MPM list, the list includes 24 elements.
Assuming a preset value d=6 and target values T = {t1, t2, ..., tn}, a list of mode_index % d= ti (i∈[0,n]) is derived. The non-MPM list includes 24 modes. If d = 6 and T = {0, 1, 2, 3, 4, 5}, 6 groups of lists are obtained, as shown in the following Table 40:

Table 40

| Sequence number | List | | | |
|---|---|---|---|---|
| 0 | 0 | 6 | 12 | 18 |
| 1 | 1 | 7 | 13 | 19 |
| 2 | 2 | 8 | 14 | 20 |
| 3 | 3 | 9 | 15 | 21 |
| 4 | 4 | 10 | 16 | 22 |
| 5 | 5 | 11 | 17 | 23 |

3. Decode the stream and determine a syntactic element related to a prediction mode:
3.1. Parse to determine a syntactic element of a weight prediction mode index (sawp_index) of the weight prediction mode, where sawp_index is used for determining a location of the sawp weight prediction mode in the weight prediction mode list:

3.1.1. There are two lists, and a weight prediction mode list index (sawp_list_index) and a weight prediction mode index (sawp_index) need to be decoded, as shown in the foregoing Table 24.

3.1.2. Truncated binary code is used for the weight prediction mode list index (sawp_list_index), and context-based truncated unary code is used for the weight prediction mode index (sawp_index). Alternatively, the weight prediction mode index (sawp_index) is coded by using a bypass mode, and the weight prediction mode index (sawp_index) is coded by using a context-based binary coding method.

3.2. Decode to determine information about a first part of predicted value, where the syntactics are shown in the following Table 41:

Table 41

| | |
|---|---|
| sawp_pred_mode0_is_mpm | ae (v) |
| if(!SawpPredMode0IsMpm) { | |
| sawp_pred_mode0_list_index | ae (v) |
| sawp_pred_mode0_index | ae (v) |
| } else { | |
| sawp_pred_mode0_mpm_index | ae (v) |
| } | |

3.3. Decode to determine information about a second part of predicted value, where the syntactics are shown in the following Table 42:

Table 42

| | |
|---|---|
| sawp_pred_mode1_is_mpm | ae (v) |
| if(!SawpPredMode1IsMpm) { | |
| sawp_pred_mode1_list_index | ae (v) |
| sawp_pred_mode1_index | ae (v) |

(continued)

| } else { | |
|---|---|
| sawp_pred_mode1_mpm_index | ae (v) |
| } | |

4. If the DAWP mode is used, derive the sorted mode list and determine an AWP mode of the current block:

4.1. Determine availability of the DAWP mode and skip sorting the mode list if the mode is not available.

4.2. Determine a mode list for sorting:

4.2.1. One of the following lists is included:
4.2.1.1. Weight prediction mode list.

4.2.2. Determine, according to sawp_list_index, a weight prediction mode list (a length is only 8) that needs to be sorted.

4.2.3. If the value of sawp_pred_mode0_is_mpm is 1, determine a first intra prediction mode from the MPM list according to sawp_pred_mode0_mpm_index. Otherwise, determine the available first intra prediction mode according to sawp_pred_mode0_list_index.

4.2.4. If the value of sawp_pred_mode1_is_mpm is 1, determine a second intra prediction mode from the MPM list according to sawp_pred_mode1_mpm_index. Otherwise, determine the available second intra prediction mode according to sawp_pred_mode1_list_index.

4.2.5. In 4.2.3 and 4.2.4, the available intra prediction mode list needs to be adjusted according to the method in 4.3.2.1 to obtain an intra prediction mode.

4.3. Traverse All modes that need to be sorted, set a current mode to tmp_sawp_mode_x0 (a value of x0 is 0 to 7), set current intra prediction modes to tmp_sawp_ipm0_x1 (a value of x1 is 0 to 3) and tmp_sawp_ipm1_x2 (a value of x2 is 0 to 3) for the following operations, and derive a sorted list of cost_list:

4.3.1. Obtain a current block (all reconstructed samples around the current block may be used as the template).

4.3.2. Obtain prediction templates of various areas.

4.3.2.1. Determine an intra prediction mode:

4.3.2.1.1. Determine an MPM list of SAWP according to tmp_sawp_mode_x.

4.3.2.1.2. Adjust tmp_sawp_ipm0_x1 according to the MPM list, to obtain tmp_final_sawp_ipm0_x1, and derive a first part of intra-frame predicted value by using the mode.

4.3.2.1.3. Adjust tmp_sawp_ipm1_x2 according to the MPM list, to obtain tmp_final_sawp_ipm1_x2, and derive a second part of intra-frame predicted value by using the mode.

4.3.3. Derive a template weight.

4.3.4. Derive a weighted prediction template.

4.3.5. Calculate cost:

4.4. Sort cost_list, including:

4.4.1. Sort the SAWP mode according to cost_list, to obtain sorted_sawp_list, where the list is sorted according to smallest cost. A mode corresponding to a location of an index of the SAWP mode in the sorted_sawp_list is a

mode finally used for weighted prediction, and is denoted as final_sawp_mode.

4.4.2. Sort the first intra prediction modes according to pred_mode0_cost_list, to obtain sorted_pred_mode0_list, where the list is sorted according to smallest cost. A mode corresponding to sawp_pred_mode0_index in sorted_pred_mode0_list is a mode finally used for weighted prediction, and is denoted as final_sawp_pred_mode0.

4.4.2.1. pred_mode0_cost_list is a list including cost information with final_sawp_mode as the SAWP mode in cost_list.

4.4.3. Sort the first intra prediction modes according to pred_mode1_cost_list, to obtain sorted_pred_mode1_cost_list, where the list is sorted according to smallest cost. A mode corresponding to sawp_pred_mode1_index in sorted_pred_mode0_list is a mode finally used for weighted prediction, and is denoted as final_sawp_pred_mode1.

4.4.3.1. pred_mode1_cost_list includes final_sawp_mode as the SAWP mode and final_sawp_pred_mode0 as the first intra prediction mode in cost_list.

5. Derive a predicted value:

5.1. Derive a weight matrix according to final_sawp_mode.

5.2. Determine an intra prediction mode list according to final_sawp_mode, and derive a first intra-frame predicted value and a second intra-frame predicted value of the current block according to information related to the intra prediction modes obtained through decoding in 2.2 and 2.3.

5.3. Perform weighted prediction on the first intra-frame predicted value and the second intra-frame predicted value according to the weight matrix, to obtain the predicted value of the current block.

In Embodiment 3, the case in which a prediction mode list that needs to be sorted includes a weight prediction mode list, a first intra prediction mode list, and a second intra prediction mode list is described. In Embodiment 3, when calculating cost, the weight prediction mode index may be first determined, and then the first intra prediction mode index and the second intra prediction mode index are determined according to the weight prediction mode index. In some embodiments, when the prediction mode list that needs to be sorted includes a weight prediction mode list, a first intra prediction mode list, and a second intra prediction mode list, a combined prediction mode list may be determined according to the weight prediction mode list, the first intra prediction mode list, and the second intra prediction mode list that need to be sorted. Each combined prediction mode in the combined prediction mode list may be obtained by combining one weight prediction mode, one first intra prediction mode, and one second intra prediction mode. When calculating cost, a combined prediction mode index may be determined. The combined prediction mode index may be understood as a triple {weight prediction mode index, first intra prediction mode index, second intra prediction mode index}. The combined prediction mode index may be used to indicate a specific combined prediction mode (that is, a specific weight prediction mode, a specific first intra prediction mode, and a specific second intra prediction mode), so that cost information in the combined prediction mode may be calculated.

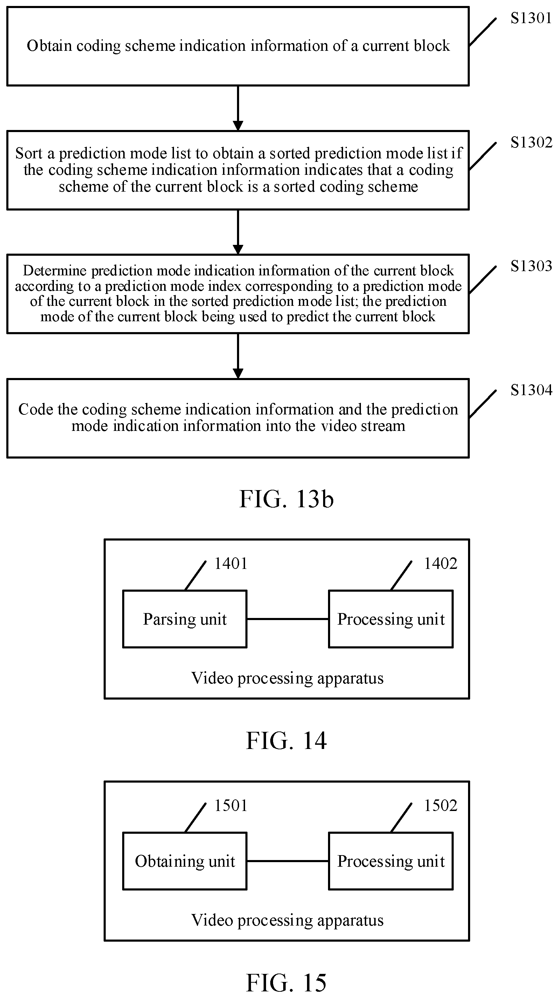

An embodiment of this application provides a video processing method. In the video processing method, a coding process of a coding end is described. The video processing method may be performed by a computer device. For example, the computer device may be the coding device 1101 in the video processing system shown in FIG. 11. As shown in FIG. 13b, the video processing method may include but is not limited to the following operation S1301 to operation S1304: S1301: Obtain coding scheme indication information of a current block.

The current block is a picture block that is being coded currently, and the picture block is a coding unit (CU) and is a most basic element in a coding section. The coding scheme indication information of the current block may be used to indicate whether a coding scheme of the current block is a sorted coding scheme, and the sorted coding scheme is an adaptive angular weighted mode (DAWP).

S1302: Sort a prediction mode list to obtain a sorted prediction mode list if the coding scheme indication information indicates that a coding scheme of the current block is a sorted coding scheme.

The prediction mode list includes multiple prediction modes and a prediction mode index corresponding to each prediction mode. In the sorted prediction mode list, a prediction mode with a higher probability of being used for the current block corresponds to a smaller prediction mode index.

Not all prediction modes in the prediction mode list may be used for the current block. Therefore, the entire

prediction mode list does not need to be sorted, and the available prediction mode list may be determined from the prediction mode list, and the available prediction mode list is sorted, to obtain a sorted prediction mode list. Operation S1302 may include sub-operation s21 to sub-operation s22:
s21: Determine an available prediction mode list from the prediction mode list.

The prediction mode list may include a weight prediction mode list and N intra prediction mode lists. For any prediction mode list (the weight prediction mode list or any intra prediction mode list), a manner of determining an available prediction mode list from the prediction mode list may include any one of the following:

(1) determining an available prediction mode list in the prediction mode list according to an available determining rule, where the available determining rule is agreed on by the coding device and the decoding device; and

(2) determining the available prediction mode list from the prediction mode list according to a prediction mode index satisfying an available condition in the prediction mode list.

Specifically, the prediction mode indexes in the prediction mode list can be divided into different groups. That the prediction mode index in the prediction mode list satisfies the available condition means: a sequence number of a group to which the prediction mode index in the prediction mode list belongs is an available sequence number. A grouping manner may include any one of the following:

a. Given a preset value, calculate a quotient between a prediction mode index in the prediction mode index list and the preset value, and classify prediction mode indexes whose quotients are the same into the same group. Assuming a preset value d and target values T = {t1, t2, ..., tn}, a list of Floor(mode_index / d)= ti ($i \in [0,n]$) is derived, where mode_index represents a prediction mode index.

b. Given a preset value, calculate a modulo between a prediction mode index in the prediction mode index list and the preset value, and classify prediction mode indexes with the same modulo into the same group. Assuming a preset value d and target values T = {t1, t2, ..., tn}, a list of mode_index % d= ti ($i \in [0,n]$) is derived, where mode_index represents a prediction mode index.

For (2) in sub-operation s21, the prediction mode index in the prediction mode list may be an original prediction mode index or an adjusted prediction mode index. For example, for the intra prediction mode list, the original intra prediction mode list may include 66 intra prediction modes, and 66 integers ranging from 0 to 65 may be used to set intra prediction mode indexes of the 66 intra prediction modes. Besides, in this application, the intra prediction mode list may be set by using 26 intra prediction modes in the original intra prediction mode list. For the intra prediction mode in the intra prediction mode list in this application, an intra prediction mode index in an original intra prediction mode list (that is, an original intra prediction mode index) may be used. Alternatively, for the intra prediction modes in the intra prediction mode list in this application, intra prediction mode indexes (that is, adjusted intra prediction mode indexes) of the 26 intra prediction modes may be reset by using 26 integers ranging from 0 to 25.

Particularly, for the weight prediction mode list, there may be multiple weight prediction mode lists, and the multiple weight prediction mode lists belong to different weight prediction mode types. When determining an available weight prediction mode list from the weight prediction mode lists, the available weight prediction mode list may be separately determined from weight prediction mode lists of different weight prediction mode types.

Particularly, for the intra prediction mode list, a manner of determining the available prediction mode list in the prediction mode list may further include: determining an available intra prediction mode list in the intra prediction mode list according to an adjacent reconstructed block of the current block or a weight prediction mode of the current block.

In addition, for the intra prediction mode list, the intra prediction mode list may include a first intra prediction mode list and a second intra prediction mode list. If the first intra prediction mode of the current block is determined in the first intra prediction mode list, a manner of determining an available second intra prediction mode list in the second intra prediction mode list may include: after deleting the first intra prediction mode of the current block from the second intra prediction mode list, determining an available second prediction mode list in the second intra prediction mode list obtained after the deletion. That is, the second intra prediction mode list does not include the first intra prediction mode of the current block.

s22: Sort the available prediction mode list to obtain the sorted prediction mode list.

After available prediction mode lists are determined from the prediction mode list, not all available prediction mode lists need to be sorted. Therefore, a first prediction mode list that needs to be sorted and a second prediction mode list that does not need to be sorted may be determined from the available prediction mode lists, and the first prediction mode list that needs to be sorted is sorted, to obtain a sorted first prediction mode list.

Before the sorting, an availability check may be performed on the sorted coding scheme (that is, the DAWP mode) of the current block, to confirm availability of the sorted coding scheme of the current block. If the sorted coding scheme of

the current block is available, the first prediction mode list that needs to be sorted and the second prediction mode list that does not need to be sorted may be determined from the available prediction mode list, and the first prediction mode list that needs to be sorted is sorted. If the sorted coding scheme of the current block is not available, no sorted needs to be performed, and the prediction mode of the current block may be determined from the available prediction mode list according to the prediction mode index of the current block.

The availability check may include at least one of the following: First. If a sample for determining the current block template corresponding to the current block has been constructed, it may be determined that the sorted coding scheme of the current block is available. The sample for determining the current block template corresponding to the current block may include at least one of the following: a sample on the left of the current block and a sample above the current block. Second. It may be determined that the sorted coding scheme of the current block is available if a size of the current block satisfies a size condition. Third. If a picture component of the current block satisfies a component condition, it may be determined that the sorted coding scheme of the current block is available. For example, if a chrominance component of the current block satisfies a component condition, it may be determined that the sorted coding scheme of the current block is available.

Next, a manner of sorting the first prediction mode list that needs to be sorted is described. The first prediction mode list that needs to be sorted may include a weight prediction mode list. Alternatively, the first mode list that needs to be sorted may include a weight prediction mode list, a first intra prediction mode list, and a second intra prediction mode list. Sorted manners of the two cases are respectively described below.

When the first prediction mode list that needs to be sorted includes a weight prediction mode list, a process of sorting the first prediction mode list that needs to be sorted may include the following operation 1 to operation 4:

1. Obtain the current block template corresponding to the current block.

2. Determine predicted values of the current block template in different weight prediction modes in the weight prediction mode list.
A process of determining a predicted value of the current block template in any weight prediction mode may include:

    (1) Determine a weight template of the current block template in the weight prediction mode.

    (2) Determine an available intra prediction mode list according to the weight prediction mode.

    (3) Determine an intra prediction mode of the current block template in the available intra prediction mode list.

    (4) Determine an intra-frame predicted value of the current block template according to the intra prediction mode of the current block template.

    (5) Perform weighted prediction on the intra-frame predicted value according to the weight template, to obtain a predicted value of the current block template in the weight prediction mode.

3. Determine cost information of the current block template in the different weight prediction modes according to differences between the predicted values of the current block template in the different weight prediction modes and a reconstructed value of the current block template.

4. Sort the first prediction mode list (that is, the weight prediction mode list) based on the cost information of the current block template in the different weight prediction modes.

Operation 1 to operation 4 describe a sorting case in which only the weight prediction mode list needs to be sorted. Next, a case in which the weight prediction mode list, the first intra prediction mode list, and the second intra prediction mode list need to be sorted is described. Prediction modes in the first prediction mode list that needs to be sorted are combined to obtain multiple combined prediction modes. For example, the first prediction mode list that needs to be sorted may include a weight prediction mode list, a first intra prediction mode list, and a second intra prediction mode list, the weight prediction mode list may include 56 weight prediction modes, the first intra prediction mode list may include 26 first intra prediction modes, and the second intra prediction mode list may include 26 second intra prediction modes. The weight prediction modes in the weight prediction mode list, the first intra prediction modes in the first intra prediction mode list, and the second intra prediction modes in the second intra prediction mode list are combined to obtain 56 * 26 * 26 combined prediction modes.

The sorting principle may roughly include: determining cost information of the current block template in different combined prediction modes according to differences between predicted values of the current block template correspond-

ing to the current block in the different combined prediction modes and reconstructed values of the current block template; and sorting, according to the cost information of the current block template in the different combined prediction modes, the first prediction mode list that needs to be sorted. A sorting principle may specifically include the following operation 1 to operation 4:

1. Obtain the current block template corresponding to the current block.

2. Determine predicted values of the current block template in different combined prediction modes.
A process of determining a predicted value of the current block template in any combined prediction mode may include:

(1) Determine a weight template of the current block template in the combined prediction mode.

(2) Determine an intra-frame predicted value of the current block template in the combined prediction mode.

(3) Perform weighted prediction on the intra-frame predicted value according to the weight template, to obtain a predicted value of the current block template in the combined prediction mode.

3. Determine cost information of the current block template in the different combined prediction modes according to differences between the predicted values of the current block template in the different combined prediction modes and a reconstructed value of the current block template.

4. Sort the first prediction mode list based on the cost information of the current block template in the different combined prediction modes.

A process of sorting the first prediction mode list that needs to be sorted in sub-operation s22 is the same as the process of performing the sub-operation s11 in the foregoing embodiment shown in FIG. 12. For details, refer to the specific description of the sub-operation s11 in the foregoing embodiment shown in FIG. 12. Details are not described herein again.
S1303: Determine prediction mode indication information of the current block according to a prediction mode index corresponding to a prediction mode of the current block in the sorted prediction mode list; the prediction mode of the current block being used to predict the current block.
As described above, after available prediction mode lists are determined from the prediction mode list, not all available prediction mode lists need to be sorted. Therefore, a first prediction mode list that needs to be sorted and a second prediction mode list that does not need to be sorted may be determined from the available prediction mode lists, and the first prediction mode list that needs to be sorted is sorted, to obtain a sorted first prediction mode list. Correspondingly, the prediction mode of the current block may include a first prediction mode in the sorted first prediction mode list and a second prediction mode in the second prediction mode list, where the first prediction mode corresponds to a first prediction mode index, and the second prediction mode corresponds to a second prediction mode index. The prediction mode indication information of the current block includes the first prediction mode index and the second prediction mode index of the current block.
For example, when the first prediction mode list that needs to be sorted includes a weight prediction mode list and N intra prediction mode lists, the prediction mode index corresponding to the prediction mode of the current block may include: a weight prediction mode index corresponding to a weight prediction mode of the current block in the sorted weight prediction mode list, and an intra prediction mode index corresponding to an intra prediction mode of the current block in each sorted intra prediction mode list (for example, the N intra prediction mode lists include a first intra prediction mode list and a second intra prediction mode list, and the intra prediction mode index corresponding to the intra prediction mode of the current block in each sorted intra prediction mode list may include: a first intra prediction mode index corresponding to the first intra prediction mode of the current block in the sorted first intra prediction mode list, and a second intra prediction mode index corresponding to the second intra prediction mode of the current block in the sorted second intra prediction mode list).
S1304: Code the coding scheme indication information and the prediction mode indication information into the video stream.
The coding scheme indication information may be coded into a sequence header of the video stream, a picture header of the video stream, or a slice header of the video stream. The coding scheme indication information coded into the sequence header of the video stream, the picture header of the video stream, or the slice header of the video stream is described below.
First. The coding scheme indication information is coded into the sequence header of the video stream.
The coding scheme indication information coded into the sequence header of the video stream may include any

one of first coding scheme indication information, second coding scheme indication information, and third coding scheme indication information.

(1) The first coding scheme indication information: The first coding scheme indication information may include a sequence header spatial angular weighted prediction mode flag (seq_sawp_flag) and a sequence header sorting-based angular weighted prediction mode flag (seq_dawp_flag). The sequence header spatial angular weighted prediction mode flag may be set to a first value (the first value, for example, can be 1), and the sequence header sorting-based angular weighted prediction mode flag may be set to the first value. The sequence header spatial angular weighted prediction mode flag and the sequence header sorting-based angular weighted prediction mode flag may be coded into the sequence header of the video stream.

(2) The second coding scheme indication information: The second coding scheme indication information may include a sequence header spatial angular weighted prediction mode flag (seq_sawp_flag). The sequence header spatial angular weighted prediction mode flag may be set to a second value (the second value, for example, can be 2). The sequence header spatial angular weighted prediction mode flag may be coded into the sequence header of the video stream.

(3) The third coding scheme indication information: The third coding scheme indication information includes a sequence header angular weighted prediction mode flag (seq_awp_flag), a sequence header spatial angular weighted prediction mode flag (seq_sawp_flag), and a sequence header sorting-based angular weighted prediction mode flag (seq_dawp_flag). The sequence header angular weighted prediction mode flag or the sequence header spatial angular weighted prediction mode flag may be set to a first value (the first value, for example, can be 1), and the sequence header sorting-based angular weighted prediction mode flag may be set to the first value. The sequence header angular weighted prediction mode flag, the sequence header spatial angular weighted prediction mode flag, and the sequence header sorting-based angular weighted prediction mode flag may be coded into the sequence header of the video stream.

Second. The coding scheme indication information is coded into a picture header of the video stream:
The coding scheme indication information coded into the slice header of the video stream may include first coding scheme indication information, second coding scheme indication information, third coding scheme indication information, or fourth coding scheme indication information.

(1) The first coding scheme indication information: The first coding scheme indication information may include a picture header angular weighted prediction mode flag (pic_sawp_flag) and a picture header sorting-based angular weighted prediction mode flag (pic_dawp_flag). The picture header angular weighted prediction mode flag may be set to a first value (the first value, for example, can be 1), and the picture header sorting-based angular weighted prediction mode flag may be set to the first value. The picture header angular weighted prediction mode flag and the picture header sorting-based angular weighted prediction mode flag may be coded into the picture header of the video stream.

(2) The second coding scheme indication information: The second coding scheme indication information may include a picture header angular weighted prediction mode flag (pic_sawp_flag). The picture header angular weighted prediction mode flag may be set to a second value (the second value, for example, can be 2). The picture header angular weighted prediction mode flag may be coded into the picture header of the video stream.

(3) The third coding scheme indication information: The video stream may further include a sequence header, the sequence header may include a sequence header spatial angular weighted prediction mode flag (seq_sawp_flag), and the third coding scheme indication information may include a picture header sorting-based angular weighted prediction mode flag (pic_dawp_flag). The sequence header spatial angular weighted prediction mode flag may be set to a first value (the first value, for example, can be 1), and the picture header sorting-based angular weighted prediction mode flag may be set to the first value. The picture header sorting-based angular weighted prediction mode flag may be coded into the picture header of the video stream.

(4) The fourth coding scheme indication information: The video stream may further include a sequence header, the sequence header may include a sequence header sorting-based angular weighted prediction mode flag (seq_dawp_flag), and the fourth coding scheme indication information may include a picture header sorting-based angular weighted prediction mode flag (pic_dawp_flag). The sequence header sorting-based angular weighted prediction mode flag may be set to a first value (the first value, for example, can be 1), and the picture header sorting-

based angular weighted prediction mode flag may be set to the first value. The picture header sorting-based angular weighted prediction mode flag may be coded into the picture header of the video stream.

Third. The coding scheme indication information is coded into the slice header of the video stream: The coding scheme indication information coded into the slice header of the video stream may include first coding scheme indication information, second coding scheme indication information, third coding scheme indication information, or fourth coding scheme indication information.

(1) The first coding scheme indication information: The first coding scheme indication information may include a slice header angular weighted prediction mode flag (slice_sawp_flag) and a slice header sorting-based angular weighted prediction mode flag (slice_dawp_flag). The slice header angular weighted prediction mode flag may be set to a first value (the first value, for example, can be 1), and the slice header sorting-based angular weighted prediction mode flag may be set to the first value. The slice header angular weighted prediction mode flag and the slice header sorting-based angular weighted prediction mode flag may be coded into the slice header of the video stream.

(2) The second coding scheme indication information: The second coding scheme indication information may include a slice header angular weighted prediction mode flag (slice_sawp_flag), The slice header angular weighted prediction mode flag may be set to a second value (the second value, for example, can be 2). The slice header angular weighted prediction mode flag may be coded into the slice header of the video stream.

(3) The third coding scheme indication information: The video stream may further include a picture header, the picture header may include a picture header angular weighted prediction mode flag (pic_sawp_flag), and the third coding scheme indication information may include a slice header sorting-based angular weighted prediction mode flag (slice_dawp_flag). The picture header angular weighted prediction mode flag may be set to a first value (the first value, for example, can be 1), and the slice header sorting-based angular weighted prediction mode flag may be set to the first value. It may be determined that the slice header sorting-based angular weighted prediction mode flag is coded into the slice header of the video stream.

(4) The fourth coding scheme indication information: The video stream may further include a picture header, the picture header may include a picture header sorting-based angular weighted prediction mode flag (pic_dawp_flag), and the fourth coding scheme indication information may include a slice header sorting-based angular weighted prediction mode flag (slice_dawp_flag). The picture header sorting-based angular weighted prediction mode flag may be set to a first value (the first value, for example, can be 1), and the slice header sorting-based angular weighted prediction mode flag may be set to the first value. The slice header sorting-based angular weighted prediction mode flag may be coded into the slice header of the video stream.

The prediction mode indication information may include the prediction mode index of the current block. For any prediction mode list (including a weighted prediction mode list or any intra prediction mode list), that is, for any prediction mode index (including a weight prediction mode index or any intra prediction mode index) of the current block, the coding the prediction mode indication information into the video stream may include:

A. Directly code the prediction mode index of the current block into the video stream when there is one prediction mode list.

B. Code the prediction mode list index of the current block and the prediction mode index of the current block into the video stream when there is multiple prediction mode lists, where the prediction mode indication information of the current block further includes the prediction mode list index of the current block, and a prediction mode list corresponding to the prediction mode list index of the current block is an available prediction mode list.

Particularly, in a case of multiple weight prediction mode lists, the prediction mode list may include the weight prediction mode lists, and the multiple weight prediction mode lists belong to different weight prediction mode types. The prediction mode index may include a weight prediction mode index. A weight prediction mode index of the current block for each weight prediction mode type may be coded into the video stream.

Particularly, in a case of multiple intra prediction mode lists, the prediction mode list may include an intra prediction mode list, multiple intra prediction mode lists belong to two types: a most probable mode (MPM) and a non-most probable mode (non-MPM), and the prediction mode index may include an intra prediction mode index. The intra prediction mode list index of the current block and the intra prediction mode index of the current block may be coded into the video stream when the intra prediction mode index of the current block belongs to the non-most probable mode type.

The case in which the prediction mode indication information is coded into the video stream has been described. A coding scheme of the prediction mode indication information is described below. A coding scheme used for the prediction mode indication information may include any one of the following:

First: variable-length coding is performed on all or a part of the information. For example, k-order exponential Golomb coding is used, coding of truncated unary code is used, or coding of truncated binary code is used.

Second: fixed-length coding is performed on all or a part of the information.

Third: the prediction mode indication information includes a prefix and a suffix, and different coding schemes are used for the prefix and the suffix. The third case may include any one of the following:

1. A prefix of an index in the prediction mode indication information is a group number, a suffix is an intra-group index, and different coding schemes are used for the group number and the intra-group index.

2. An index in the prediction mode indication information is a binary string, a prefix of the index in the prediction mode indication information is a part of the index of a binary bit before a target bit (th), and a suffix of the index in the prediction mode indication information is the remaining part (that is, a part of the index of a binary bit in the target bit and after the target bit).

In the embodiments of this application, the prediction mode list is sorted when the coding scheme of the current block is the sorted coding scheme, so that in the sorted prediction mode list, a prediction mode with a higher probability of being used for the current block corresponds to a smaller prediction mode index value. In this way, the actual prediction mode index used for the current block has a smaller value, and less information can be coded when the prediction mode index of the current block is coded into the video stream. This improves coding efficiency of the prediction mode index of the current block, and improves video coding efficiency.

Referring to FIG. 14, FIG. 14 is a schematic structural diagram of a video processing apparatus according to an embodiment of this application. The video processing apparatus may be disposed in a computer device according to the embodiments of this application, and the computer device may be a decoding device. The video processing apparatus shown in FIG. 14 may be a computer program running in a computer device, and the video processing apparatus may be configured to perform some or all of the operations of the method embodiment shown in FIG. 12. Referring to FIG. 14, the video processing apparatus may include the following units:

a parsing unit 1401, configured to parse coding scheme indication information of a current block in a video stream;

the parsing unit 1401 being further configured to parse prediction mode indication information of the current block in the video stream, the prediction mode indication information including a prediction mode index of the current block; and

a processing unit 1402, configured to sort a prediction mode list to obtain a sorted prediction mode list if the coding scheme indication information indicates that a coding scheme of the current block is a sorted coding scheme;

the processing unit 1402 being further configured to determine a prediction mode of the current block in the sorted prediction mode list according to the prediction mode index of the current block; and

the processing unit 1402 being further configured to predict the current block according to the prediction mode of the current block, to obtain a predicted value of the current block; the predicted value of the current block being used to reconstruct a decoded picture block of the current block.

In an implementation, the coding scheme indication information is included in a sequence header of the video stream; and the coding scheme indication information includes any one of first coding scheme indication information, second coding scheme indication information, and third coding scheme indication information;

The first coding scheme indication information includes a sequence header spatial angular weighted prediction mode flag and a sequence header sorting-based angular weighted prediction mode flag; and if the sequence header spatial angular weighted prediction mode flag is a first value, and the sequence header sorting-based angular weighted prediction mode flag is the first value, it is determined that the coding scheme indication information indicates that the coding scheme of the current block is the sorted coding scheme.

The second coding scheme indication information includes a sequence header spatial angular weighted prediction mode flag; and if the sequence header spatial angular weighted prediction mode flag is a second value, it is

determined that the coding scheme indication information indicates that the coding scheme of the current block is the sorted coding scheme.

The third coding scheme indication information includes a sequence header angular weighted prediction mode flag, a sequence header spatial angular weighted prediction mode flag, and a sequence header sorting-based angular weighted prediction mode flag; and if the sequence header angular weighted prediction mode flag or the sequence header spatial angular weighted prediction mode flag is a first value, and the sequence header sorting-based angular weighted prediction mode flag is the first value, it is determined that the coding scheme indication information indicates that the coding scheme of the current block is the sorted coding scheme.

In an implementation, the coding scheme indication information is included in a picture header of the video stream; and the coding scheme indication information includes any one of first coding scheme indication information, second coding scheme indication information, third coding scheme indication information, and fourth coding scheme indication information;

The first coding scheme indication information includes a picture header angular weighted prediction mode flag and a picture header sorting-based angular weighted prediction mode flag; and if the picture header angular weighted prediction mode flag is a first value, and the picture header sorting-based angular weighted prediction mode flag is the first value, it is determined that the coding scheme indication information indicates that the coding scheme of the current block is the sorted coding scheme.

The second coding scheme indication information includes a picture header angular weighted prediction mode flag; and if the picture header angular weighted prediction mode flag is a second value, it is determined that the coding scheme indication information indicates that the coding scheme of the current block is the sorted coding scheme.

The video stream further includes a sequence header, the sequence header includes a sequence header spatial angular weighted prediction mode flag, and the third coding scheme indication information includes a picture header sorting-based angular weighted prediction mode flag; and if the sequence header spatial angular weighted prediction mode flag is a first value, and the picture header sorting-based angular weighted prediction mode flag is the first value, it is determined that the coding scheme indication information indicates that the coding scheme of the current block is the sorted coding scheme.

The video stream further includes a sequence header, the sequence header includes a sequence header sorting-based angular weighted prediction mode flag, and the fourth coding scheme indication information includes a picture header sorting-based angular weighted prediction mode flag; and if the sequence header sorting-based angular weighted prediction mode flag is a first value, and the picture header sorting-based angular weighted prediction mode flag is the first value, it is determined that the coding scheme indication information indicates that the coding scheme of the current block is the sorted coding scheme.

In an implementation, the coding scheme indication information is included in a slice header of the video stream; and the coding scheme indication information includes any one of first coding scheme indication information, second coding scheme indication information, third coding scheme indication information, and fourth coding scheme indication information.

The first coding scheme indication information includes a slice header angular weighted prediction mode flag and a slice header sorting-based angular weighted prediction mode flag; and if the slice header angular weighted prediction mode flag is a first value, and the slice header sorting-based angular weighted prediction mode flag is the first value, it is determined that the coding scheme indication information indicates that the coding scheme of the current block is the sorted coding scheme.

The second coding scheme indication information includes a slice header angular weighted prediction mode flag; and if the slice header angular weighted prediction mode flag is a second value, it is determined that the coding scheme indication information indicates that the coding scheme of the current block is the sorted coding scheme.

The video stream further includes a picture header, the picture header includes a picture header angular weighted prediction mode flag, and the third coding scheme indication information includes a slice header sorting-based angular weighted prediction mode flag; and if the picture header angular weighted prediction mode flag is a first value, and the slice header sorting-based angular weighted prediction mode flag is the first value, it is determined that the coding scheme indication information indicates that the coding scheme of the current block is the sorted coding scheme.

The video stream further includes a picture header, the picture header includes a picture header sorting-based angular weighted prediction mode flag, and the fourth coding scheme indication information includes a slice header sorting-based angular weighted prediction mode flag; and if the picture header sorting-based angular weighted prediction mode flag is a first value, and the slice header sorting-based angular weighted prediction mode flag is the first value, it is

determined that the coding scheme indication information indicates that the coding scheme of the current block is the sorted coding scheme.

In an implementation, the parsing unit 1401 is further configured to perform the following operations:

triggering execution of the parsing coding scheme indication information of the current block in the video stream if a picture type of a picture to which the current block belongs is a first picture type; and

triggering execution of the parsing coding scheme indication information of the current block in the video stream if the picture type of the picture to which the current block belongs is a picture type other than a second picture type; where

the first picture type is the same as or different from the second picture type.

In an implementation, when parsing the prediction mode indication information of the current block in the video stream, the parsing unit 1401 is specifically configured to perform the following operations:

parsing the prediction mode index of the current block in the video stream when there is one prediction mode list; and parsing a prediction mode list index of the current block in the video stream and parsing the prediction mode index of the current block in the video stream when there is multiple prediction mode lists, where the prediction mode indication information of the current block further includes the prediction mode list index of the current block, and a prediction mode list corresponding to the prediction mode list index of the current block is an available prediction mode list.

In an implementation, the prediction mode list includes a weight prediction mode list, multiple weight prediction mode lists belong to different weight prediction mode types, the prediction mode index includes a weight prediction mode index, and when parsing the prediction mode index of the current block in video stream, the parsing unit 1401 is specifically configured to perform the following operation:
parsing a weight prediction mode index of the current block in the video stream for each weight prediction mode type.

In an implementation, the prediction mode list includes an intra prediction mode list, multiple intra prediction mode lists belong to two types: a most probable mode and a non-most probable mode, and the prediction mode index includes an intra prediction mode index.

When parsing the prediction mode list index of the current block in the video stream and parsing the prediction mode index of the current block in the video stream, the parsing unit 1401 is specifically configured to perform the following operation:
parsing an intra prediction mode list index of the current block in the video stream and parsing an intra prediction mode index of the current block in the video stream if an intra prediction mode of the current block belongs to the non-most probable mode type.

In an implementation, a decoding scheme used for the prediction mode indication information includes any one of the following:

variable-length decoding is performed on all or a part of the information; and

fixed-length decoding is performed on all or a part of the information; where

the prediction mode indication information includes a prefix and a suffix, and different decoding schemes are used for the prefix and the suffix.

In an implementation, when sorting the prediction mode list to obtain the sorted prediction mode list, the processing unit 1402 is specifically configured to perform the following operations:

determining an available prediction mode list from the prediction mode list; and

sorting the available prediction mode list to obtain the sorted prediction mode list.

In an implementation, when determining the available prediction mode list from the prediction mode list, the processing unit 1402 is specifically configured to perform any one of the following:

determining the available prediction mode list from the prediction mode list according to available indication information obtained by parsing the video stream;

determining an available prediction mode list in the prediction mode list according to an available determining rule, where the available determining rule is agreed on by the coding device and the decoding device; and

determining the available prediction mode list from the prediction mode list according to a prediction mode index satisfying an available condition in the prediction mode list.

In an implementation, prediction mode indexes in the prediction mode list are classified into different groups; where that the prediction mode index in the prediction mode list satisfies the available condition means: a sequence number of a group to which the prediction mode index in the prediction mode list belongs is an available sequence number.

In an implementation, the prediction mode list includes an intra prediction mode list; and when determining the available prediction mode list from the prediction mode list, the processing unit 1402 is further configured to perform any one of the following:

determining an available intra prediction mode list in the intra prediction mode list according to an adjacent reconstructed block of the current block and/or a weight prediction mode of the current block.

In an implementation, the prediction mode list includes a weight prediction mode list, there are multiple weight prediction mode lists, the multiple weight prediction mode lists belong to different weight prediction mode types, and when determining the available prediction mode list from the prediction mode list, the processing unit 1402 is specifically configured to perform the following operation:

separately determining available weight prediction mode lists in weight prediction mode lists for different weight prediction mode types.

In an implementation, when sorting the available prediction mode list to obtain the sorted prediction mode list, the processing unit 1402 is specifically configured to perform the following operations:

determining, from the available prediction mode list, a first prediction mode list that needs to be sorted and a second prediction mode list that does not need to be sorted; and

sorting the first prediction mode list to obtain a sorted first prediction mode list.

In an implementation, the prediction mode index of the current block includes a first prediction mode index and a second prediction mode index, the first prediction mode index corresponds to the first prediction mode list, and the second prediction mode index corresponds to the second prediction mode list.

When determining a prediction mode of the current block in the sorted prediction mode list according to the prediction mode index of the current block, the processing unit 1402 is specifically configured to perform the following operations: determining a first prediction mode of the current block in the sorted first prediction mode list according to the first prediction mode index; and determining a second prediction mode of the current block in the second prediction mode list according to the second prediction mode index.

When predicting the current block according to the prediction mode of the current block, to obtain a predicted value of the current block, the processing unit 1402 is configured to: predict the current block according to the first prediction mode and the second prediction mode, to obtain the predicted value of the current block.

In an implementation, the processing unit 1402 is further configured to perform the following operations:

performing an availability check on the sorted coding scheme of the current block; and

triggering, if the sorted coding scheme of the current block is available, execution of the determining, from the available prediction mode list, a first prediction mode list that needs to be sorted and a second prediction mode list that does not need to be sorted.

In an implementation, when performing an availability check on the sorted coding scheme of the current block, the processing unit 1402 is configured to perform at least one of the following:

determining that the sorted coding scheme of the current block is available if a sample used for determining a current block template corresponding to the current block has been reestablished;

determining that the sorted coding scheme of the current block is available if a size of the current block satisfies a size condition; and

determining that the sorted coding scheme of the current block is available if a picture component of the current block satisfies a component condition.

In an implementation, the first prediction mode list that needs to be sorted includes a weight prediction mode list, and when sorting the first prediction mode list to obtain the sorted first prediction mode list, the processing unit 1402 is specifically configured to perform the following operations:

obtaining the current block template corresponding to the current block;

determining predicted values of the current block template in different weight prediction modes in the weight prediction mode list;

determining cost information of the current block template in the different weight prediction modes according to differences between the predicted values of the current block template in the different weight prediction modes and a reconstructed value of the current block template; and

sorting the first prediction mode list based on the cost information of the current block template in the different weight prediction modes.

In an implementation, when obtaining the current block template corresponding to the current block, the processing unit 1402 is specifically configured to perform the following operations:

determining the current block template in a reconstructed area around the current block; where

the current block template includes at least one of the following: one or more rows of samples located above the current block in the reconstructed area; one or more columns of samples located on the left of the current block in the reconstructed area; the current block template sampled at a fixed interval in the reconstructed area; and samples located on the left of and above the current block in the reconstructed area.

In an implementation, a process of determining a predicted value of the current block template in any weight prediction mode includes:

determining a weight template of the current block template in the weight prediction mode;

determining an available intra prediction mode list according to the weight prediction mode;

determining an intra prediction mode of the current block template in the available intra prediction mode list;

determining an intra-frame predicted value of the current block template according to the intra prediction mode of the current block template; and

performing weighted prediction on the intra-frame predicted value of the current block template according to the weight template, to obtain a predicted value of the current block template in the weight prediction mode.

In an implementation, when determining the weight template of the current block template in the weight prediction mode, the processing unit 1402 is specifically configured to perform any one of the following:

deriving the weight template of the current block template according to the weight prediction mode; where

weight templates of the current block template in different weight prediction modes are cached, and the weight template of the current block template in the weight prediction mode is directly initialized from the cache.

In an implementation, when deriving the weight template of the current block template according to the weight prediction mode, the processing unit 1402 is specifically configured to perform the following operations:

deriving a weight matrix of the current block template according to the weight prediction mode; and

determining the weight template of the current block template according to the weight matrix and a weight threshold; or

determining a division central position of the weight matrix according to a weight prediction angle mode and a reference weight configuration mode, determining a projection position of each sample in the weight matrix in the

weight prediction angle mode; and adjusting the weight matrix according to a relationship between the division central position and the projection position, to obtain the weight template of the current block template in the weight prediction mode, where the weight prediction mode includes the weight prediction angle mode and the reference weight configuration mode.

In an implementation, when determining the intra-frame predicted value of the current block template according to the intra prediction mode of the current block template, the processing unit 1402 is specifically configured to perform any one of the following:

determining a location of a prediction template of the current block template, where the location of the prediction template corresponds to or does not correspond to the location of the current block template; determining, according to the location of the prediction template, a reference sample used for performing intra prediction on the current block template; and deriving the intra-frame predicted value of the current block template according to the intra prediction mode of the current block template and the reference sample; and

directly deriving the intra-frame predicted value of the current block template in the weight prediction mode from the cache, where intra-frame predicted values of the current block template in different weight prediction modes have been cached.

In an implementation, when deriving the intra-frame predicted value of the current block template according to the intra prediction mode of the current block template and the reference sample, the processing unit 1402 is specifically configured to perform any one of the following:

deriving the predicted value of the current block template according to the reference sample by using a specified intra-frame interpolation filter; and

deriving the predicted value of the current block template according to the reference sample by using an intra-frame interpolation filter that is the same as that of the current block.

In an implementation, when multiple intra-frame interpolation filters are used for the current block, when deriving the predicted value of the current block template according to the reference sample by using an intra-frame interpolation filter that is the same as that of the current block, the processing unit 1402 is specifically configured to perform the following operations:

selecting an intra-frame interpolation filter from the multiple intra-frame interpolation filters used for the current block; and

deriving the predicted value of the current block template according to the reference sample by using the selected intra-frame interpolation filter.

In an implementation, the first prediction mode list that needs to be sorted includes a weight prediction mode list, a first intra prediction mode list, and a second intra prediction mode list, prediction modes in the first prediction mode lists that need to be sorted are combined to obtain multiple combined prediction modes, and when sorting the first prediction mode list to obtain the sorted first prediction mode list, the processing unit 1402 is specifically configured to perform the following operations:

obtaining the current block template corresponding to the current block;

determining predicted values of the current block template in different combined prediction modes;

determining cost information of the current block template in the different combined prediction modes according to differences between the predicted values of the current block template in the different combined prediction modes and a reconstructed value of the current block template; and

sorting the first prediction mode list based on the cost information of the current block template in the different combined prediction modes.

In an implementation, the first prediction mode list that needs to be sorted includes a weight prediction mode list, a

first intra prediction mode list, and a second intra prediction mode list, R weight prediction modes in the weight prediction mode list, P first intra prediction modes in the first intra prediction mode list, and Q second intra prediction modes in the second intra prediction mode list are combined to obtain R * P * Q combined prediction modes, cost information in the R * P * Q combined prediction modes forms a cost list, and when sorting the first prediction mode list based on the cost information of the current block template in the different combined prediction modes, the processing unit 1402 is specifically configured to perform the following operations:

sorting the weight prediction mode list according to the cost list, to obtain a sorted weight prediction mode list;

determining, from the cost list, a first cost list corresponding to the first intra prediction mode list, and sorting the first intra prediction mode list according to the first cost list, to obtain a sorted first intra prediction mode list; and

determining, from the cost list, a second cost list corresponding to the second intra prediction mode list, and sorting the second intra prediction mode list according to the second cost list, to obtain a sorted second intra prediction mode list.

In an implementation, when determining, from the cost list, the first cost list corresponding to the first intra prediction mode list, the processing unit 1402 is specifically configured to perform the following operation:
determining, according to cost information of a first combined prediction mode in the cost list after the weight prediction mode of the current block is determined in the sorted weight prediction mode list, the first cost list corresponding to the first intra prediction mode list; where a weight prediction mode included in the first combined prediction mode is the weight prediction mode of the current block.

In an implementation, when determining, from the cost list, the second cost list corresponding to the second intra prediction mode list, the processing unit 1402 is specifically configured to perform any one of the following:

determining, according to cost information of the first combined prediction mode in the cost list after the weight prediction mode of the current block is determined in the sorted weight prediction mode list, the second cost list corresponding to the second intra prediction mode list; where the weight prediction mode included in the first combined prediction mode is the weight prediction mode of the current block; and

determining, according to cost information of a second combined prediction mode in the cost list after the weight prediction mode of the current block is determined in the sorted weight prediction mode list and the first intra prediction mode of the current block is determined in the sorted first intra prediction mode list, the second cost list corresponding to the second intra prediction mode list; where a weight prediction mode included in the second combined prediction mode is the weight prediction mode of the current block, and the first intra prediction mode included in the second combined prediction mode is the first intra prediction mode of the current block.

In an implementation, the prediction mode used for the current block includes a weight prediction mode used for the current block and multiple intra prediction modes used for the current block, and when predicting the current block according to the prediction mode of the current block, to obtain the predicted value of the current block, the processing unit 1402 is specifically configured to perform the following operations:

deriving a weight matrix of the current block according to the weight prediction mode used for the current block;

deriving, according to each intra prediction mode used for the current block, an intra-frame predicted value of the current block in the intra prediction mode; and

performing weighted prediction on the intra-frame predicted value of the current block in each intra prediction mode according to the weight matrix of the current block, to obtain the predicted value of the current block.

According to an embodiment of this application, the units in the video processing apparatus shown in FIG. 14 may be separately or all combined into one or several other units, or one (or some) of the units may be further split into multiple units having smaller functions, so that the same operations can be implemented without affecting implementation of the technical effects of the embodiments of this application. The foregoing units are divided based on logical functions. In an actual application, a function of one unit may be implemented by multiple units, or functions of multiple units are implemented by one unit. In other embodiments of this application, the video processing apparatus may also include other units. In an actual application, the functions may also be cooperatively implemented by other units and may be cooperatively implemented by multiple units.

According to another embodiment of this application, a computer program that can perform some or all

operations related to the method shown in FIG. 12 may run on a general computing device such as a computer including processing elements and memory elements such as a central processing unit (CPU), a random access memory (RAM), and a read-only memory (ROM), to construct the video processing apparatus shown in FIG. 14 and implement the video processing method in the embodiments of this application. The computer program may be recorded in, for example, a computer-readable storage medium, loaded on the computing device by using the computer-readable storage medium, and run in the computing device.

In the embodiments of this application, the prediction mode list is sorted when the coding scheme of the current block is the sorted coding scheme, so that in the sorted prediction mode list, a prediction mode with a higher probability of being used for the current block corresponds to a smaller prediction mode index value. In this way, the actual prediction mode index used for the current block has a smaller value, and less information can be coded when the prediction mode index of the current block is decoded from the video stream. This improves decoding efficiency of the prediction mode index of the current block, and improves video decoding efficiency.

Referring to FIG. 15, FIG. 15 is a schematic structural diagram of a video processing apparatus according to an embodiment of this application. The video processing apparatus may be disposed in a computer device according to the embodiments of this application, and the computer device may be a coding device. The video processing apparatus shown in FIG. 15 may be a computer program running in a computer device, and the video processing apparatus may be configured to perform some or all of the operations of the method embodiment shown in FIG. 13b. Referring to FIG. 15, the video processing apparatus may include the following units:

an obtaining unit 1501, configured to obtain coding scheme indication information of a current block;

a processing unit 1502, configured to sort a prediction mode list to obtain a sorted prediction mode list if the coding scheme indication information indicates that a coding scheme of the current block is a sorted coding scheme;

the processing unit 1502 being further configured to determine prediction mode indication information of the current block according to a prediction mode index corresponding to a prediction mode of the current block in the sorted prediction mode list; the prediction mode of the current block being used to predict the current block; and

the processing unit 1502 being further configured to code the coding scheme indication information and the prediction mode indication information into the video stream.

According to an embodiment of this application, the units in the video processing apparatus shown in FIG. 15 may be separately or all combined into one or several other units, or one (or some) of the units may be further split into multiple units having smaller functions, so that the same operations can be implemented without affecting implementation of the technical effects of the embodiments of this application. The foregoing units are divided based on logical functions. In an actual application, a function of one unit may be implemented by multiple units, or functions of multiple units are implemented by one unit. In other embodiments of this application, the video processing apparatus may also include other units. In an actual application, the functions may also be cooperatively implemented by other units and may be cooperatively implemented by multiple units.

According to another embodiment of this application, a computer program that can perform some or all operations related to the method shown in FIG. 13b may run on a general computing device such as a computer including processing elements and memory elements such as a central processing unit (CPU), a random access memory (RAM), and a read-only memory (ROM), to construct the video processing apparatus shown in FIG. 15 and implement the video processing method in the embodiments of this application. The computer program may be recorded in, for example, a computer-readable storage medium, loaded on the computing device by using the computer-readable storage medium, and run in the computing device.

In the embodiments of this application, the prediction mode list is sorted when the coding scheme of the current block is the sorted coding scheme, so that in the sorted prediction mode list, a prediction mode with a higher probability of being used for the current block corresponds to a smaller prediction mode index value. In this way, the actual prediction mode index used for the current block has a smaller value, and less information can be coded when the prediction mode index of the current block is coded into the video stream. This improves coding efficiency of the prediction mode index of the current block, and improves video coding efficiency.

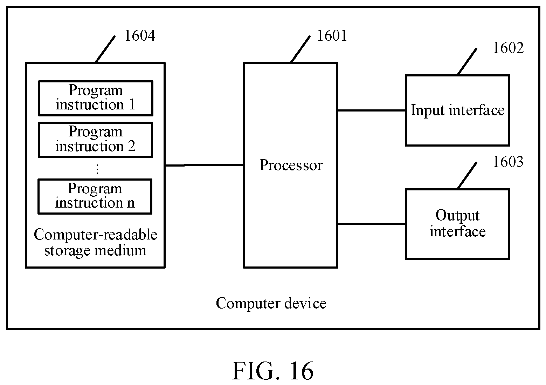

Referring to FIG. 16, FIG. 16 is a schematic structural diagram of a computer device according to an embodiment of this application. The computer device shown in FIG. 16 includes at least a processor 1601, an input interface 1602, an output interface 1603, and a computer-readable storage medium 1604. The processor 1601, the input interface 1602, the output interface 1603, and the computer-readable storage medium 1604 may be connected through a bus or in another manner.

The computer-readable storage medium 1604 may be stored in a memory of the computer device. The

computer-readable storage medium 1604 is configured to store a computer program. The computer program includes computer instructions. The processor 1601 is configured to execute the computer program stored in the computer-readable storage medium 1604. The processor 1601 (or referred to as a CPU) is a computing core and a control core of the computer device, and is configured to implement a computer program, and is specifically configured to load and execute a computer program to implement corresponding method procedures or corresponding functions.

An embodiment of this application further provides a computer-readable storage medium (memory). The computer-readable storage medium is a memory device in a computer device, and is configured to store a program and data. The computer-readable storage medium herein may include a built-in storage medium in the computer device, and certainly may include an extended storage medium supported by the computer device. The computer-readable storage medium provides storage space, and the storage space stores an operating system of the computer device. In addition, the storage space further stores a computer program to be loaded and executed by the processor. The computer-readable storage medium herein may be a high-speed RAM memory, or may be a non-volatile memory, for example, at least one magnetic disk memory. In some embodiments, the computer-readable storage medium may alternatively be at least one computer-readable storage medium located away from the processor.

In some embodiments, the computer device may be a decoding device, and the processor 1601 may load and execute a computer program stored in the computer-readable storage medium 1604, to implement corresponding operations in the foregoing video processing method shown in FIG. 12.

In some other embodiments, the computer device may be a coding device, and the processor 1601 may load and execute a computer program stored in the computer-readable storage medium 1604, to implement corresponding operations in the foregoing video processing method shown in FIG. 13b.

In the embodiments of this application, the prediction mode list is sorted, so that in the sorted prediction mode list, a prediction mode with a higher probability of being used for the current block corresponds to a smaller prediction mode index value. In this way, the actual prediction mode index used for the current block has a smaller value, and less information can be coded and decoded when the prediction mode index of the current block is coded and decoded. This improves coding and decoding efficiency of the prediction mode index of the current block, and improves video coding and decoding efficiency.

An embodiment of this application further provides a video stream processing method. A video stream is decoded based on the embodiment shown in FIG. 12, or the video stream is generated according to the embodiment shown in FIG. 13b.

An embodiment of this application further provides a computer program product or a computer program, where the computer program product or the computer program includes computer instructions stored in a computer-readable storage medium. A processor of a computer device reads the computer instruction from the computer-readable storage medium, and the processor executes the computer instruction, so that the computer device performs the foregoing video processing method.

An embodiment of this application further provides a computer-readable storage medium, having a computer program stored therein and further having a video stream formed by a computer program stored therein, and the computer program being read and executed by a processor of a computer device to cause the computer device to perform the foregoing video processing method in the embodiment shown in FIG. 12, so as to decode the video stream, or the computer program being read and executed by the processor of the computer device to cause the computer device to perform the foregoing video processing method in the embodiment shown in FIG. 13b, so as to generate the video stream and store the video stream in the computer-readable storage medium.

## Claims

**1.** A video processing method, performed by a decoding device, comprising:

parsing coding scheme indication information of a current block in a video stream;
parsing prediction mode indication information of the current block in the video stream, the prediction mode indication information comprising a prediction mode index of the current block;
sorting a prediction mode list to obtain a sorted prediction mode list if the coding scheme indication information indicates that a coding scheme of the current block is a sorted coding scheme;
determining a prediction mode of the current block in the sorted prediction mode list according to the prediction mode index of the current block; and
predicting the current block according to the prediction mode of the current block, to obtain a predicted value of the current block; the predicted value of the current block being used to reconstruct a decoded picture block of the current block.

2. The method according to claim 1, wherein the coding scheme indication information is comprised in a sequence header of the video stream; and the coding scheme indication information comprises any one of first coding scheme indication information, second coding scheme indication information, and third coding scheme indication information;

the first coding scheme indication information comprises a sequence header spatial angular weighted prediction mode flag and a sequence header sorting-based angular weighted prediction mode flag; and if the sequence header spatial angular weighted prediction mode flag is a first value, and the sequence header sorting-based angular weighted prediction mode flag is the first value, it is determined that the coding scheme indication information indicates that the coding scheme of the current block is the sorted coding scheme;
the second coding scheme indication information comprises a sequence header spatial angular weighted prediction mode flag; and if the sequence header spatial angular weighted prediction mode flag is a second value, it is determined that the coding scheme indication information indicates that the coding scheme of the current block is the sorted coding scheme; and
the third coding scheme indication information comprises a sequence header angular weighted prediction mode flag, a sequence header spatial angular weighted prediction mode flag, and a sequence header sorting-based angular weighted prediction mode flag; and if the sequence header angular weighted prediction mode flag or the sequence header spatial angular weighted prediction mode flag is a first value, and the sequence header sorting-based angular weighted prediction mode flag is the first value, it is determined that the coding scheme indication information indicates that the coding scheme of the current block is the sorted coding scheme.

3. The method according to any one of claims 1 to 2, wherein the coding scheme indication information is comprised in a picture header of the video stream; and the coding scheme indication information comprises any one of first coding scheme indication information, second coding scheme indication information, third coding scheme indication information, and fourth coding scheme indication information;

the first coding scheme indication information comprises a picture header angular weighted prediction mode flag and a picture header sorting-based angular weighted prediction mode flag; and if the picture header angular weighted prediction mode flag is a first value, and the picture header sorting-based angular weighted prediction mode flag is the first value, it is determined that the coding scheme indication information indicates that the coding scheme of the current block is the sorted coding scheme;
the second coding scheme indication information comprises a picture header angular weighted prediction mode flag; and if the picture header angular weighted prediction mode flag is a second value, it is determined that the coding scheme indication information indicates that the coding scheme of the current block is the sorted coding scheme;
the video stream further comprises a sequence header, the sequence header comprises a sequence header spatial angular weighted prediction mode flag, and the third coding scheme indication information comprises a picture header sorting-based angular weighted prediction mode flag; and if the sequence header spatial angular weighted prediction mode flag is a first value, and the picture header sorting-based angular weighted prediction mode flag is the first value, it is determined that the coding scheme indication information indicates that the coding scheme of the current block is the sorted coding scheme; and
the video stream further comprises a sequence header, the sequence header comprises a sequence header sorting-based angular weighted prediction mode flag, and the fourth coding scheme indication information comprises a picture header sorting-based angular weighted prediction mode flag; and if the sequence header sorting-based angular weighted prediction mode flag is a first value, and the picture header sorting-based angular weighted prediction mode flag is the first value, it is determined that the coding scheme indication information indicates that the coding scheme of the current block is the sorted coding scheme.

4. The method according to any one of claims 1 to 3, wherein the coding scheme indication information is comprised in a slice header of the video stream; and the coding scheme indication information comprises any one of first coding scheme indication information, second coding scheme indication information, third coding scheme indication information, and fourth coding scheme indication information;

the first coding scheme indication information comprises a slice header angular weighted prediction mode flag and a slice header sorting-based angular weighted prediction mode flag; and if the slice header angular weighted prediction mode flag is a first value, and the slice header sorting-based angular weighted prediction mode flag is the first value, it is determined that the coding scheme indication information indicates that the coding scheme of the current block is the sorted coding scheme;
the second coding scheme indication information comprises a slice header angular weighted prediction mode

flag; and if the slice header angular weighted prediction mode flag is a second value, it is determined that the coding scheme indication information indicates that the coding scheme of the current block is the sorted coding scheme;

the video stream further comprises a picture header, the picture header comprises a picture header angular weighted prediction mode flag, and the third coding scheme indication information comprises a slice header sorting-based angular weighted prediction mode flag; and if the picture header angular weighted prediction mode flag is a first value, and the slice header sorting-based angular weighted prediction mode flag is the first value, it is determined that the coding scheme indication information indicates that the coding scheme of the current block is the sorted coding scheme; and

the video stream further comprises a picture header, the picture header comprises a picture header sorting-based angular weighted prediction mode flag, and the fourth coding scheme indication information comprises a slice header sorting-based angular weighted prediction mode flag; and if the picture header sorting-based angular weighted prediction mode flag is a first value, and the slice header sorting-based angular weighted prediction mode flag is the first value, it is determined that the coding scheme indication information indicates that the coding scheme of the current block is the sorted coding scheme.

**5.** The method according to any one of claims 1 to 4, wherein the method further comprises any one of the following:

triggering execution of the parsing coding scheme indication information of the current block in the video stream if a picture type of a picture to which the current block belongs is a first picture type; and

triggering execution of the parsing coding scheme indication information of the current block in the video stream if the picture type of the picture to which the current block belongs is a picture type other than a second picture type; wherein

the first picture type is the same as or different from the second picture type.

**6.** The method according to any one of claims 1 to 5, wherein the parsing prediction mode indication information of the current block in the video stream comprises:

parsing the prediction mode index of the current block in the video stream when there is one prediction mode list; and

parsing a prediction mode list index of the current block in the video stream and parsing the prediction mode index of the current block in the video stream when there is multiple prediction mode lists, where the prediction mode indication information of the current block further comprises the prediction mode list index of the current block, and a prediction mode list corresponding to the prediction mode list index of the current block is an available prediction mode list.

**7.** The method according to any one of claims 1 to 6, wherein the prediction mode list comprises a weight prediction mode list, multiple weight prediction mode lists belong to different weight prediction mode types, the prediction mode index comprises a weight prediction mode index, and the parsing the prediction mode index of the current block in the video stream comprises:
parsing a weight prediction mode index of the current block in the video stream for each weight prediction mode type.

**8.** The method according to any one of claims 1 to 7, wherein the prediction mode list comprises an intra prediction mode list, multiple intra prediction mode lists belong to two types: a most probable mode and a non-most probable mode, and the prediction mode index comprises an intra prediction mode index; and
the parsing a prediction mode list index of the current block in the video stream and parsing the prediction mode index of the current block in the video stream comprises:
parsing an intra prediction mode list index of the current block in the video stream and parsing an intra prediction mode index of the current block in the video stream if an intra prediction mode of the current block belongs to the non-most probable mode type.

**9.** The method according to any one of claims 1 to 8, wherein a decoding scheme used for the prediction mode indication information comprises any one of the following:

variable-length decoding is performed on all or a part of the information; and

fixed-length decoding is performed on all or a part of the information; wherein

the prediction mode indication information comprises a prefix and a suffix, and different decoding schemes are used for the prefix and the suffix.

**10.** The method according to any one of claims 1 to 9, wherein the sorting a prediction mode list to obtain a sorted prediction mode list comprises:

determining an available prediction mode list from the prediction mode list; and
sorting the available prediction mode list to obtain the sorted prediction mode list.

**11.** The method according to any one of claims 1 to 10, wherein the determining an available prediction mode list from the prediction mode list comprises any one of the following:

determining the available prediction mode list from the prediction mode list according to available indication information obtained by parsing the video stream;
determining the available prediction mode list from the prediction mode list according to an available determining rule; and
determining the available prediction mode list from the prediction mode list according to a prediction mode index satisfying an available condition in the prediction mode list.

**12.** The method according to any one of claims 1 to 11, wherein prediction mode indexes in the prediction mode list are classified into different groups;
wherein that the prediction mode index in the prediction mode list satisfies the available condition means: a sequence number of a group to which the prediction mode index in the prediction mode list belongs is an available sequence number.

**13.** The method according to any one of claims 1 to 12, wherein the prediction mode list comprises an intra prediction mode list; and the determining the available prediction mode list from the prediction mode list further comprises:
determining an available intra prediction mode list in the intra prediction mode list according to an adjacent reconstructed block of the current block or a weight prediction mode of the current block.

**14.** The method according to any one of claims 1 to 13, wherein the prediction mode list comprises a weight prediction mode list, there are multiple weight prediction mode lists, the multiple weight prediction mode lists belong to different weight prediction mode types, and the determining the available prediction mode list from the prediction mode list comprises:
separately determining available weight prediction mode lists in weight prediction mode lists for different weight prediction mode types.

**15.** The method according to any one of claims 1 to 14, wherein the sorting the available prediction mode list to obtain a sorted prediction mode list comprises:

determining, from the available prediction mode list, a first prediction mode list that needs to be sorted and a second prediction mode list that does not need to be sorted; and
sorting the first prediction mode list to obtain a sorted first prediction mode list.

**16.** The method according to any one of claims 1 to 15, wherein the prediction mode index of the current block comprises a first prediction mode index and a second prediction mode index, the first prediction mode index corresponds to the first prediction mode list, and the second prediction mode index corresponds to the second prediction mode list;

the determining a prediction mode of the current block in the sorted prediction mode list according to the prediction mode index of the current block comprises: determining a first prediction mode of the current block in the sorted first prediction mode list according to the first prediction mode index; and determining a second prediction mode of the current block in the second prediction mode list according to the second prediction mode index; and
the predicting the current block according to the prediction mode of the current block, to obtain a predicted value of the current block comprises: predicting the current block according to the first prediction mode and the second prediction mode, to obtain the predicted value of the current block.

**17.** The method according to any one of claims 1 to 16, wherein the method further comprises:

performing an availability check on the sorted coding scheme of the current block; and
triggering, if the sorted coding scheme of the current block is available, execution of the determining, from the available prediction mode list, a first prediction mode list that needs to be sorted and a second prediction mode list

that does not need to be sorted.

**18.** The method according to any one of claims 1 to 17, wherein the performing an availability check on the sorted coding scheme of the current block comprises at least one of the following:

determining that the sorted coding scheme of the current block is available if a sample used for determining a current block template corresponding to the current block has been reestablished;
determining that the sorted coding scheme of the current block is available if a size of the current block satisfies a size condition; and
determining that the sorted coding scheme of the current block is available if a picture component of the current block satisfies a component condition.

**19.** The method according to any one of claims 1 to 18, wherein the first prediction mode list that needs to be sorted comprises a weight prediction mode list; and the sorting the first prediction mode list to obtain a sorted first prediction mode list comprises:

obtaining the current block template corresponding to the current block;
determining predicted values of the current block template in different weight prediction modes in the weight prediction mode list;
determining cost information of the current block template in the different weight prediction modes according to differences between the predicted values of the current block template in the different weight prediction modes and a reconstructed value of the current block template; and
sorting the first prediction mode list based on the cost information of the current block template in the different weight prediction modes.

**20.** The method according to any one of claims 1 to 19, wherein the obtaining the current block template corresponding to the current block comprises:

determining the current block template in a reconstructed area around the current block; wherein
the current block template comprises at least one of the following: one or more rows of samples located above the current block in the reconstructed area; one or more columns of samples located on the left of the current block in the reconstructed area; the current block template sampled at a fixed interval in the reconstructed area; and samples located on the left of and above the current block in the reconstructed area.

**21.** The method according to any one of claims 1 to 20, wherein a process of determining a predicted value of the current block template in any weight prediction mode comprises:

determining a weight template of the current block template in the weight prediction mode;
determining an available intra prediction mode list according to the weight prediction mode;
determining an intra prediction mode of the current block template in the available intra prediction mode list;
determining an intra-frame predicted value of the current block template according to the intra prediction mode of the current block template; and
performing weighted prediction on the intra-frame predicted value of the current block template according to the weight template, to obtain a predicted value of the current block template in the weight prediction mode.

**22.** The method according to any one of claims 1 to 21, wherein the determining a weight template of the current block template in the weight prediction mode comprises any one of the following:

deriving the weight template of the current block template according to the weight prediction mode; wherein weight templates of the current block template in different weight prediction modes are cached, and the weight template of the current block template in the weight prediction mode is directly initialized from the cache.

**23.** The method according to any one of claims 1 to 22, wherein the deriving the weight template of the current block template according to the weight prediction mode comprises:

deriving a weight matrix of the current block template according to the weight prediction mode; and determining the weight template of the current block template according to the weight matrix and a weight threshold; or
determining a division central position of the weight matrix according to a weight prediction angle mode and a

reference weight configuration mode, determining a projection position of each sample in the weight matrix in the weight prediction angle mode; and adjusting the weight matrix according to a relationship between the division central position and the projection position, to obtain the weight template of the current block template in the weight prediction mode, wherein the weight prediction mode comprises the weight prediction angle mode and the reference weight configuration mode.

**24.** The method according to any one of claims 1 to 23, wherein the determining an intra-frame predicted value of the current block template according to the intra prediction mode of the current block template comprises any one of the following:

determining a location of a prediction template of the current block template, wherein the location of the prediction template corresponds to or does not correspond to the location of the current block template; determining, according to the location of the prediction template, a reference sample used for performing intra prediction on the current block template; and deriving the intra-frame predicted value of the current block template according to the intra prediction mode of the current block template and the reference sample; and
directly deriving the intra-frame predicted value of the current block template in the weight prediction mode from the cache, wherein intra-frame predicted values of the current block template in different weight prediction modes have been cached.

**25.** The method according to any one of claims 1 to 24, wherein the deriving the intra-frame predicted value of the current block template according to the intra prediction mode of the current block template and the reference sample comprises any one of the following:

deriving the predicted value of the current block template according to the reference sample by using a specified intra-frame interpolation filter; and
deriving the predicted value of the current block template according to the reference sample by using an intra-frame interpolation filter that is the same as that of the current block.

**26.** The method according to any one of claims 1 to 25, wherein when multiple intra-frame interpolation filters are used for the current block, the deriving the predicted value of the current block template according to the reference sample by using an intra-frame interpolation filter that is the same as that of the current block comprises:

selecting an intra-frame interpolation filter from the multiple intra-frame interpolation filters used for the current block; and
deriving the predicted value of the current block template according to the reference sample by using the selected intra-frame interpolation filter.

**27.** The method according to any one of claims 1 to 26, wherein the first prediction mode list that needs to be sorted comprises a weight prediction mode list, a first intra prediction mode list, and a second intra prediction mode list, prediction modes in the first prediction mode lists that need to be sorted are combined to obtain multiple combined prediction modes, and the sorting the first prediction mode list to obtain a sorted first prediction mode list comprises:

obtaining the current block template corresponding to the current block;
determining predicted values of the current block template in different combined prediction modes;
determining cost information of the current block template in the different combined prediction modes according to differences between the predicted values of the current block template in the different combined prediction modes and a reconstructed value of the current block template; and
sorting the first prediction mode list based on the cost information of the current block template in the different combined prediction modes.

**28.** The method according to any one of claims 1 to 27, wherein R weight prediction modes in the weight prediction mode list, P first intra prediction modes in the first intra prediction mode list, and Q second intra prediction modes in the second intra prediction mode list are combined to obtain R * P * Q combined prediction modes, cost information in the R * P * Q combined prediction modes forms a cost list, and the sorting the first prediction mode list based on the cost information of the current block template in the different combined prediction modes comprises:

sorting the weight prediction mode list according to the cost list, to obtain a sorted weight prediction mode list;
determining, from the cost list, a first cost list corresponding to the first intra prediction mode list, and sorting the

first intra prediction mode list according to the first cost list, to obtain a sorted first intra prediction mode list; and determining, from the cost list, a second cost list corresponding to the second intra prediction mode list, and sorting the second intra prediction mode list according to the second cost list, to obtain a sorted second intra prediction mode list.

**29.** The method according to any one of claims 1 to 28, wherein the determining, from the cost list, a first cost list corresponding to the first intra prediction mode list comprises:
determining, according to cost information of a first combined prediction mode in the cost list after the weight prediction mode of the current block is determined in the sorted weight prediction mode list, the first cost list corresponding to the first intra prediction mode list; wherein a weight prediction mode included in the first combined prediction mode is the weight prediction mode of the current block.

**30.** The method according to any one of claims 1 to 29, wherein the determining, from the cost list, a second cost list corresponding to the second intra prediction mode list comprises any one of the following:

determining, according to cost information of the first combined prediction mode in the cost list after the weight prediction mode of the current block is determined in the sorted weight prediction mode list, the second cost list corresponding to the second intra prediction mode list; wherein the weight prediction mode included in the first combined prediction mode is the weight prediction mode of the current block; and
determining, according to cost information of a second combined prediction mode in the cost list after the weight prediction mode of the current block is determined in the sorted weight prediction mode list and the first intra prediction mode of the current block is determined in the sorted first intra prediction mode list, the second cost list corresponding to the second intra prediction mode list; wherein a weight prediction mode included in the second combined prediction mode is the weight prediction mode of the current block, and the first intra prediction mode included in the second combined prediction mode is the first intra prediction mode of the current block.

**31.** The method according to any one of claims 1 to 30, wherein the prediction mode used for the current block comprises the weight prediction mode used for the current block and multiple intra prediction modes used for the current block; and the predicting the current block according to the prediction mode of the current block, to obtain a predicted value of the current block comprises:

deriving a weight matrix of the current block according to the weight prediction mode used for the current block;
deriving, according to each intra prediction mode used for the current block, an intra-frame predicted value of the current block in the intra prediction mode; and
performing weighted prediction on the intra-frame predicted value of the current block in each intra prediction mode according to the weight matrix of the current block, to obtain the predicted value of the current block.

**32.** A video processing method, performed by a coding device, comprising:

obtaining coding scheme indication information of a current block;
sorting a prediction mode list to obtain a sorted prediction mode list if the coding scheme indication information indicates that a coding scheme of the current block is a sorted coding scheme;
determining prediction mode indication information of the current block according to a prediction mode index corresponding to a prediction mode of the current block in the sorted prediction mode list; the prediction mode of the current block being used to predict the current block; and
coding the coding scheme indication information and the prediction mode indication information into the video stream.

**33.** A video processing apparatus, comprising:

a parsing unit, configured to parse coding scheme indication information of a current block in a video stream;
the parsing unit being further configured to parse prediction mode indication information of the current block in the video stream, the prediction mode indication information comprising a prediction mode index of the current block; and
a processing unit, configured to sort a prediction mode list to obtain a sorted prediction mode list if the coding scheme indication information indicates that a coding scheme of the current block is a sorted coding scheme;
the processing unit being further configured to determine a prediction mode of the current block in the sorted prediction mode list according to the prediction mode index of the current block; and

the processing unit being further configured to predict the current block according to the prediction mode of the current block, to obtain a predicted value of the current block; the predicted value of the current block being used to reconstruct a decoded picture block of the current block.

**34.** A video processing apparatus, comprising:

an obtaining unit, configured to obtain coding scheme indication information of a current block; and
a processing unit, configured to sort a prediction mode list to obtain a sorted prediction mode list if the coding scheme indication information indicates that a coding scheme of the current block is a sorted coding scheme;
the processing unit being further configured to determine prediction mode indication information of the current block according to a prediction mode index corresponding to a prediction mode of the current block in the sorted prediction mode list; the prediction mode of the current block being used to predict the current block; and
the processing unit being further configured to code the coding scheme indication information and the prediction mode indication information into the video stream.

**35.** A computer device, comprising:

a processor, configured to implement a computer program; and
a computer-readable storage medium, having a computer program stored therein and further having a video stream formed by a computer program stored therein, and the computer program being configured to be loaded by the processor to perform the video processing method according to any one of claims 1 to 31, so as to decode the video stream, or the computer program being configured to be loaded by the processor to perform the video processing method according to claim 32, so as to generate the video stream and store the video stream in the computer-readable storage medium.

**36.** A computer-readable storage medium, having a computer program stored therein and further having a video stream formed by a computer program stored therein, and the computer program being configured to be loaded by the processor to perform the video processing method according to any one of claims 1 to 31, so as to decode the video stream, or the computer program being configured to be loaded by the processor to perform the video processing method according to claim 32, so as to generate the video stream and store the video stream in the computer-readable storage medium.

**37.** A computer program product, comprising a computer program, the computer program being executed by a processor to implement the video processing method according to any one of claims 1 to 31 or the video processing method according to claim 32.

**38.** A video stream processing method, a video stream being decoded according to the video processing method according to any one of claims 1 to 31, or the video stream being generated according to the video processing method according to claim 32.

Input a video image
Perform sequential coding and block partition
Coding control
Transform & quantization
Transform coefficient level and quantization parameter
Entropy coding
Video stream
Inverse quantization & inverse transform
Coding scheme, intra prediction mode, and motion data
Coding scheme determining
Intra-frame mode determining
Buffer for current image
Intra prediction
Loop filtering
Motion compensation prediction
Motion estimation
Decode an image buffer
Video reconstruction
for monitoring

FIG. 1

FIG. 2

Yes
Quad-tree partition
Quad-tree partition?
Yes
Do not partition
No
Do not partition?
Horizontal
Extended quad-tree partition
Horizontal or vertical?
Extended quad-tree partition
No
Extended quad-tree partition or binary-tree partition?
Vertical
Horizontal
Binary-tree partition
Horizontal or vertical?
Binary-tree partition
Vertical

FIG. 3

Partition 4
Partition 3
Partition 2
Partition 1
65
31
64
32
29
30
28
27
26
25
24
23
22
21
20
18
53
19
52
16
17
51
14
50
15
13
49
48
47
46
45
44
43
42
41
40
39
38
37
36
35
34
3
4
5
6
7
8
9
10
11
12
DC (special mode 0): 0
Plane (special mode 1): 1
Bilinear (special mode 2): 2

FIG. 4

A
B
C
D
P

FIG. 5

P
B
Pr
(x,y)
B1
(xr ,yr)
Br

FIG. 6

First inter-frame predicted value
Second inter-frame predicted value
Weight matrix
Result

FIG. 7

FIG. 8

Reference weight valid length

FIG. 9

5
6
7
4
3
2
1
0
Angle partition 3
Angle partition 2
Angle partition 1
Angle partition 0

FIG. 10

1101
1102
Coding device
Decoding device

FIG. 11

Parse coding scheme indication information of a current block in a video stream
S1201
Parse prediction mode indication information of the current block in the video stream, the prediction mode indication information including a prediction mode index of the current block
S1202
Sort a prediction mode list to obtain a sorted prediction mode list if the coding scheme indication information indicates that a coding scheme of the current block is a sorted coding scheme
S1203
Determine a prediction mode of the current block in the sorted prediction mode list according to the prediction mode index of the current block
S1204
Predict the current block according to the prediction mode of the current block, to obtain a predicted value of the current block; the predicted value of the current block being used to reconstruct a decoded image block of the current block
S1205


FIG. 12

Current block template
Current block
Current block template
Current block
Current block template
Current block


FIG. 13a

Obtain coding scheme indication information of a current block
S1301
Sort a prediction mode list to obtain a sorted prediction mode list if the coding scheme indication information indicates that a coding scheme of the current block is a sorted coding scheme
S1302
Determine prediction mode indication information of the current block according to a prediction mode index corresponding to a prediction mode of the current block in the sorted prediction mode list; the prediction mode of the current block being used to predict the current block
S1303
Code the coding scheme indication information and the prediction mode indication information into the video stream
S1304

FIG. 13b

1401
1402
Parsing unit
Processing unit
Video processing apparatus

FIG. 14

1501
1502
Obtaining unit
Processing unit
Video processing apparatus

FIG. 15

1604
1601
1602
Program instruction 1
Program instruction 2
Program instruction n
Computer-readable storage medium
Processor
Input interface
1603
Output interface
Computer device

FIG. 16

**INTERNATIONAL SEARCH REPORT**

International application No.
**PCT/CN2025/081124**

**A. CLASSIFICATION OF SUBJECT MATTER**

H04N19/11(2014.01)i; H04N19/176(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, CJFD, CNKI, DWPI, ENTXTC, WPABS, VCN, IEEE: 角度加权, 空域, 排序, 重排, 索引, 预测模式, 自适应, Angular 1w Weighted, spatial, sawp, dawp, order+, reorder+, index, prediction 1w mode, adaptat+

**C. DOCUMENTS CONSIDERED TO BE RELEVANT**

| Category* | Citation of document, with indication, where appropriate, of the relevant passages | Relevant to claim No. |
|---|---|---|
| X | CN 116980594 A (GUANGDONG OPPO MOBILE TELECOMMUNICATIONS CORP., LTD.) 31 October 2023 (2023-10-31)<br>description, paragraphs 62-892 | 1-38 |
| X | CN 115086654 A (TENCENT TECHNOLOGY (SHENZHEN) CO., LTD.) 20 September 2022 (2022-09-20)<br>description, paragraphs 59-197 | 1-38 |
| A | CN 112055203 A (ZHEJIANG DAHUA TECHNOLOGY CO., LTD.) 08 December 2020 (2020-12-08)<br>entire document | 1-38 |
| A | CN 113170117 A (INDUSTRY ACADEMY COOPERATION FOUNDATION OF SEJONG UNIVERSITY) 23 July 2021 (2021-07-23)<br>entire document | 1-38 |
| A | CN 117395403 A (INTELLECTUAL DISCOVERY CO., LTD.) 12 January 2024 (2024-01-12)<br>entire document | 1-38 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2025** | **26 May 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

International application No.
PCT/CN2025/081124

C. DOCUMENTS CONSIDERED TO BE RELEVANT

| Category* | Citation of document, with indication, where appropriate, of the relevant passages | Relevant to claim No. |
|---|---|---|
| A | WO 2023075124 A1 (HYUNDAI MOTOR CO., LTD.; KIA CORP.; DIGITAL INSIGHTS INC.) 04 May 2023 (2023-05-04) entire document | 1-38 |

Form PCT/ISA/210 (second sheet) (July 2022)

**INTERNATIONAL SEARCH REPORT**
**Information on patent family members**

International application No.
**PCT/CN2025/081124**

| Patent document cited in search report | Publication date (day/month/year) | Patent family member(s) | Publication date (day/month/year) |
|---|---|---|---|
| CN 116980594 A | 31 October 2023 | MX 2023006589 A | 16 June 2023 |
| | | WO 2022116317 A1 | 09 June 2022 |
| | | US 2023300326 A1 | 21 September 2023 |
| | | KR 20230111254 A | 25 July 2023 |
| | | EP 4258658 A1 | 11 October 2023 |
| | | EP 4258658 A4 | 06 November 2024 |
| | | JP 2023552997 A | 20 December 2023 |
| | | US 2023308645 A1 | 28 September 2023 |
| | | WO 2022117089 A1 | 09 June 2022 |
| CN 115086654 A | 20 September 2022 | None | |
| CN 112055203 A | 08 December 2020 | None | |
| CN 113170117 A | 23 July 2021 | KR 20230129360 A | 08 September 2023 |
| | | US 2021385435 A1 | 09 December 2021 |
| | | US 11659163 B2 | 23 May 2023 |
| | | KR 20200074877 A | 25 June 2020 |
| | | KR 102358391 B1 | 04 February 2022 |
| | | WO 2020130477 A1 | 25 June 2020 |
| | | US 2023231993 A1 | 20 July 2023 |
| | | KR 20220019731 A | 17 February 2022 |
| | | KR 102575576 B1 | 08 September 2023 |
| CN 117395403 A | 12 January 2024 | US 2021392372 A1 | 16 December 2021 |
| | | US 11558640 B2 | 17 January 2023 |
| | | US 2024196010 A1 | 13 June 2024 |
| | | KR 20220106096 A | 28 July 2022 |
| | | KR 102595069 B1 | 27 October 2023 |
| | | US 2020275124 A1 | 27 August 2020 |
| | | US 11102509 B2 | 24 August 2021 |
| | | WO 2018199675 A1 | 01 November 2018 |
| | | KR 20180121402 A | 07 November 2018 |
| | | KR 102424239 B1 | 25 July 2022 |
| | | US 2023179796 A1 | 08 June 2023 |
| | | US 11943475 B2 | 26 March 2024 |
| WO 2023075124 A1 | 04 May 2023 | JP 2024536454 A | 04 October 2024 |
| | | US 2024275958 A1 | 15 August 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202410320693